(19) Europäisches Patentamt
European Patent Office
Office européen des brevets

(11) EP 0 755 985 B1

(12) **EUROPÄISCHE PATENTSCHRIFT**

(45) Veröffentlichungstag und Bekanntmachung des Hinweises auf die Patenterteilung:
**15.05.2002 Patentblatt 2002/20**

(51) Int Cl.[7]: **C09B 67/22**, D06P 1/38, C09B 62/04, C09B 62/44

(21) Anmeldenummer: **96810443.0**

(22) Anmeldetag: **10.07.1996**

(54) **Farbstoffmischungen, Verfahren zu ihrer Herstellung und ihre Verwendung**

Dye mixtures, process to manufacture them and their use

Mélanges de colorants, leur procédé de fabrication et leur utilisation

(84) Benannte Vertragsstaaten:
**BE CH DE ES FR GB IT LI PT**

(30) Priorität: **19.07.1995 CH 213195**

(43) Veröffentlichungstag der Anmeldung:
**29.01.1997 Patentblatt 1997/05**

(60) Teilanmeldung:
**00120530.1 / 1 061 105**

(73) Patentinhaber: **Ciba Specialty Chemicals Holding Inc.
4057 Basel (CH)**

(72) Erfinder:
- **Reichert, Hans, Dr.
79618 Rheinfelden (DE)**
- **Müller, Bernhard, Dr.
79588 Efringen-Kirchen (DE)**
- **Tzikas, Athanassios, Dr.
4133 Pratteln (CH)**

(56) Entgegenhaltungen:
**EP-A- 0 013 996**
**EP-A- 0 458 743**
**EP-A- 0 478 503**
**EP-A- 0 625 551**
**DE-C- 4 139 954**
**DE-C- 4 140 117**
**DE-C- 4 142 766**
**US-A- 4 925 928**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 755 985 B1

Printed by Jouve, 75001 PARIS (FR)

## Beschreibung

Die vorliegende Erfindung betrifft Mischungen von faserreaktiven Farbstoffen und ihre Verwendung zum Färben oder Bedrucken von cellulosehaltigen Fasermaterialien.

Gegenstand der vorliegenden Erfindung sind somit Farbstoffmischungen enthaltend mindestens eine Verbindung der Formel

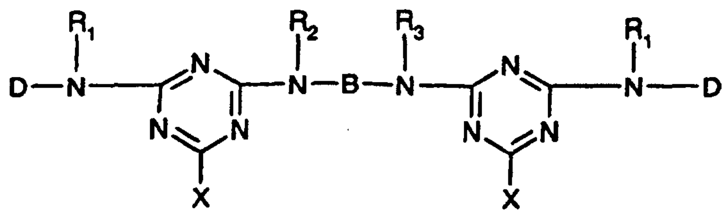

(1)

worin D der Rest eines Monoazo-, Polyazo-, Metallkomplexazo-, Anthrachinon-, Phthalocyanin-, Formazan- oder Dioxazin-Chromophors ist,
$R_1$, $R_2$ und $R_3$ unabhängig voneinander je Wasserstoff oder unsubstituiertes oder durch Hydroxy, Sulfo, Sulfato, Carboxy, Cyano, Halogen, $C_1$-$C_4$-Alkoxycarbonyl oder Carbamoyl substituiertes $C_1$-$C_6$-Alkyl bedeuten,
X für Fluor, Chlor, Brom, 3-Carboxypyridin-1-yl oder 3-Carbamoylpyridin-1-yl steht,
und B ein aliphatisches, cycloaliphatisches, aromatisches oder araliphatisches Brückenglied bedeutet,
und mindestens eine Verbindung der Formel

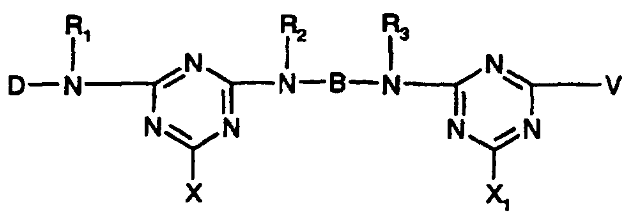

(2)

worin B, D, $R_1$, $R_2$, $R_3$ und X die oben angegebene Bedeutung haben, und
die Reste D in den Verbindungen der Formeln (1) und (2) identisch sind,
$X_1$ unabhängig die Bedeutung von X hat,
V für einen nicht-reaktiven Rest aus der Gruppe Hydroxy, $C_1$-$C_4$-Alkoxy, Phenoxy, $C_1$-$C_4$-Alkylthio, Morpholino, Amino, N-$C_1$-$C_4$-Alkylamino oder N,N-Di-$C_1$-$C_4$-Alkylamino, wobei das Alkyl jeweils durch Sulfo, Sulfato, Hydroxy, Carboxy oder Phenyl substituiert sein Rann, Cyclohexylamino, Phenylamino oder Naphthylamino, wobei das Phenyl oder Naphthyl jeweils durch $C_1$-$C_4$-Alkyl, $C_1$-$C_4$-Alkoxy, Amino, $C_2$-$C_4$-Alkanoylamino, Carboxy, Sulfo oder Halogen substituiert sein kann, oder N-$C_1$-$C_4$-Alkyt-N-phenylamino, wobei das Alkyl und Phenyl gegebenenfalls wie zuvor geschildert substituiert sein kann, oder
für einen Reaktivrest der Formel

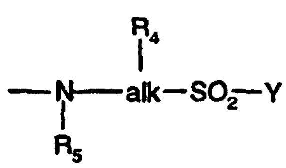

(3a)

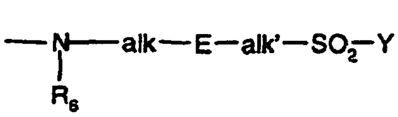

(3b)

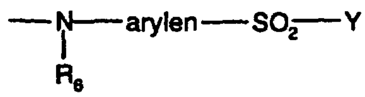

(3c)

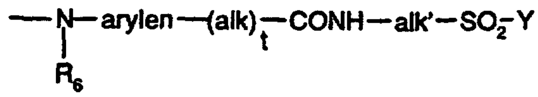

(3d)

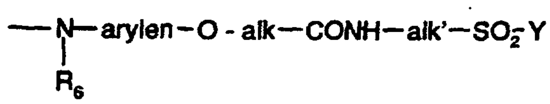

(3e)

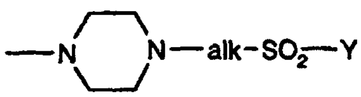

(3f)

oder

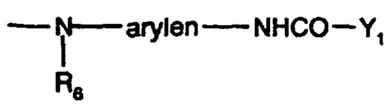

(3g)

steht,
$R_4$ Wasserstoff, Hydroxy, Sulfo, Sulfato, Carboxy, Cyano, Halogen, $C_1$-$C_4$-Alkoxycarbonyl, Carbamoyl oder eine Gruppe $-SO_2$-Y ist,
$R_5$ Wasserstoff, gegebenenfalls durch Hydroxy, Sulfo, Sulfato, Carboxy oder Cyano substituiertes $C_1$-$C_4$-Alkyl oder ein Rest

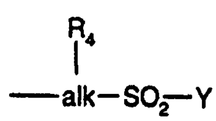

,

worin $R_4$ die zuvor angegebene Bedeutung hat, ist,
$R_6$ für Wasserstoff oder $C_1$-$C_4$-Alkyl steht,
alk und alk' unabhängig voneinander je $C_1$-$C_6$-Alkylen sind,
arylen einen unsubstituierten oder durch Sulfo, Carboxy, Hydroxy, $C_1$-$C_4$-Alkyl, $C_1$-$C_4$-Alkoxy oder Halogen substituierten Phenylen- oder Naphthylenrest bedeutet,
Y Vinyl oder einen Rest $-CH_2$-$CH_2$-U bedeutet und U eine Abgangsgruppe ist,
$Y_1$ für eine Gruppe $-CHZ-CH_2Z$ oder $-CZ=CH_2$ steht , worin Z Chlor oder Brom bedeutet,
E ein Rest -O- oder $-NR_6$-, worin $R_6$ die oben angegebene Bedeutung hat, ist, und
t für die Zahl 0 oder 1 steht, und worin die Verbindungen der Formeln (1) und (2) jeweils mindestens eine Sulfogruppe aufweisen.

In der EP-A-O 478 503 werden binäre Reaktivfarbstoffmischungen offenbart, die einen Farbstoff der Formel (1) enthalten.

Die DE-A-41 42 766 offenbart Reaktivfarbstoffmischungen, die entweder einen Farbstoff der Formel (1) oder einen Farbstoff der Formel (2) enthalten.

Bei $R_1$, $R_2$ oder $R_3$ als gegebenenfalls substituiertes $C_1$-$C_6$-Alkyl, handelt es sich um unsubstituiertes oder durch Hydroxy, Sulfo, Sulfato, Carboxy, Cyano, Halogen, $C_1$-$C_4$-Alkoxycarbonyl oder Carbamoyl substituiertes Methyl, Ethyl, n- oder iso-Propyl, n-, sec.-, tert.- oder iso-Butyl oder um geradkettiges oder verzweigtes Pentyl oder Hexyl.

$R_1$, $R_2$ und $R_3$ stehen unabhängig voneinander je bevorzugt für Wasserstoff oder gegebenenfalls durch Hydroxy substituiertes $C_1$-$C_4$-Alkyl, besonders bevorzugt für Wasserstoff, Methyl, Ethyl oder Hydroxyethyl und insbesondere bevorzugt je für Wasserstoff.

Bedeutet B ein aliphatisches Brückenglied,kann es sich z.B. um geradkettiges oder verzweigtes und gegebenenfalls durch Hydroxy, Sulfo oder Sulfato substituiertes oder durch -O-, -NH- oder-$N(CH_3)$- unterbrochenes $C_2$-$C_{12}$-Alkylen handeln. Beispiele sind 1,2-Ethylen, 1 -Methyl-1,2-Ethylen, 1,1-Dimethyl-1,2-ethylen, 1,2-Dimethyl-1,2-ethylen, 1,1,2,2-Tetramethyl-1,2-ethylen, 1,3-Propylen, 2,2-Dimethyl-1,3-propylen, 2-Hydroxy-1,3-propylen, 1,4-Butylen, 1,6-Hexylen, 2-Methyl-1,5-pentylen, $-CH_2CH_2-O-CH_2CH_2-O-CH_2CH_2-$, $-(CH_2)_3-O-(CH_2)_3-O-(CH_2)_3-$ oder-$CH_2CH_2-NH-CH_2CH_2-$.

B steht bevorzugt für geradkettiges oder verzweigtes $C_2$-$C_6$-Alkylen, welches gegebenenfalls durch Hydroxy substituiert oder durch -O- unterbrochen ist, und besonders bevorzugt für geradkettiges oder verzweigtes $C_2$-$C_6$-Alkylen. Beispiele für insbesondere bevorzugte Alkylenreste B sind 1,2-Ethylen, 1-Methyl-1,2-ethylen, 1,3-Propylen, 2-Hydroxy-1,3-Propylen, 2-Methyl-1,5-pentylen und 1,6-Hexylen.

Steht B für ein cycloaliphatisches Brückenglied, handelt es sich z.B. um 1,2-, 1,3- oder 1,4-Cyclohexylen, den Rest der Formel

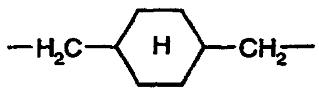

,

oder B bildet zusammen mit $-NR_2$- und $-NR_3$- einen Piperazinring.

Beispiele für aromatische Brückenglieder B sind unsubstituiertes oder z.B. durch Sulfo, Methyl, Methoxy oder Chlor substituiertes 1,2-, 1,3- oder 1,4-Phenylen, gegebenenfalls durch Sulfo substituiertes Naphthylen oder ein Rest der Formel

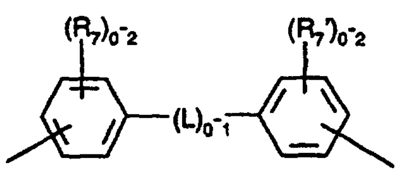

**(4)**

worin L die Bedeutung -CO-, -NHCO-, -NHCONH-, $-(CH_2)_{1-4}-$, -NH-, -CH=CH-, -O-, $-SO_2$- oder -N=N- hat und $(R_7)_{0-2}$ und $(R_7')_{0-2}$ unabhängig voneinander jeweils für 0 bis 2 gleiche oder verschiedene Reste aus der Gruppe Sulfo, Methyl, Methoxy und Chlor stehen.

Bevorzugt als aromatisches Brückenglied B sind unsubstituiertes oder durch Sulfo, Methyl oder Methoxy substituiertes 1,3- oder 1,4-Phenylen, durch 1 oder 2 Sulfogruppen substituiertes Naphthylen oder ein Rest der Formel

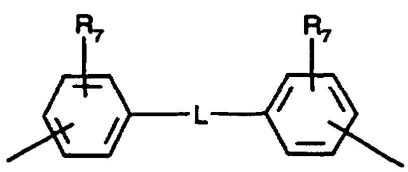

**(4a)**

oder

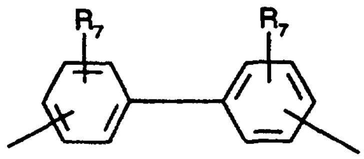

(4b),

worin L -NHCONH-, -O-, -NH-, -CH=CH- oder $-CH_2-$ und $R_7$ Wasserstoff oder Sulfo bedeuten.

Beispiele für besonders bevorzugte aromatische Brückenglieder B sind 1,3-Phenylen, 1,4-Phenylen, 4-Methylphenylen-1,3, 4-Sulfophenylen-1,3,3-Sulfophenylen-1,4,3,6-Disulfophenylen-1,4,4,6-Disulfophenylen-1,3,3,7-Disulfonaphthylen-1,5,4,8-Disulfonaphthylen-2,6, 2,2'-Disulfodiphenylen-4,4', 4,4'-Phenylenhamstoff-2,2'-disulfonsäure und 2,2'-Disulfostilbenylen-4,4'.

Bedeutet B ein araliphatisches Brückenglied, handelt es sich z.B. um gegebenenfalls durch Sulfo substituiertes Benzylen, Methoxyphenylen oder Dimethylen-1,2-, -1,3- oder -1,4-phenylen.

X und $X_1$ bedeuten unabhängig voneinander je bevorzugt Fluor oder Chlor. Die Variablen X und $X_1$ können verschieden oder vorzugsweise gleich sein.

Bei V als einen nicht-reaktiven gegebenenfalls substituierten Aminorest, handelt es sich um Amino; N-$C_1$-$C_4$-Alkylamino oder N,N-Di-$C_1$-$C_4$-Alkylamino, wobei das Alkyl jeweils durch Sulfo, Sulfato, Hydroxy, Carboxy oder Phenyl substituiert sein kann; Cyclohexylamino; Phenylamino oder Naphthylamino, wobei das Phenyl oder Naphthyl jeweils durch $C_1$-$C_4$-Alkyl, $C_1$-$C_4$-Alkoxy, Amino, $C_2$-$C_4$-Alkanoylamino, Carboxy, Sulfo oder Halogen substituiert sein kann; oder um N-$C_1$-$C_4$-Alkyl-N-phenylamino, wobei das Alkyl und Phenyl gegebenenfalls wie zuvor geschildert substituiert sein kann.

Beispiele für geeignete nicht-reaktive Aminoreste V sind Amino, Methylamino, Ethylamino, β-Hydroxyethylamino, N,N-Di-β-Hydroxyethylamino, β-Sulfoethylamino, Cyclohexylamino, o-, m- oder p-Methylphenylamino, o-, m- oder p-Methoxyphenylamino, o-, m- oder p-Sulfophenylamino, 2,4-, 2,5-,3,6- oder 4,6-Disulfophenylamino, 4-Methyl- oder 4-Methoxy-3-sulfophenylamino, 4-Methyl- oder 4-Methoxy-6-sulfophenylamino, 4-Methyl- oder 4-Methoxy-3,6-disulfophenylamino, o-Carboxyphenylamino, 1- oder2-Naphthylamino, 1-Sulfo-2-naphthylamino, 1,5-, 1,6-, 4,8- oder 6,8-Disulfo-2-naphthylamino, 3,6,8-Trisulfo-2-naphthylamino, N-Ethyl-N-phenylamino, N-Methyl-N-phenylamino, N-β-sulfoethyl-N-phenylamino oder N-β-Hydroxyethyl-N-phenylamino.

V steht als nicht-reaktiver Aminorest bevorzugt für Amino, unsubstituiertes oder durch Hydroxy, Sulfo oder Sulfato substituiertes N-Mono- oder N,N-Di-$C_1$-$C_2$-Alkylamino, Cyclohexylamino, unsubstituiertes oder durch Methyl, Methoxy, Carboxy oder Sulfo substituiertes Phenylamino, Mono-, Di- oder Trisulfonaphthylamino oder für unsubstituiertes oder im $C_1$-$C_2$-Alkylteil durch Hydroxy, Sulfo oder Sulfato substituiertes N-$C_1$-$C_2$-Alkyl-N-phenylamino und besonders bevorzugt für Amino, unsubstituiertes oder durch Hydroxy, Sulfo oder Sulfato substituiertes N-$C_1$-$C_2$-Alkylamino, durch 1 oder 2 gleiche oder verschiedene Substituenten aus der Gruppe Sulfo, Methyl und Methoxy substituiertes Phenylamino oder durch 1 bis 3 Sulfogruppen substituiertes 2-Naphthylamino.

Bevorzugt als nicht-reaktive $C_1$-$C_4$-Alkoxyreste V sind Methoxy und iso-Propoxy und als nicht-reaktive $C_1$-$C_4$-Alkylthioreste V Methylthio und Ethylthio.

Eine Gruppe von bevorzugten nicht-reaktiven Resten V umfasst Hydroxy, $C_1$-$C_4$-Alkoxy, Morpholino, Amino; unsubstituiertes oder im Alkylteil durch Sulfo, Sulfato, Hydroxy, Carboxy oder Phenyl substituiertes N-$C_1$-$C_4$-Alkylamino oder N,N-Di-$C_1$-$C_4$-Alkylamino, Cyclohexylamino; unsubstituiertes oder im Phenyl- oder Naphthylteil durch $C_1$-$C_4$-Alkyl, $C_1$-$C_4$-Alkoxy, Amino, $C_2$-$C_4$-Alkanoylamino, Carboxy, Sulfo oder Halogen substituiertes Phenylamino oder Naphthylamino, und unsubstituiertes oder im Alkylteil durch Sulfo, Sulfato, Hydroxy, Carboxy oder Phenyl substituiertes und/oder im Phenylteil durch $C_1$-$C_4$-Alkyl, $C_1$-$C_4$-Alkoxy, Amino, $C_2$-$C_4$-Alkanoylamino, Carboxy, Sulfo oder Halogen substituiertes N-$C_1$-$C_4$-Alkyl-N-phenylamino.

Eine Gruppe von besonders bevorzugten nicht-reaktiven Resten V umfasst Hydroxy, Methoxy, iso-Propoxy, Morpholino, Amino, unsubstituiertes oder durch Hydroxy, Sulfo oder Sulfato substituiertes N-Mono- oder N,N-Di-$C_1$-$C_2$-Alkylamino, Cyclohexylamino, unsubstituiertes oder durch Methyl, Methoxy, Carboxy oder Sulfo substituiertes Phenylamino, Mono-, Di- oder Trisulfonaphthylamino und unsubstituiertes oder im $C_1$-$C_2$-Alkylteil durch Hydroxy, Sulfo oder Sulfato substituiertes N-$C_1$-$C_2$-Alkyl-N-phenylamino.

Handelt es sich bei V um einen Reaktivrest der Formel (3a) - (3g) und bedeutet Y einen Rest $-CH_2-CH_2-U$, so kann es sich bei der Abgangsgruppe U z.B. um -Cl, -Br, -F, $-OSO_3H$, $-SSO_3H$, $-OCO-CH_3$, $OPO_3H_2$, $-OCO-C_6H_5$, $OSO_2-C_1-C_4$-Alkyl oder $-OSO_2-N(C_1-C_4\text{-Alkyl})_2$ handeln. Bevorzugt ist U eine Gruppe der Formel -Cl, $-OSO_3H$, $-SSO_3H$, $-OCC-CH_3$, $-OCO-C_6H_5$ oder $-OPO_3H_2$, insbesondere -Cl oder $-OSO_3H$ und besonders bevorzugt $-OSO_3H$.

Y bedeutet bevorzugt Vinyl, β-Chlorethyl, β-Sulfatoethyl, β-Thiosulfatoethyl,β-Acetoxyethyl, β-Phenoxyethyl oder β-Phosphatoethyl und besonders bevorzugt β-Sulfatoethyl oder Vinyl.

Z bedeutet bevorzugt Brom.

alk und alk' stehen unabhängig voneinander je z.B. für Methylen, 1,2-Ethylen, 1,3-Propylen, 1,4-Butylen, 1,5-Pentylen, 1,6-Hexylen oder für deren verzweigte Isomere. alk und alk' bedeuten unabhängig voneinander je bevorzugt einen $C_1$-$C_4$-Alkylenrest und besonders bevorzugt einen Ethylen- oder Propylenrest.

Bevorzugte Bedeutungen von arylen sind ein unsubstituierter oder durch Sulfo, Methyl, Methoxy oder Carboxy substituierter 1,3- oder 1,4-Phenylenrest und insbesondere ein unsubstituierter 1,3- oder 1,4-Phenylenrest.

$R_4$ bedeutet bevorzugt um Wasserstoff.

$R_5$ bedeutet bevorzugt Wasserstoff, $C_1$-$C_4$-Alkyl oder einen Rest der Formel

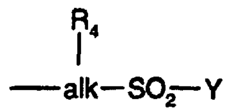
,

worin für $R_4$, Y und alk jeweils die zuvor genannten Bedeutungen und Bevorzugungen gelten. $R_5$ bedeutet besonders bevorzugt Wasserstoff, Methyl oder Ethyl.

$R_6$ bedeutet bevorzugt Wasserstoff, Methyl oder Ethyl und besonders bevorzugt Wasserstoff.

Die Variable E steht bevorzugt für -NH- oder -O- und besonders bevorzugt für -O-.

Die Variable t steht bevorzugt für die Zahl 0.

Bevorzugt als Reaktivreste der Formel (3a) bis (3g) sind solche, worin $R_4$, $R_5$ und $R_6$ je Wasserstoff, E den Rest -NH- oder -O-, alk und alk' unabhängig voneinander je Ethylen oder Propylen, arylen unsubstituiertes oder durch Methyl, Methoxy, Carboxy oder Sulfo substituiertes Phenylen, Y Vinyl oder β-Sulfatoethyl, $Y_1$ -CHBr-$CH_2$Br oder -CBr=$CH_2$ und t die Zahl 0 bedeuten.

V steht als Reaktivrest besonders bevorzugt für eine Gruppe der Formel

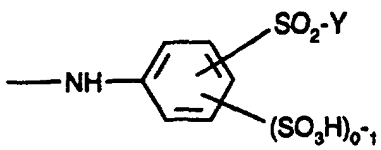
(3c')

oder

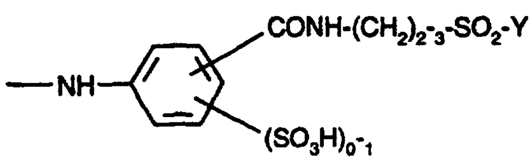
(3d')
,

worin für Y die zuvor genannten Bedeutungen und Bevorzugungen gelten.

Bedeutet D den Rest eines Monoazo-, Polyazo- oder Metallkomplexazo-Chromophors, kommen insbesondere die folgenden in Betracht:

Chromophorreste eines Mono- oder Disazofarbstoffes der Formel

$$D_1\text{-N=N-(M-N=N)}_u\text{-K-} \quad (6)$$

oder

$$\text{-}D_1\text{-N=N-(M-N=N)}_u\text{-K} \quad (7),$$

worin $D_1$ der Rest einer Diazokomponente der Benzol- oder Naphthalinreihe, M der Rest einer Mittelkomponente der Benzol- oder Naphthalinreihe, K der Rest einer Kupplungskomponente der Benzol-, Naphthalin-, Pyrazolon-, 6-Hydroxypyridon-(2)- oder Acetessigsäurearylamid-Reihe -Reihe und u die Zahl 0 oder 1 sind, wobei $D_1$, M und K bei Azofarbstoffen übliche Substituenten, z.B. gegebenenfalls durch Hydroxy, Sulfo oder Sulfato weitersubstituiertes $C_1$-$C_4$-Alkyl oder $C_1$-$C_4$-Alkoxy, Halogen, Carboxy, Sulfo, Nitro, Cyan, Trifluormethyl, Sulfamoyl, Carbamoyl, Amino, Ureido, Hydroxy, Carboxy, Sulfomethyl, $C_2$-$C_4$-Alkanoylamino, gegebenenfalls im Phenylring durch $C_1$-$C_4$-Alkyl, $C_1$-$C_4$-Alkoxy, Halogen oder Sulfo substituiertes Benzoylamino, gegebenenfalls durch $C_1$-$C_4$-Alkyl, $C_1$-$C_4$-Alkoxy, Halogen, Carboxy oder Sulfo substituiertes Phenyl, sowie faserreaktive Reste tragen können. Ferner kommen noch die von den Farbstoffresten der Formeln (6) und (7) abgeleiteten Metallkomplexe in Betracht, wobei es sich insbesondere um Farbstoffreste eines 1:1-Kupferkomplexazofarbstoffes der Benzol- oder Naphthalinreihe handelt, worin das Kupferatom an je eine metallisierbare Gruppe beidseitig in ortho-Stellung zur Azobrücke gebunden ist.

Tragen die Chromophorreste der Formel (6) oder (7) einen Reaktivrest, so kann dieser z.B. der Formel

$$-SO_2-Y \qquad (5a),$$

$$-CONH-(CH_2)_m-SO_2-Y \qquad (5b),$$

$$-CONH-(CH_2)_{m1}-O-(CH_2)_m-SO_2-Y \qquad (5c),$$

$$-(O)_p-(CH_2)_q-CONH-(CH_2)_m-SO_2-Y \qquad (5d),$$

$$-NH-CO-CHZ-CH_2Z \qquad (5e),$$

$$-NH-CO-CZ=CH_2 \qquad (5f)$$

oder

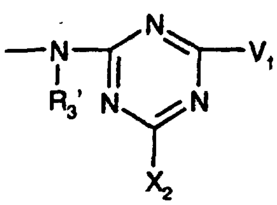

(5g)

entsprechen, worin für Y und Z jeweils die zuvor angegebenen Bedeutungen und Bevorzugungen gelten, für $V_1$ unabhängig die zuvor für V angegebenen Bedeutungen und Bevorzugungen gelten, für $X_2$ unabhängig die zuvor für X angegebenen Bedeutungen und Bevorzugungen gelten, für $R_3'$ unabhängig die zuvor für $R_3$ angegebenen Bedeutungen und Bevorzugungen gelten und p die Zahl 0 oder 1 und m, m1 und q unabhängig voneinander je eine ganze Zahl von 1 bis 6 bedeuten. Bevorzugt bedeuten p die Zahl 0, m und m1 unabhängig voneinander je die Zahl 2 oder 3 und q die Zahl 1,2,3 oder 4.

Tragen die Chromophorreste der Formel (6) oder (7) einen Reaktivrest, so entspricht dieser bevorzugt der oben angegebenen Formel (5a) oder (5g).

Besonders bevorzugte Reste eines Monoazo- oder Disazochromophors D sind die folgenden:

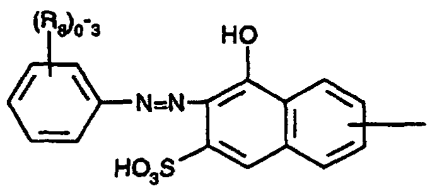

(8a),

worin $(R_8)_{0-3}$ für 0 bis 3 gleiche oder verschiedene Substituenten aus der Gruppe $C_1$-$C_4$-Alkyl, $C_1$-$C_4$-Alkoxy, Halogen, Carboxy und Sulfo steht,

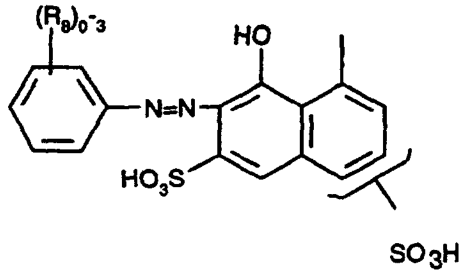

(8b),

worin $(R_8)_{0-3}$ für 0 bis 3 gleiche oder verschiedene Substituenten aus der Gruppe $C_1$-$C_4$-Alkyl, $C_1$-$C_4$-Alkoxy, Halogen, Carboxy und Sulfo steht,

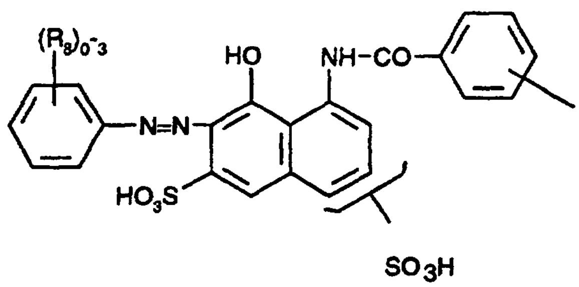

(8c),

worin $(R_8)_{0-3}$ für 0 bis 3 gleiche oder verschiedene Substituenten aus der Gruppe $C_1$-$C_4$-Alkyl, $C_1$-$C_4$-Alkoxy, Halogen, Carboxy und Sulfo steht,

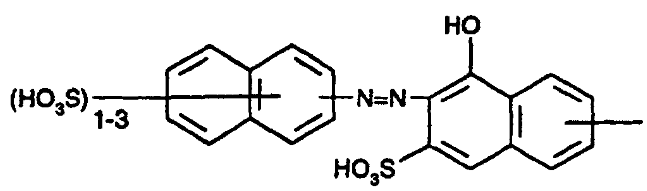

(8d),

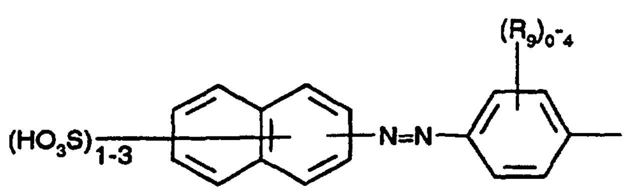

(8e),

worin $(R_9)_{0-4}$ für 0 bis 4 gleiche oder verschiedene Substituenten aus der Gruppe Halogen, Nitro, Cyan, Trifluormethyl, Sulfamoyl, Carbamoyl, $C_1$-$C_4$-Alkyl, $C_1$-$C_4$-Alkoxy, Amino, Acetylamino, Ureido, Hydroxy, Carboxy, Sulfomethyl und

Sulfo steht,

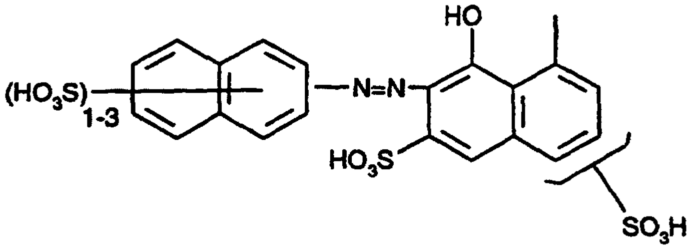

(8f),

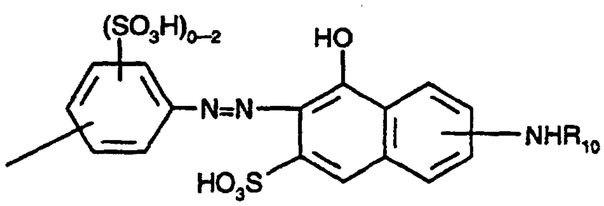

(8g),

worin $R_{10}$ $C_1$-$C_4$-Alkanoyl, Benzoyl oder ein Halogentriazinylrest der zuvor angegebenen Formel (5g) ist,

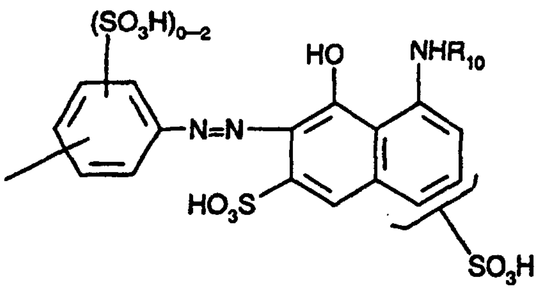

(8h),

worin $R_{10}$ $C_1$-$C_4$-Alkanoyl, Benzoyl oder ein Halogentriazinylrest der zuvor angegebenen Formel (5g) ist,

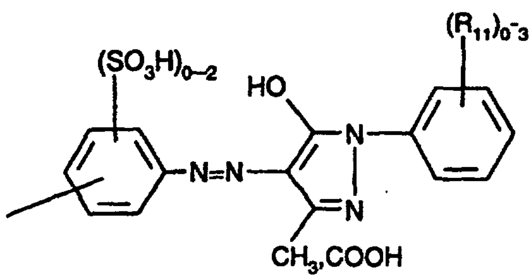

(8i),

worin $(R_{11})_{0-3}$ für 0 bis 3 gleiche oder verschiedene Substituenten aus der Gruppe $C_1$-$C_4$-Alkyl, $C_1$-$C_4$-Alkoxy, Halogen, Carboxy und Sulfo steht,

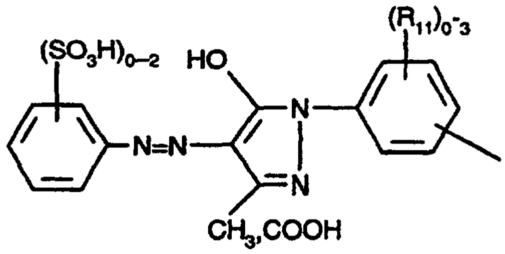

(8j),

worin $(R_{11})_{0-3}$ für 0 bis 3 gleiche oder verschiedene Substituenten aus der Gruppe $C_1$-$C_4$-Alkyl, $C_1$-$C_4$-Alkoxy, Halogen, Carboxy und Sulfo steht,

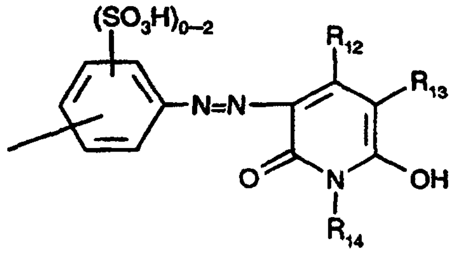

(8k),

worin $R_{12}$ und $R_{14}$ unabhängig voneinander Wasserstoff, $C_1$-$C_4$-Alkyl oder Phenyl und $R_{13}$ Wasserstoff, Cyano, Carbamoyl oder Sulfomethyl sind,

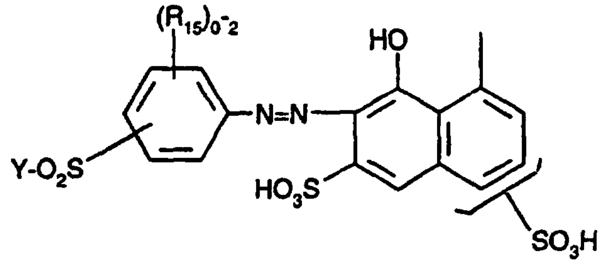

(8l),

worin $(R_{15})_{0-2}$ für 0 bis 2 gleiche oder verschiedene Substituenten aus der Gruppe $C_1$-$C_4$-Alkyl, $C_1$-$C_4$-Alkoxy, Halogen, Carboxy und Sulfo steht; und Y die zuvor angegebene Bedeutung hat,

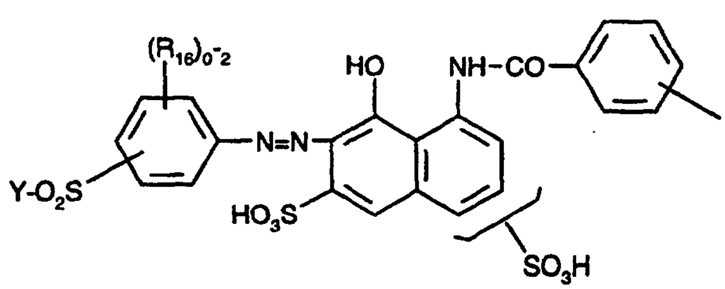

(8m),

worin $(R_{16})_{0-2}$ für 0 bis 2 gleiche oder verschiedene Substituenten aus der Gruppe $C_1$-$C_4$-Alkyl, $C_1$-$C_4$-Alkoxy, Halogen, Carboxy und Sulfo steht; und Y die zuvor angegebene Bedeutung hat,

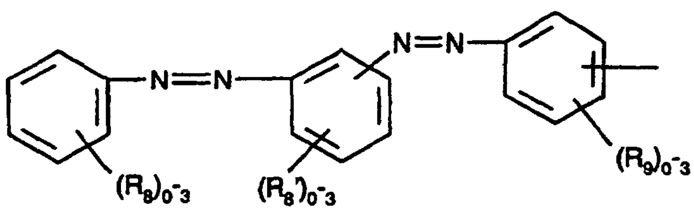

(8n)

oder

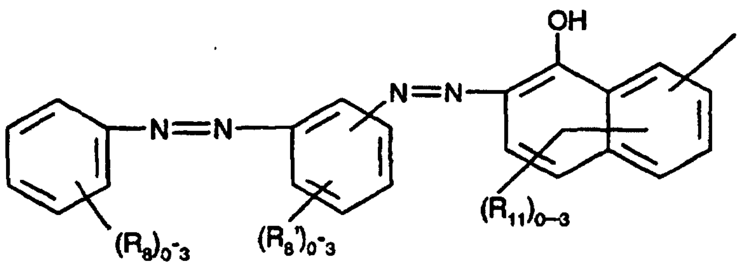

(8o)

oder

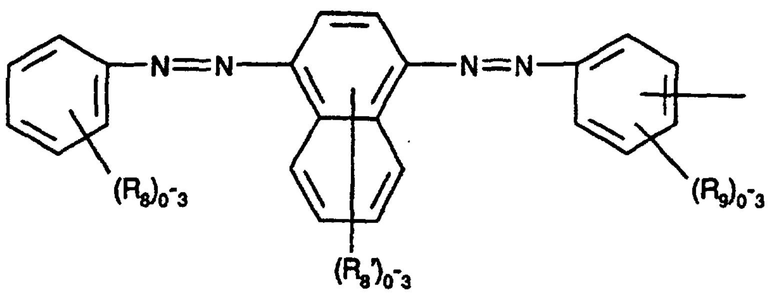

(8p)

oder

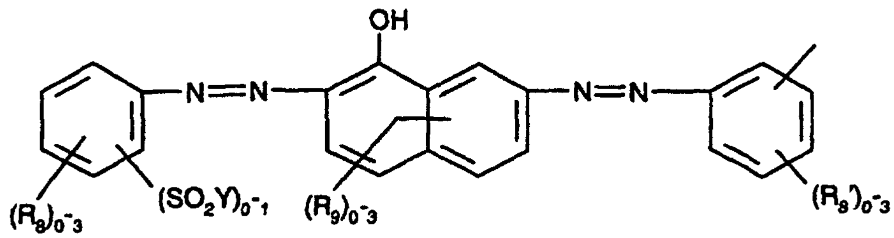

(8q),

worin $(R_8)_{0-3}$ für 0 bis 3 gleiche oder verschiedene Substituenten aus der Gruppe $C_1$-$C_4$-Alkyl, $C_1$-$C_4$-Alkoxy, Halogen, Carboxy und Sulfo steht, $(R_8')_{0-3}$ für 0 bis 3 gleiche oder verschiedene Substituenten aus der Gruppe $C_1$-$C_4$-Alkyl, $C_1$-$C_4$-Alkoxy, Halogen, Carboxy, Sulfo, $C_1$-$C_4$-Hydroxyalkoxy und $C_1$-$C_4$-Sulfatoalkoxy steht, $(R_9)_{0-3}$ für 0 bis 3 gleiche oder verschiedene Substituenten aus der Gruppe Halogen, Nitro, Cyan, Trifluormethyl, Sulfamoyl, Carbamoyl, $C_1$-$C_4$-Alkyl, $C_1$-$C_4$-Alkoxy, Amino, Acetylamino, Ureido, Hydroxy, Carboxy, Sulfomethyl und Sulfo steht und Y die zuvor angegebene Bedeutung hat.

Die Reste der Formeln (8a) bis (8q) können in den Phenyl- oder Naphthylringen als weiteren Substituenten noch einen Rest der Formel $-SO_2Y$ enthalten, worin Y die zuvor angegebene Bedeutung hat.

Bei dem Rest eines Formazanfarbstoffes D handelt es sich bevorzugt um einen Farbstoffrest der Formel

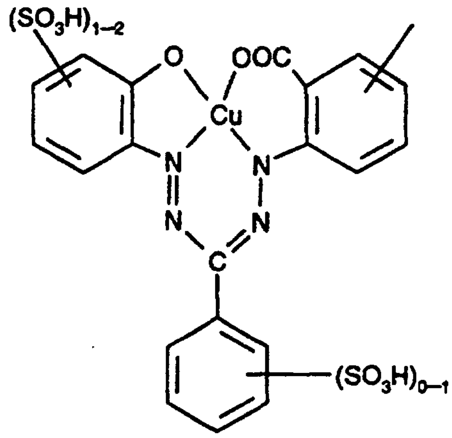

(8r)

oder

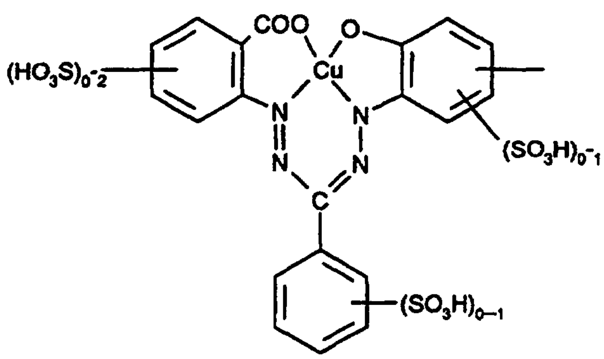

(8s),

worin die Benzolkeme keine weiteren Substituenten enthalten oder durch $C_1$-$C_4$-Alkyl, $C_1$-$C_4$-Alkoxy, $C_1$-$C_4$-Alkylsulfonyl, Halogen oder Carboxy weitersubstituiert sind.

Bei D als Rest eines Phthalocyaninfarbstoffes handelt es sich bevorzugt um einen Rest der Formel

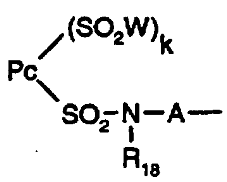

(9),

worin Pc der Rest eines Metallphthalocyanins, insbesondere der Rest eines Kupfer- oder Nickelphthalocyanins; W -OH und/oder -$NR_{17}R_{17}'$; $R_{17}$ und $R_{17}'$ unabhängig voneinander Wasserstoff oder gegebenenfalls durch Hydroxy oder Sulfo substituiertes $C_1$-$C_4$-Alkyl; $R_{18}$ Wasserstoff oder $C_1$-$C_4$-Alkyl; A ein gegebenenfalls durch $C_1$-$C_4$-Alkyl, Halogen, Carboxy oder Sulfo substituierter Phenylenrest oder ein $C_2$-$C_8$-Alkylenrest; und k 1 bis 3 sind. $R_{17}$ und $R_{17}'$ sind vorzugsweise Wasserstoff. A ist bevorzugt ein gegebenenfalls durch $C_1$-$C_4$-Alkyl, Halogen, Carboxy oder Sulfo substituierter Phenylenrest. Pc ist bevorzugt der Res eines Kupferphthalocyanins.

Bei D als Rest eines Dioxazinfarbstoffes handelt es sich z.B. um einen Rest der Formel

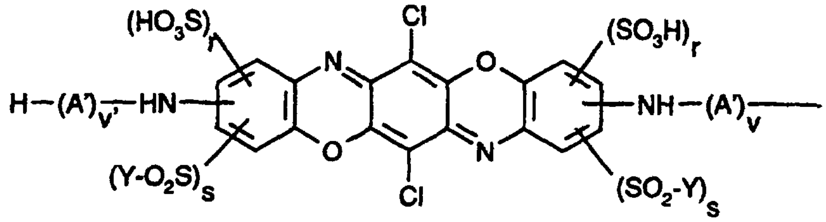

(10),

worin A' ein gegebenenfalls durch $C_1$-$C_4$-Alkyl, Halogen, Carboxy oder Sulfo substituierter Phenylenrest oder ein $C_2$-$C_6$-Alkylenrest ist, r, s, v und v' unabhängig voneinander je die Zahl 0 oder 1 bedeuten und Y die zuvor angegebene Bedeutung hat. Bevorzugt bedeuten A'$C_2$-$C_4$-Alkylen oder unsubstituiertes oder durch Sulfo substituiertes 1,3- oder 1,4-Phenylen, r die Zahl 1, s die Zahl 0, v die Zahl 1 und v' die Zahl 0 oder 1.

Bei D als Rest eines Anthrachinonfarbstoffes handelt es sich bevorzugt um einen Rest der Formel

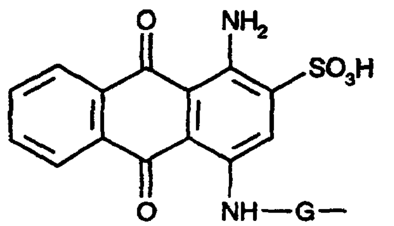

(11),

worin G ein unsubstituierter oder durch $C_1$-$C_4$-Alkyl, $C_1$-$C_4$-Alkoxy, Halogen, Carboxy oder Sulfo substituierter Phenylenrest oder ein Cyclohexylen-, Phenylenmethylen- oder $C_2$-$C_6$-Alkylenrest ist, welcher jeweils vorzugsweise mindestens 2 Sulfogruppen enthält. Vorzugsweise ist G ein gegebenenfalls durch $C_1$-$C_4$-Alkyl, $C_1$-$C_4$-Alkoxy, Halogen, Carboxy oder Sulfo substituierter Phenylenrest

D bedeutet insbesondere bevorzugt einen Monoazo- oder Disazochromophorrest der zuvor angegebenen Formel (8a), (8b), (8f), (8g), (8h), (8k), (8l), (8n), (8o), (8p) oder (8q), einen Formazanrest der zuvor angegebenen Formel (8r) oder (8s) oder einen Anthrachinonrest der zuvor angegebenen Formel (11).

Bei den für die Variablen angegebenen Bedeutungen steht $C_1$-$C_4$-Alkyl generell für Methyl, Ethyl, n- oder iso-Propyl oder n-, iso-, sec.- oder tert-Butyl. $C_1$-$C_4$-Alkoxy bedeutet generell Methoxy, Ethoxy, n- oder iso-Propoxy oder n-, iso-, sec.- oder tert.-Butoxy. Halogen steht generell z.B. für Fluor, Chlor oder Brom. Beispiele für $C_1$-$C_4$-Alkoxycarbonyl sind Methoxycarbonyl und Ethoxycarbonyl. Beispiele für $C_1$-$C_4$-Alkylthio sind Methylthio und Ethylthio. Beispiele für $C_2$-$C_4$-Alkanoylamino sind Acetylamino und Propionylamino.

Die Verbindungen der Formeln (1) und (2) enthalten mindestens eine, vorzugsweise mindestens zwei und besonders bevorzugt 2 bis 8 Sulfogruppen, welche jeweils entweder in Form ihrer freien Säure oder vorzugsweise als deren Salze vorliegen. Als Salze kommen beispielsweise die Alkali-, Erdalkali- oder Ammoniumsalze, Salze eines organischen Amins oder Mischungen davon in Betracht. Als Beispiele seien Natrium-, Lithium-, Kalium-oder Ammoniumsalze, das Salz des Mono-, Di- oder Triäthanolamins oder Na/Li- oder Na/Li/$NH_4$-Mischsalze genannt.

Die erfindungsgemässen Farbstoffmischungen enthalten die Farbstoffe der Formel (1) und (2) z.B. in einem Gewichtsverhäitnis von 5:95 bis 95:5, vorzugsweise 10:90 bis 90:10 und besonders bevorzugt 40:60 bis 60:40.

Von besonderem Interesse sind Farbstoffmischungen enthaltend je mindestens eine Verbindung der Formeln (1) und (2), worin D ein Chromophorrest der zuvor angegebenen Formel (8a) bis (8s), (9), (10) oder (11) ist, B für geradkettiges oder verzweigtes $C_2$-$C_{12}$-Alkylen, welches gegebenenfalls durch Hydroxy substituiert oder durch -O- oder -NHunterbrochen ist, steht, $R_1$, $R_2$ und $R_3$ unabhängig voneinander je Wasserstoff oder unsubstituiertes oder durch Hydroxy substituiertes $C_1$-$C_4$-Alkyl bedeuten, X und $X_1$ unabhängig voneinander je Fluor oder Chlor sind, und V Hydroxy, $C_1$-$C_4$-Alkoxy, Morpholino, Amino; unsubstituiertes oder im Alkylteil durch Sulfo, Sulfato, Hydroxy, Carboxy oder Phenyl substituiertes N-$C_1$-$C_4$-Alkylamino oder N,N-Di-$C_1$-$C_4$-Alkylamino, Cyclohexylamino; unsubstituiertes oder im Phenyl- oder Naphthylteil durch $C_1$-$C_4$-Alkyl, $C_1$-$C_4$-Alkoxy, Amino, $C_2$-$C_4$-Alkanoylamino, Carboxy, Sulfo oder Halogen substituiertes Phenylamino oder Naphthylamino, unsubstituiertes oder im Alkylteil durch Sulfo, Sulfato, Hydroxy, Carboxy oder Phenyl substituiertes und/oder im Phenylteil durch $C_1$-$C_4$-Alkyl, $C_1$-$C_4$-Alkoxy, Amino, $C_2$-$C_4$-Alkanoylamino, Carboxy, Sulfo oder Halogen substituiertes N-$C_1$-$C_4$-Alkyl-N-phenylamino oder einen Reaktivrest der zuvor angegebenen Formel (3c') oder (3d') bedeutet.

Von ganz besonderem Interesse sind Farbstoffmischungen enthaltend je mindestens eine Verbindung der Formeln (1) und (2) im Gewichtsverhältnis von 10:90 bis 90:10, worin D ein Chromophorrest der zuvor angegebenen

Formel (8a), (8b), (8f), (8g), (8h), (8k), (8l), (8n), (8o), (8p), (8q), (8r), (8s) oder (11) ist, B für geradkettiges oder verzweigtes $C_2$-$C_6$-Alkylen steht, $R_1$, $R_2$ und $R_3$ unabhängig voneinander je Wasserstoff, Methyl, Ethyl oder Hydroxyethyl bedeuten, X und $X_1$ unabhängig voneinander je Fluor oder Chlor sind, und V Amino, unsubstituiertes oder durch Hydroxy, Sulfo oder Sulfato substituiertes N-$C_1$-$C_2$-Alkylamino, durch 1 oder 2 gleiche oder verschiedene Substituenten aus der Gruppe Sulfo, Methyl und Methoxy substituiertes Phenylamino, durch 1 bis 3 Sulfogruppen substituiertes 2-Naphthylamino oder einen faserreaktiven Rest der Formel (3c') oder (3d') bedeutet.

Die Verbindungen der Formel (1) sind z.B. aus der EP-A 0 478 503 bekannt oder können in Analogie dazu hergestellt werden.

Die Verbindungen der Formel (2) können in an sich bekannter Weise erhalten werden, z.B. indem man

eine Aminoverbindung der Formel

$$D - NH - R_1 \quad (12),$$

ein Diamin der Formel

$$R_2 - HN - B - NH - R_3 \quad (13),$$

eine Verbindung der Formel

$$V - H \quad (14)$$

und
je ein Halotriazin der Formel

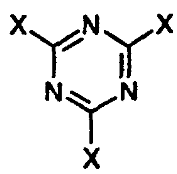

(15a)

und

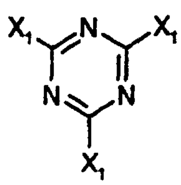

(15b)

in beliebiger Reihenfolge miteinander umsetzt, wobei B, D, $R_1$, $R_2$, $R_3$, V, X und $X_1$ jeweils die zuvor angegebene Bedeutung haben. Eine Verfahrensvariante besteht darin, dass man eine der Verbindungen der Formeln (12) und (14) zunächst mit dem Halotriazin der Formel (15a) bzw. (15b) kondensiert, das erhaltene Produkt mit einem Diamin der Formel (13) kondensiert und das erhaltene Reaktionsprodukt mit der anderen Verbindung der Formel (12) und (14), welche zuvor mit dem Halotriazin der Formel (15a) bzw. (15b) kondensiert wurde, umsetzt.

Die Kondensationsreaktionen zwischen den Verbindungen der Formeln (12), (13), (14) (15a) und (15b) erfolgen im allgemeinen analog zu bekannten Verfahren, in der Regel in wässriger Lösung bei Temperaturen von z.B. 0 bis 50°C und einem pH-Wert von z.B. 4 bis 10. Die Verbindungen der Formeln (12), (13), (14) sowie die Halotriazinylverbindungen der Formeln (15a) und (15b) sind bekannt oder können in Analogie zu bekannten Verbindungen hergestellt werden. Die etwaige Einführung eines Carboxy- oder Carbamoylpyridiniumrests) oder $X_1$ erfolgt in der Regel im

Anschluss an eine Kondensationsreaktion der entsprechenden Cyanurhalogenide.

Die erfindungsgemässen Farbstoffmischungen enthaltend je mindestens eine Verbindung der Formeln (1) und (2) können durch einfaches Zusammenmischen der zuvor separat hergestellten Einzelkomponenten hergestellt werden. Ein bevorzugtes Verfahren zur Herstellung der erfindungsgemässen Farbstoffmischungen besteht jedoch darin, 1 Moläquivalent einer Verbindung der Formel (12) zunächst mit in etwa 1 Moläquivalent Halotriazin der Formel (15a) und 0,5 bis 1 Moläquivalenten eines Diamins der Formel (13) zu einem Gemisch enthaltend eine Verbindung der Formel (1) und eine Verbindung der Formel

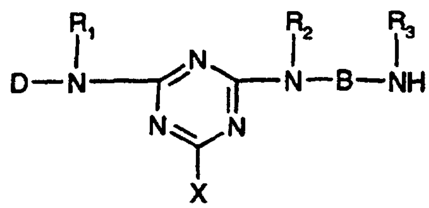

(16)

umzusetzen. Zu dem Reaktionsgemisch wird anschliessend eine dem Gehalt an Verbindung der Formel (16) entsprechende Menge des Umsetzungsprodukts der Verbindungen der Formeln (14) und (15b) gegeben und zur Kondensation gebracht und somit die erfindungsgemässe Farbstoffmischung fertiggestellt.

Die erfindungsgemässen Farbstoffmischungen sind faserreaktiv. Unter faser reaktiven Verbindungen sind solche zu verstehen, die mit den Hydroxylgruppen der Cellulose, den Amino-, Carboxy-, Hydroxy- oder Thiolgruppen bei Wolle und Seide, oder mit den Aminound gegebenenfalls mit den Carboxygruppen von synthetischen Polyamiden unter Bildung kovalenter chemischer Bindungen zu reagieren vermögen.

Die erfindungsgemässen Farbstoffmischungen eignen sich zum Färben und Bedrucken der verschiedensten Materialien, wie hydroxylgruppenhaltigen oder stickstoffhaltigen Fasermaterialien. Als Beispiele seien Seide, Leder, Wolle, Polyamidfasern und Polyurethane, und insbesondere cellulosehaltige Fasermaterialien aller Art genannt. Solche cellulosehaltige Fasermaterialien sind beispielsweise die natürlichen Cellulosefasern, wie Baumwolle, Leinen und Hanf, sowie Zellstoff und regenerierte Cellulose. Die erfindungsgemässen Farbstoffmischungen sind auch zum Färben oder Bedrucken Von hydroxylgruppenhaltigen Fasern geeignet, die in Mischgeweben enthalten sind, z.B. von Gemischen aus Baumwolle mit Polyesterfasern oder Polyamidfasem. Besonders geeignet sind die erfindungsgemässen Farbstoffmischungen zum Färben oder Bedrucken von cellulosehaltigen Fasermaterialien. Weiterhin können sie zum Färben oder Bedrucken von natürlichen oder synthetischen Polyamidfasermaterialien verwendet werden.

Die erfindungsgemässen Farbstoffmischungen lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung oder durch mehrstündiges Lagern bei Raumtemperatur fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die erfindungsgemässen Farbstoffmischungen zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Farbstoffmischungen eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffmischungen hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Herstellung der Verbindungen der Formel (2) als Erläuterungsbeispiele

Beispiel 1:11 Teile Cyanurchlorid werden unter Zugabe eines Netzmittels und 5 Teilen Dinatriumhydrogenphosphat bei einer Temperatur von ca. 0°C in 50 Teilen Wasser verrührt. Man tropft eine neutrale Lösung von 40 Teilen der Aminoazoverbindung der Formel

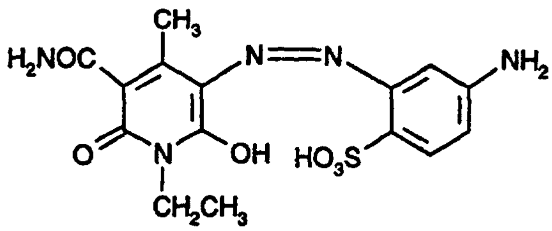

(101)

in 400 Teilen Wasser zu und hält dabei den pH-Wert durch Zugabe von wässriger Natriumhydroxidlösung konstant bei 4,5. Nach beendeter Kondensation erhält man das primäre Kondensationsprodukt von Cyanurchlorid und der Aminoazoverbindung der Formel (101) als wässrige Lösung (Lösung 1).

19 Teile Cyanurchlorid werden unter Zugabe eines Netzmittels und 5 Teilen Dinatriumhydrogenphosphat bei einer Temperatur von ca. 0°C in 50 Teilen Wasser verrührt Man tropft dazu eine neutrale Lösung von 17 Teilen 2-Aminobenzolsulfonsäure in 170 Teilen Wasser und hält dabei den pH-Wert durch Zugabe von wässriger Natriumhydroxidlösung bei 4,5. Die erhaltene Lösung des Kondensationsprodukts von Cyanurchlorid und 2-Aminobenzolsulfonsäure wird in eine neutrale Lösung von 6 Teilen Ethan-1,2-diamin in 30 Teilen Wasser derart zugetropft, dass der pH-Wert 6 nicht übersteigt. Dieser pH-Wert wird bis zur vollständigen Kondensation durch Zugabe von wässriger Natriumhydroxidlösung konstant gehalten und die Reaktionslösung gegen Ende der Reaktion auf 40°C erhitzt. Man erhält das Kondensationsprodukt der Formel

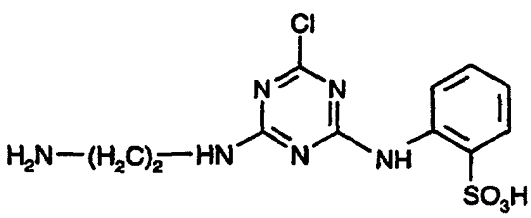

(102)

als wässrige Lösung (Lösung 2).

Die oben hergestellte Lösung 1 wird zur Lösung 2 gegeben und der pH-Wert auf einen Wert von 8,5 erhöht. Diesen hält man durch Zugabe von wässriger Natriumhydroxidlösung konstant, bis die Kondensation beendet ist Die Reaktionslösung wird dialytisch von anorganischen Salzen befreit und eingedampft. Man erhält den Farbstoff der Formel

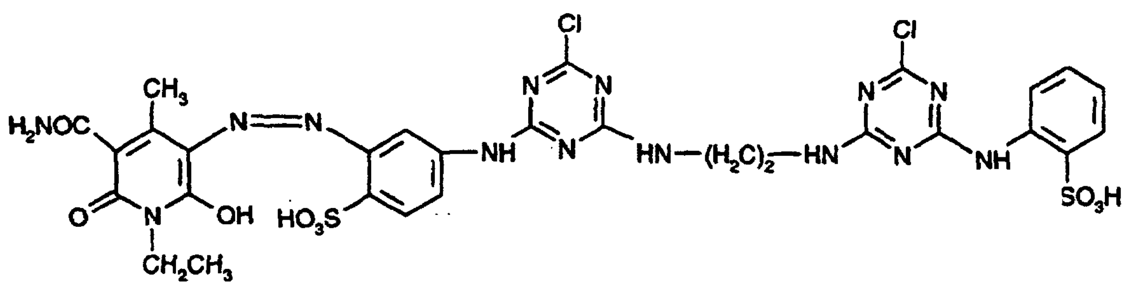

der Cellulose in einer brillanten gelben Nuance mit guten Allgemeinechtheiten färbt.

Beispiel 2:14 Teile Cyanurfluorid werden zu einer neutralen Lösung von 40 Teilen der Verbindung der Formel (101) und 5 Teilen Dinatriumhydrogenphosphat in 400 Teilen Wasser bei einer Temperatur von ≤2°C zugetropft und der pH-Wert durch Zugabe von wässriger Natriumhydroxidlösung konstant gehalten. Nach beendeter Kondensation

erhält man das primäre Kondensationsprodukt von Cyanurfluorid und der Aminoazoverbindung der Formel (101) als wässrige Lösung (Lösung 3).

14 Teile Cyanurfluorid werden zu einer neutralen Lösung von 17 Teilen 2-Aminobenzolsulfonsäure und 5 Teilen Dinatriumhydrogenphosphat in 170 Teilen Wasser bei einer Temperatur von ≤2°C zugetropft und der pH-Wert durch Zugabe von wässriger Natriumhydroxidlösung konstant gehalten. Zu der erhaltenen Lösung des Kondensationsprodukts von Cyanurfluorid und 2-Aminobenzolsulfonsäure wird eine neutrale Lösung von 6 Teilen Ethan-1,2-diamin in 30 Teilen Wasser derart zugetropft, dass der pH-Wert 6 nicht übersteigt. Dieser pH-Wert wird bis zur vollständigen Kondensation durch Zugabe von wässriger Natriumhydroxidlösung konstant gehalten und die Reaktionslösung gegen Ende der Reaktion auf 40°C erhitzt. Man erhält das Kondensationsprodukt der Formel

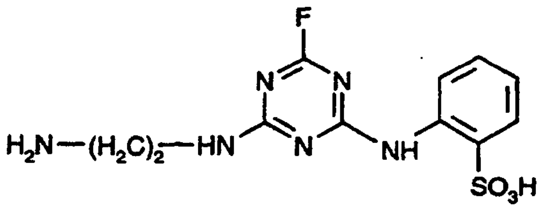

(201)

als wässrige Lösung (Lösung 4).

Die oben hergestellte Lösung 3 wird zur Lösung 4 gegeben und der pH-Wert auf einen Wert von 8,5 erhöht. Diesen hält man durch Zugabe von wässriger Natriumhydroxidlösung konstant, bis die Kondensation beendet ist. Die Reaktionslösung wird dialytisch von anorganischen Salzen befreit und eingedampft. Man erhält den Farbstoff der Formel

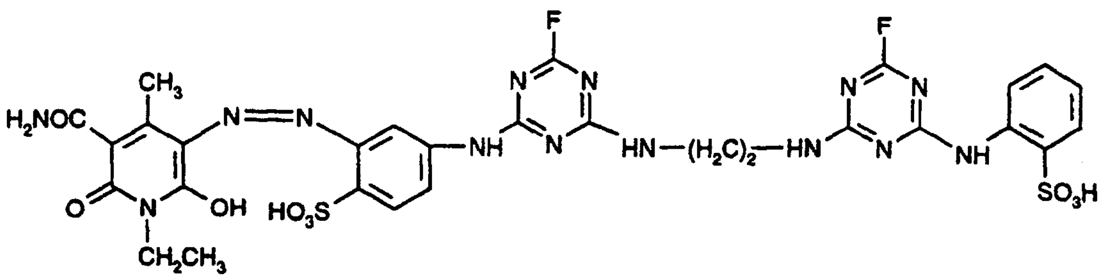

der Cellulose in einer brillanten gelben Nuance mit guten Allgemeinechtheiten färbt.

Beispiel 3: Die gemäss Beispiel 1 hergestellte Lösung 1 wird zu der gemäss Beispiel 2 hergestellten Lösung 4 gegeben und der pH-Wert auf einen Wert von 8,5 erhöht Diesen hält man durch Zugabe von wässriger Natriumhydroxidlösung konstant, bis die Kondensation beendet ist. Die Reaktionslösung wird dialytisch von anorganischen Salzen befreit und eingedampft. Man erhält den Farbstoff der Formel

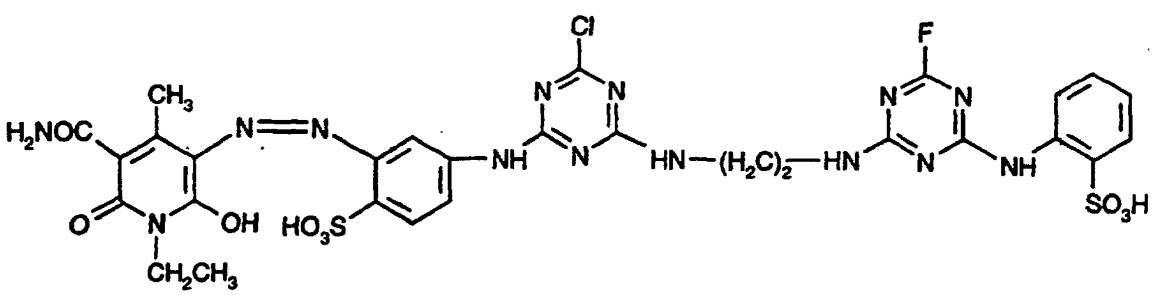

der Cellulose in einer brillanten gelben Nuance mit guten Allgemeinechtheiten färbt.

Beispiel 4: Die gemäss Beispiel 2 hergestellte Lösung 3 wird zu der gemäss Beispiel 1 hergestellten Lösung 2 gegeben und der pH-Wert auf einen Wert von 8,5 erhöht. Diesen hält man durch Zugabe von wässriger Natriumhydroxidlösung konstant, bis die Kondensation beendet ist. Die Reaktionslösung wird dialytisch von anorganischen Salzen befreit und eingedampft. Man erhält den Farbstoff der Formel

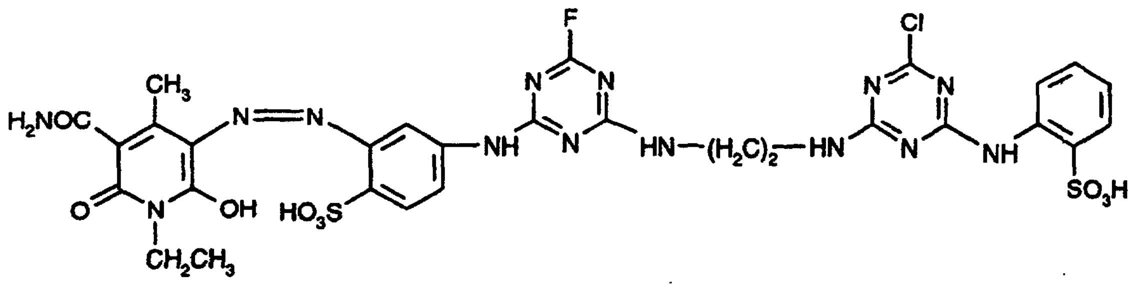

der Cellulose in einer brillanten gelben Nuance mit guten Allgemeinechtheiten färbt.

Beispiel 4a: 14 Teile Cyanurfluorid werden zu einer neutralen Lösung von 40 Teilen der Verbindung der Formel (101) und 5 Teilen Dinatriumhydrogenphosphat in 400 Teilen Wasser bei einer Temperatur von ≤2°C getropft und der pH-Wert durch Zugabe von wässriger Natriumhydroxidlösung konstant gehalten. Zu der Lösung des primären Kondensationsprodukts von Cyanurfluorid und der Aminoazoverbindung der Formel (101) wird eine neutrale Lösung von 6 Teilen Ethan-1,2-diamin in 30 Teilen Wasser derart zugetropft, dass der pH-Wert 6 nicht übersteigt. Dieser pH-Wert wird bis zur vollständigen Kondensation durch Zugabe von wässriger Natriumhydroxidlösung konstant gehalten. Man erhält das Kondensationsprodukt der Formel

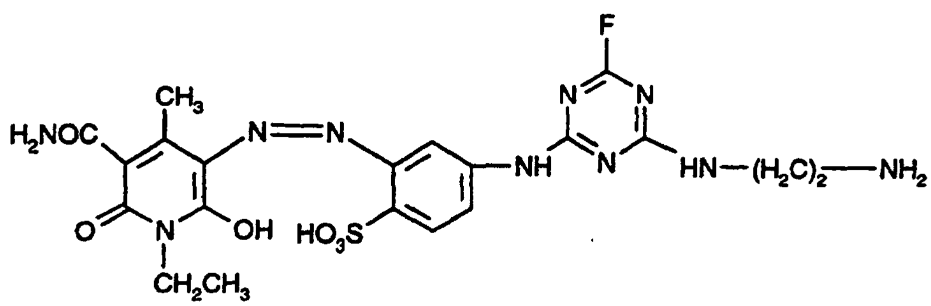

als wässrige Lösung (Lösung 5).

19 Teile Cyanurchlorid werden unter Zugabe eines Netzmittels und 5 Teilen Dinatriumhydrogenphosphat bei einer Temperatur von ca. 0°C in 50 Teilen Wasser verrührt. Man tropft dazu eine neutrale Lösung von 17 Teilen 2-Aminobenzolsulfonsäure in 170 Teilen Wasser und hält dabei den pH-Wert durch Zugabe von wässriger Natriumhydroxidlösung bei 4,5, bis die Umsetzung vollständig ist (Lösung 6).

Lösung 5 wird zu Lösung 6 gegeben und der pH-Wert auf einen Wert von 8,5 erhöht. Diesen hält man durch Zugabe von wässriger Natriumhydroxidlösung konstant, bis die Kondensation beendet ist. Die Reaktionslösung wird dialytisch von anorganischen Salzen befreit und eingedampft Man erhält den Farbstoff gemäss Beispiel 4 in vergleichbarer Ausbeute und Qualität.

Beispiele 4b-4u: Analog wie in den Beispielen 1-4a beschrieben lassen sich die folgenden Reaktivfarbstoffe herstellen.

4b 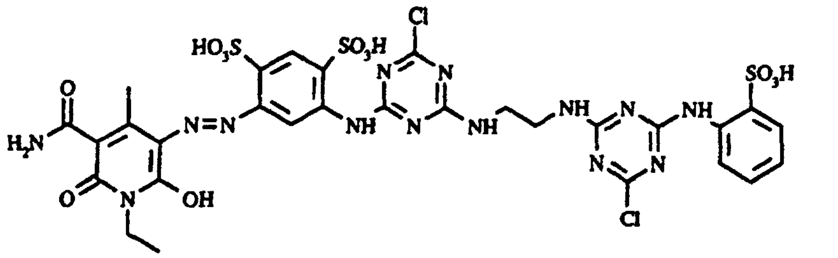 gelb

4c 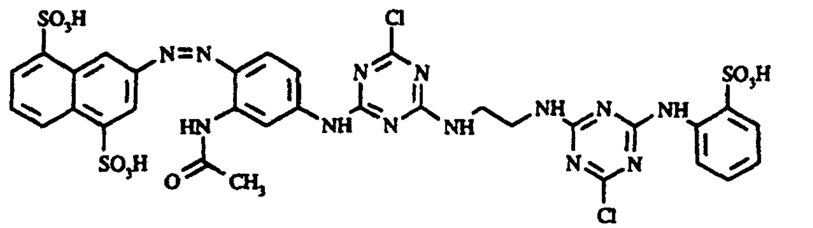 gelb

4d 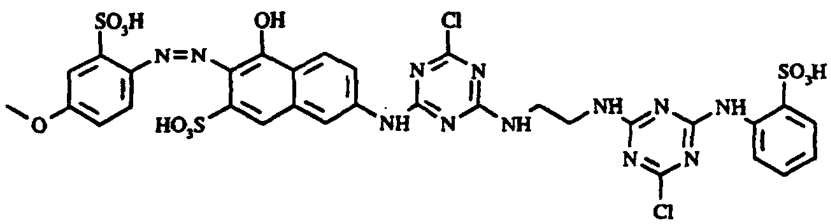 orange

4e 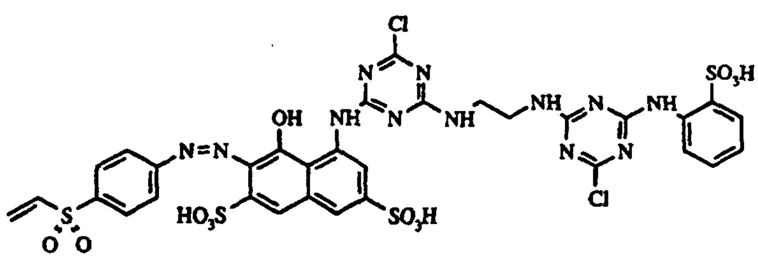 rot

4f 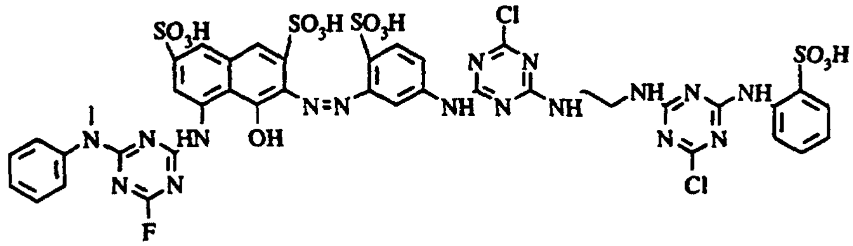 rot

4g 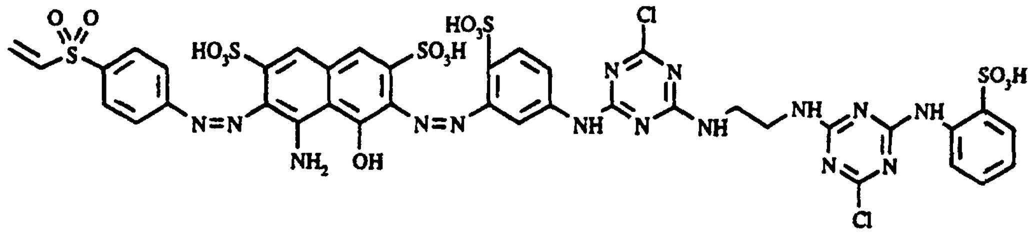

marineblau

4h 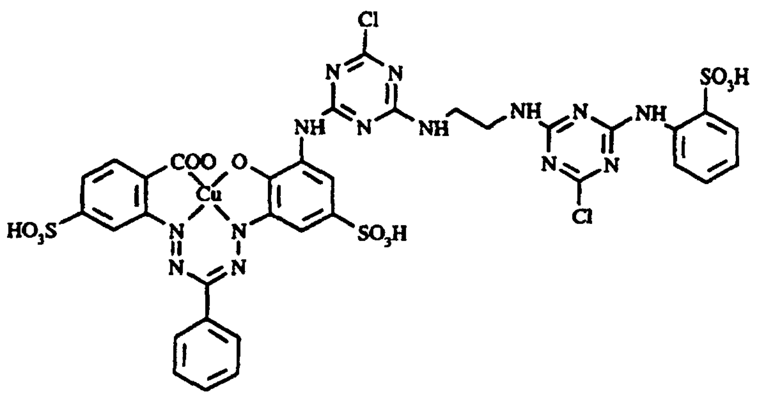 blau

4i 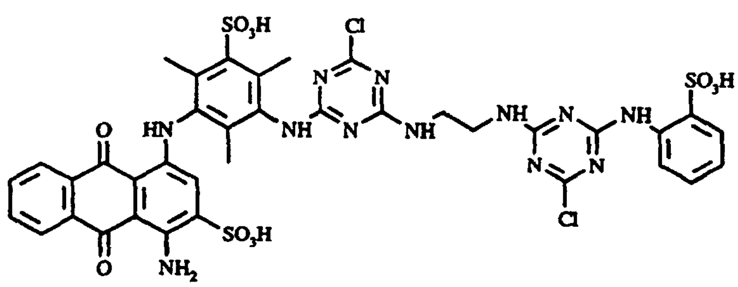 blau

4j 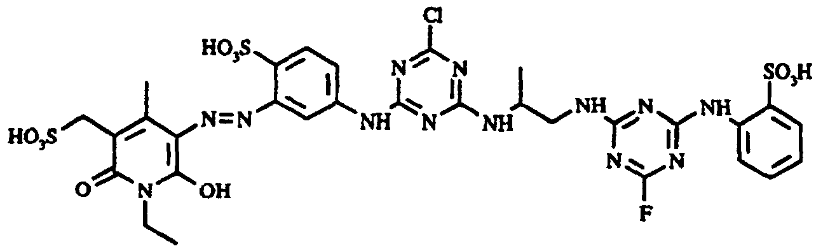 gelb

4k 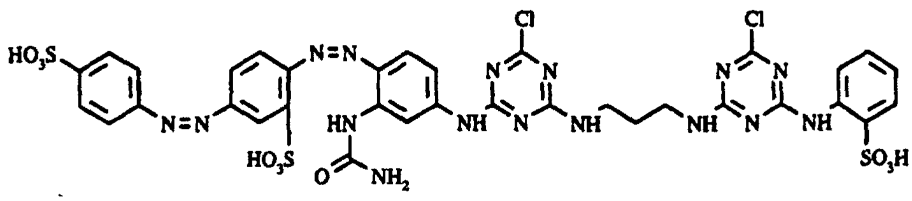

goldgelb

4l 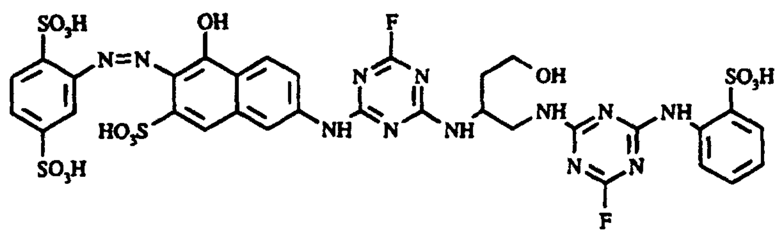 orange

4m 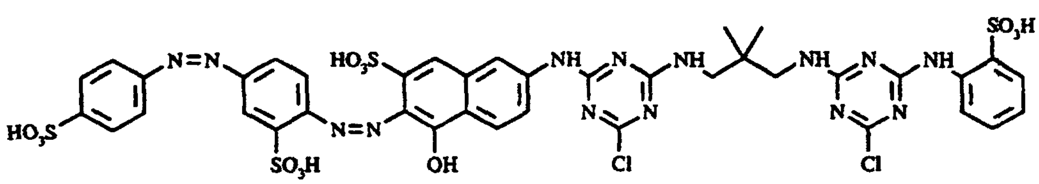

rot

4n 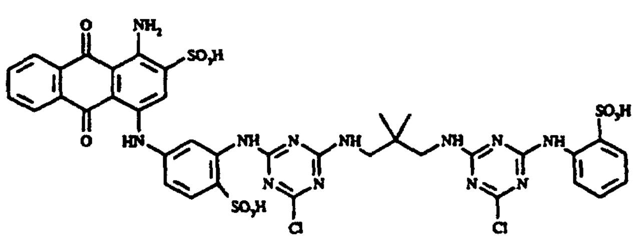 blau

4o 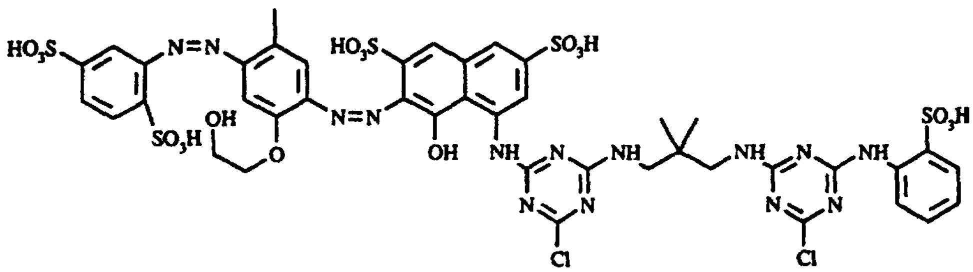

braun

4p 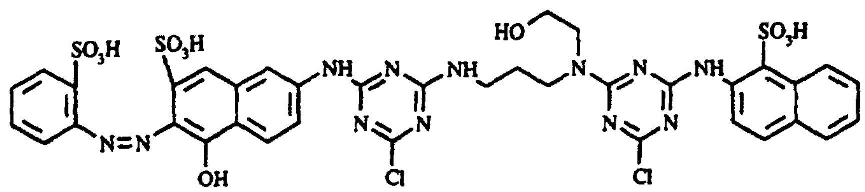 orange

4q 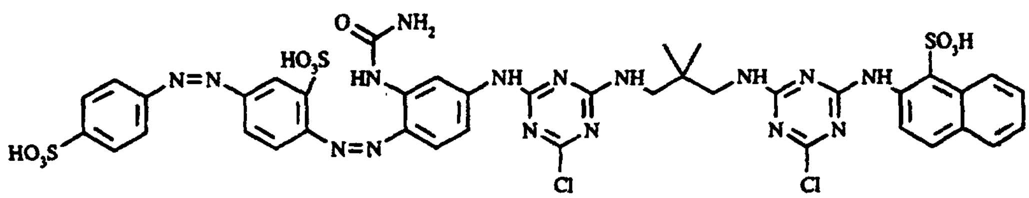

goldgelb

4r 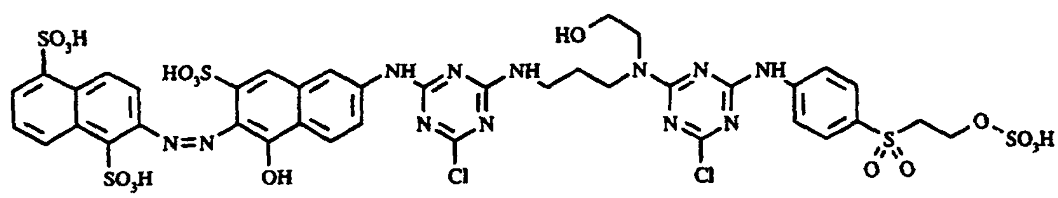

scharlach

4s

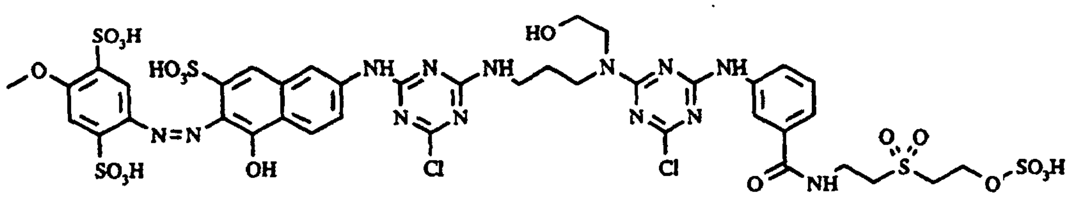

orange

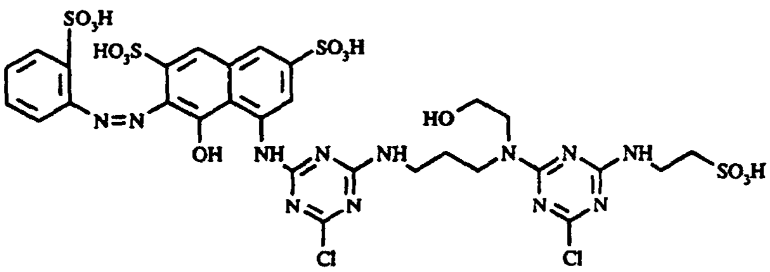

4t

rot

4u

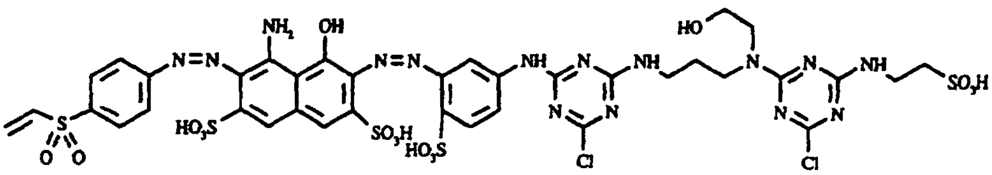

marineblau

Herstellung der Farbstoffmischungen

Beispiel 5:11 Teile Cyanurchlorid werden unter Zugabe eines Netzmittels und 5 Teilen Dinatriumhydrogenphosphat bei einer Temperatur von ca. 0°C in 50 Teilen Wasser verrührt. Man tropft dazu eine neutrale Lösung von 40 Teilen der Aminoazoverbindung der im Beispiel 1 angegebenen Formel (101) in 400 Teilen Wasser und hält dabei den pH-Wert durch Zugabe von wässriger Natriumhydroxidlösung bei 4,5. Nachdem die Kondensation vollständig ist, tropft man eine neutrale Lösung von 4,5 Teilen Ethan-1,2-diamin in 30 Teilen Wasser derart zu, dass der pH-Wert 8,5 nicht übersteigt. Dieser pH-Wert wird bis zur vollständigen Kondensation durch Zugabe von wässriger Natriumhydroxidlösung konstant gehalten und das Reaktionsgemisch am Ende der Reaktion auf 40°C erwärmt. Man erhält das Kondensationsprodukt der Formel

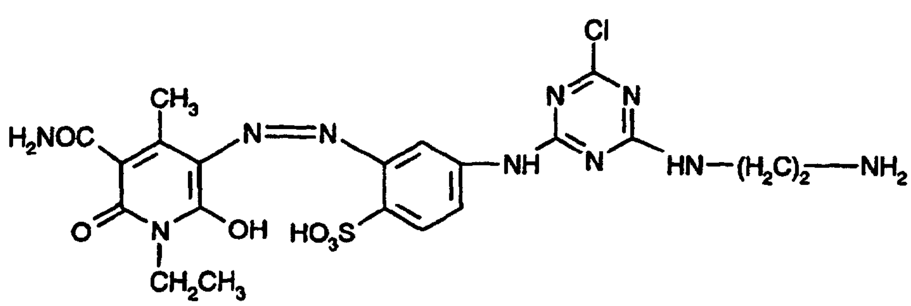

als wässrige Lösung (Lösung 7).

Die oben hergestellte Lösung 7 wird zur halben Menge der gemäss Beispiel (4a) hergestellten Lösung 6 gegeben und der pH-Wert auf einen Wert von 8,5 erhöht. Diesen hält man durch Zugabe von wässriger Natriumhydroxidlösung konstant, bis die Kondensation beendet ist. Die Reaktionslösung wird dialytisch von anorganischen Salzen befreit und eingedampft. Man erhält ein Farbstoffgemisch enthaltend die Verbindungen der Formeln

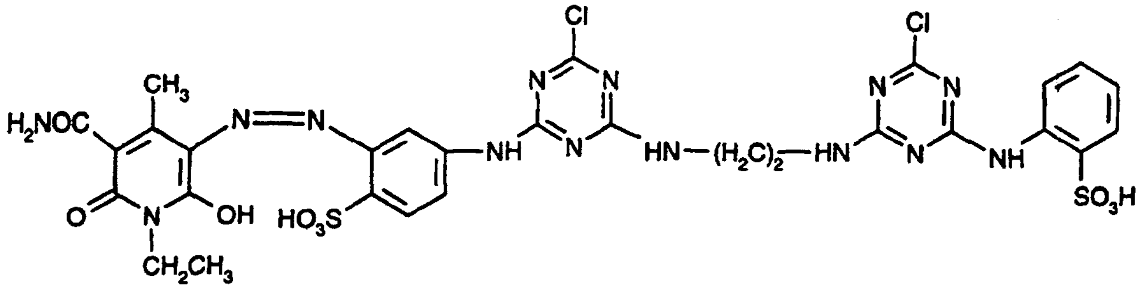

und

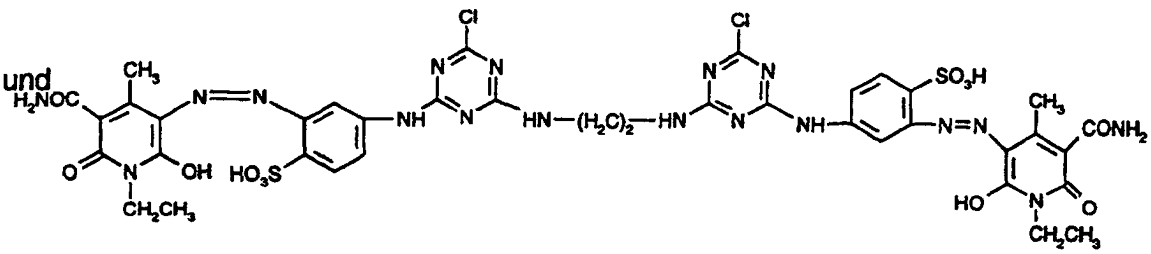

welches Cellulose in einer brillanten gelben Nuance mit guten Allgemeinechtheiten färbt.

Beispiel 6: 7 Teile Cyanurfluorid werden zu einer neutralen Lösung von 8,5 Teilen 2-Aminobenzolsulfonsäure und 2,5 Teilen Dinatriumhydrogenphosphat in 85 Teilen Wasser bei einer Temperatur von ≤2°C zugetropft und der pH-Wert durch Zugabe von wässriger Natriumhydroxidlösung konstant gehalten. Man erhält das primäre Kondensationsprodukt von Cyanurfluorid und 2-Aminobenzolsulfonsäure als wässrige Lösung (Lösung 8).

Zur Lösung 8 gibt man die gemäss Beispiel 5 hergestellte Lösung 7 und erhöht den pH-Wert auf einen Wert von 8,5. Diesen hält man durch Zugabe von wässriger Natriumhydroxidlösung konstant, bis die Kondensation beendet ist. Die Reaktionslösung wird dialytisch von anorganischen Salzen befreit und eingedampft. Man erhält ein Farbstoffgemisch enthaltend die Verbindungen der Formeln

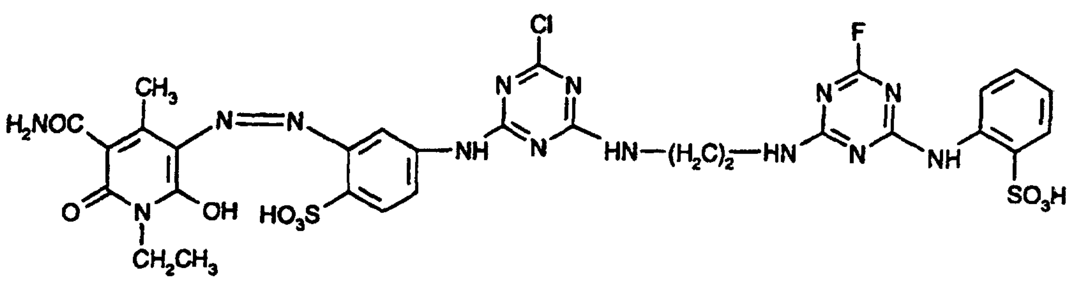

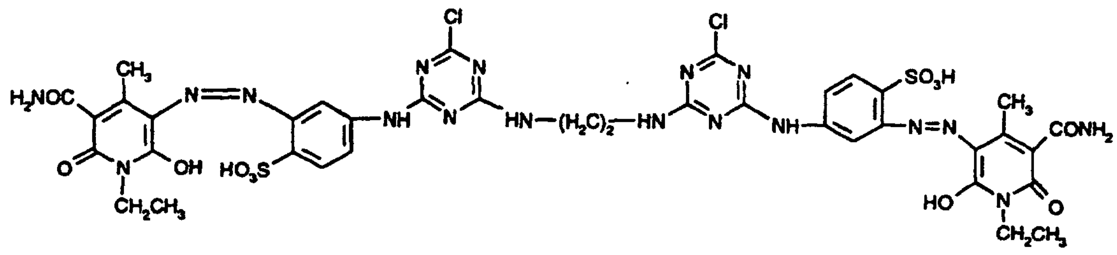

welches Cellulose in einer brillanten gelben Nuance mit guten Allgemeinechtheiten färbt.

Beispiel 7:14 Teile Cyanurfluorid werden zu einer neutralen Lösung von 40 Teilen der Verbindung der Formel (101) und 5 Teilen Dinatriumhydrogenphosphat in 400 Teilen Wasser bei einer Temperatur von ≤2°C zugetropft und der pH-Wert durch Zugabe von wässriger Natriumhydroxidlösung konstant gehalten. Zu der Lösung des primären Kondensationsprodukts von Cyanurfluorid und der Aminoazoverbindung der Formel (101) wird eine neutrale Lösung von 4,5 Teilen Ethan-1,2-diamin in 30 Teilen Wasser derart zugetropft, dass der pH-Wert 8,5 nicht übersteigt. Dieser pH-Wert wird bis zur vollständigen Kondensation durch Zugabe von wässriger Natriumhydroxidlösung konstant gehalten (Lösung 9).

Die oben erhaltene Lösung 9 wird zur halben Menge der gemäss Beispiel (4a) hergestellten Lösung 6 gegeben und der pH-Wert auf einen Wert von 8,5 erhöht. Diesen hält man durch Zugabe von wässriger Natriumhydroxidlösung konstant, bis die Kondensation beendet ist. Die Reaktionslösung wird dialytisch von anorganischen Salzen befreit und eingedampft. Man erhält ein Farbstoffgemisch enthaltend die Verbindungen der Formeln

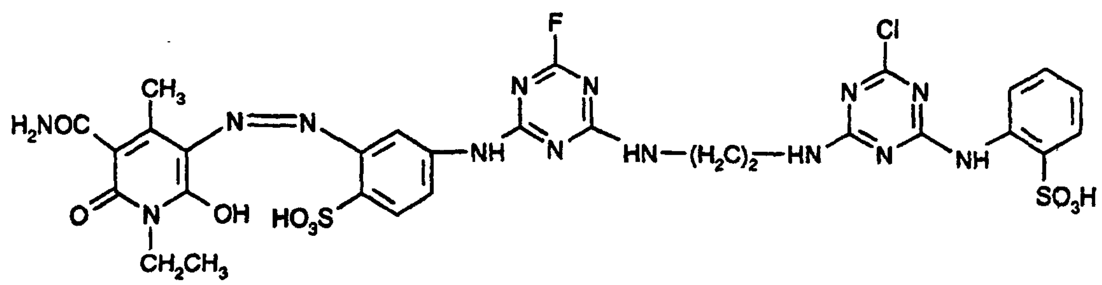

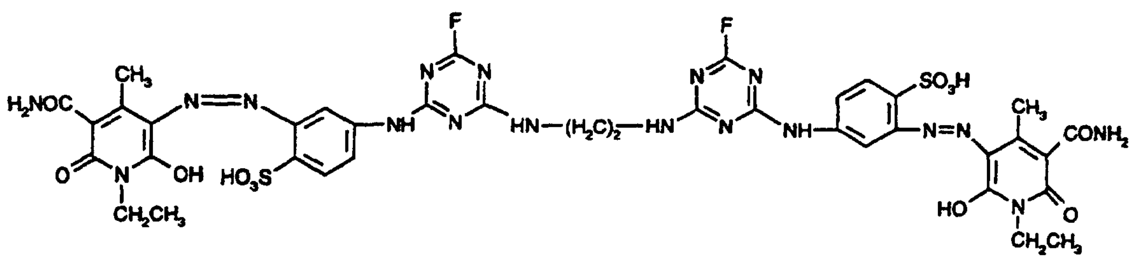

welches Cellulose in einer brillanten gelben Nuance mit guten Allgemeinechtheiten färbt.

Beispiel 8: Die gemäss Beispiel 7 erhaltene Lösung 9 wird zur Lösung 8 gemäss Beispiel 6 gegeben und der pH-Wert auf einen Wert von 8,5 erhöht. Diesen hält man durch Zugabe von wässriger Natriumhydroxidlösung konstant, bis die Kondensation beendet ist Die Reaktionslösung wird dialytisch von anorganischen Salzen befreit und eingedampft. Man erhält ein Farbstoffgemisch enthaltend die Verbindungen der Formeln

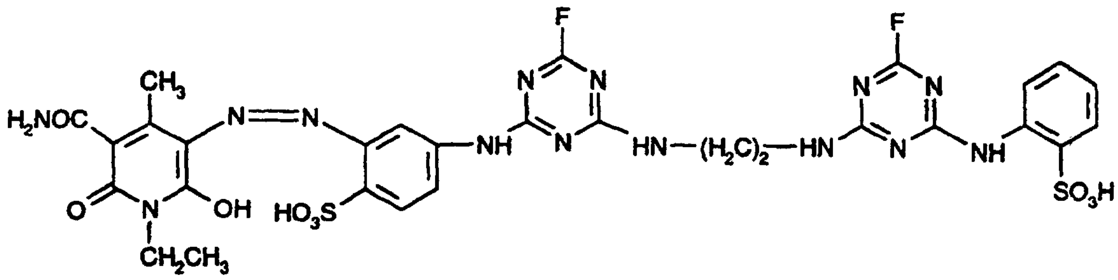

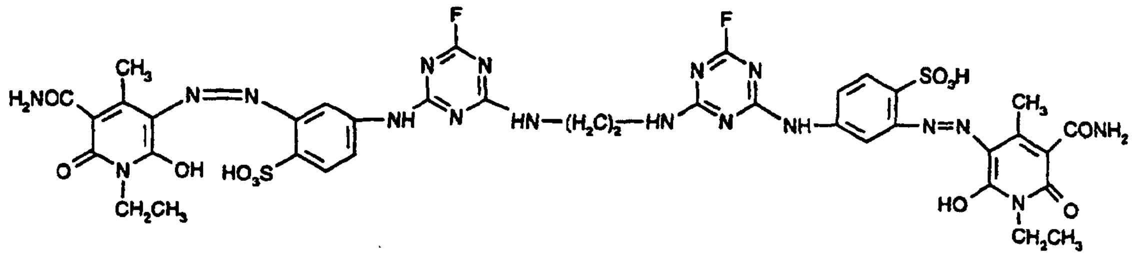

welches Cellulose in einer brillanten gelben Nuance mit guten Allgemeinechtheiten färbt.

Beispiele 9-16I: Verfährt man wie in den Beispielen 5-8 beschrieben und verwendet anstelle der Verbindung der Formel (101) eine äquivalente Menge der in der folgenden Tabelle aufgelisteten aminogruppenhaltigen Chromophore und die entsprechende Triazinverbindung, werden analoge Farbstoffmischungen enthaltend die Verbindungen der Formeln

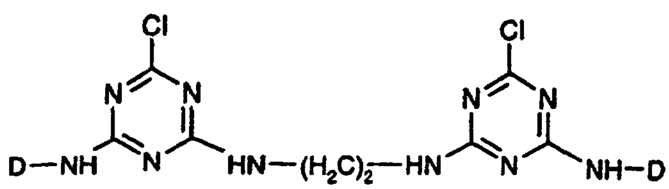

und

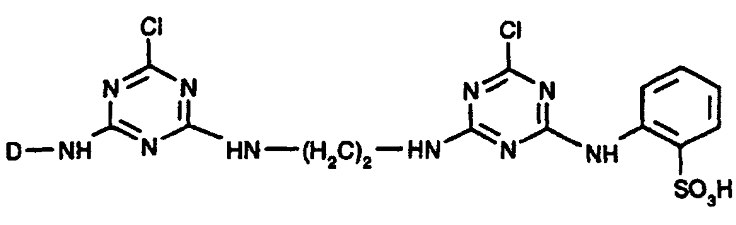

,

worin D die in der Tabelle angegebene Bedeutung hat, erhalten.

| Beispiel Nr. | $D-NH_2$ | Nuance auf Baumwolle |
|---|---|---|
| 9 | 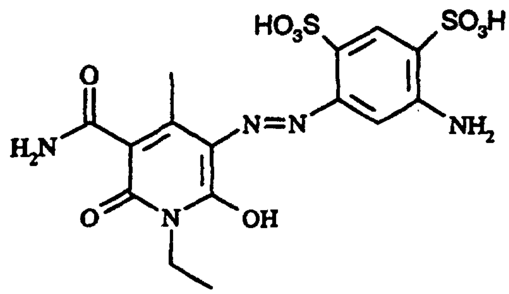 | gelb |
| 9a | 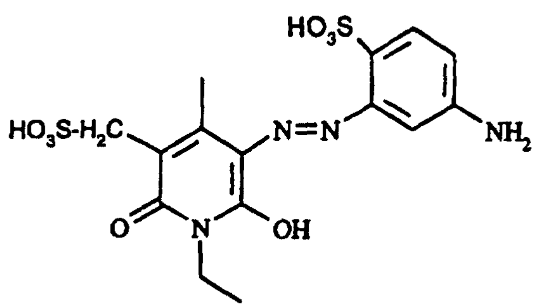 | gelb |
| 9b | 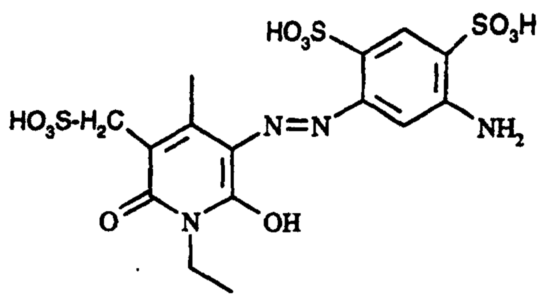 | gelb |
| 10 | 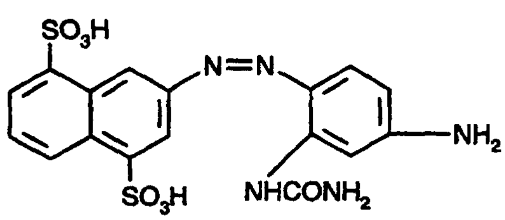 | gelb |

| | | |
|---|---|---|
| 11 | 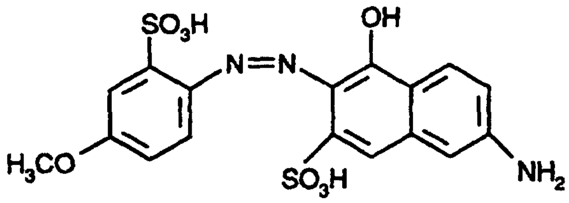 | orange |
| 12 | 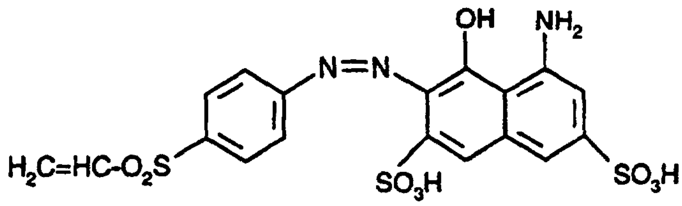 | rot |
| 13 | 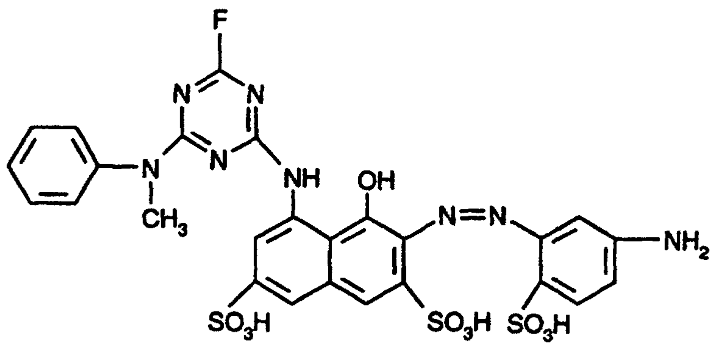 | rot |
| 14 | 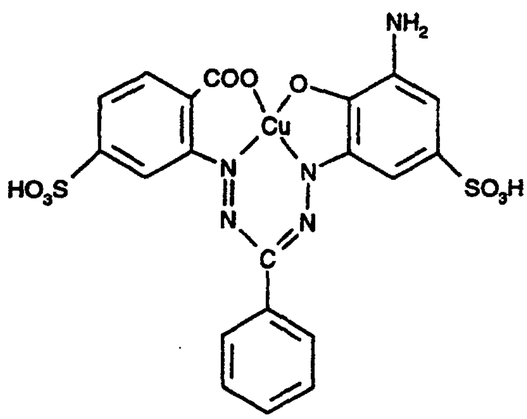 | blau |

15 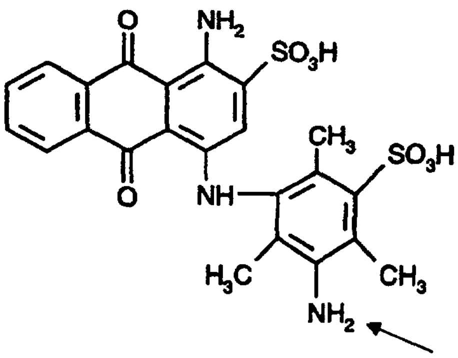 blau

16 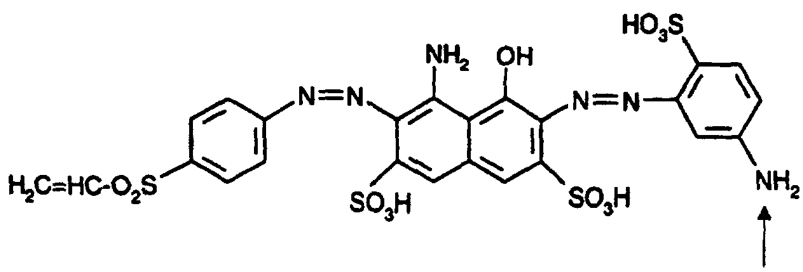 marineblau

16a 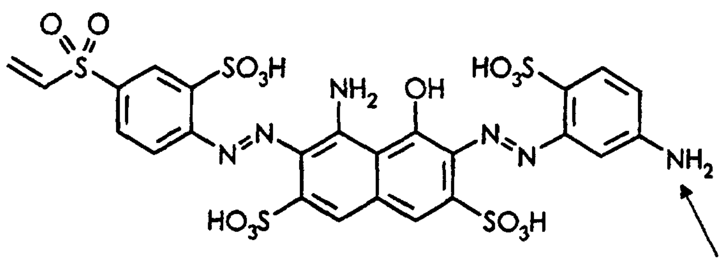 marine

16b 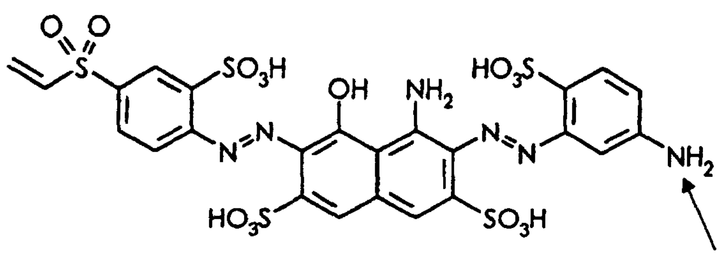 marine

16c 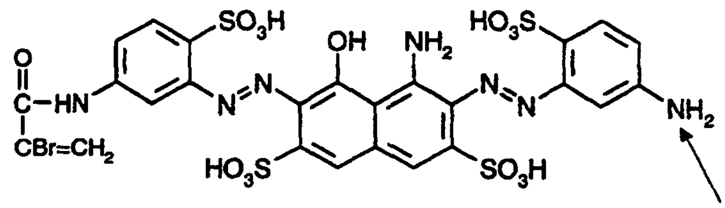 marine

16d 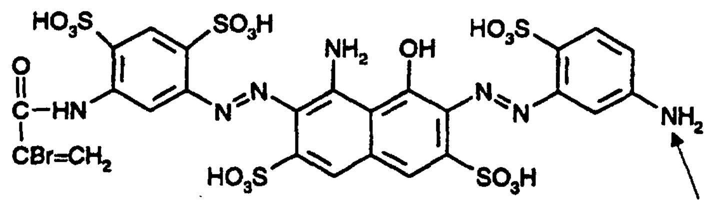 marine

16e 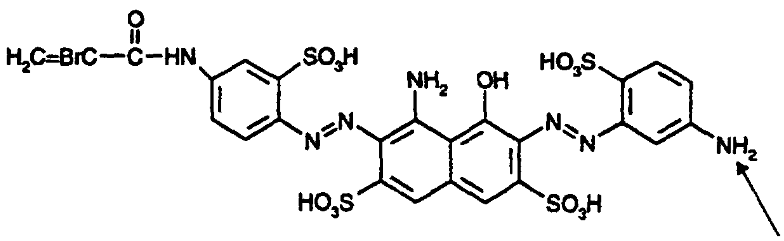 marine

16f 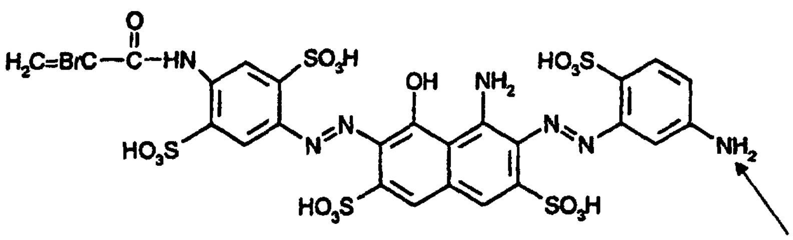 marine

16g 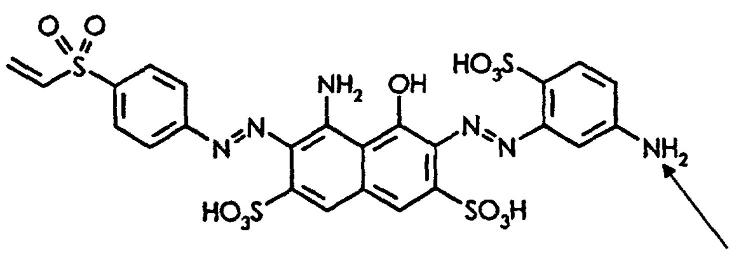 marine

16h 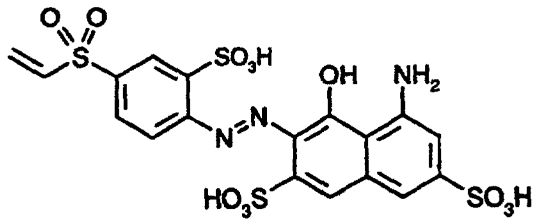 rot

16i 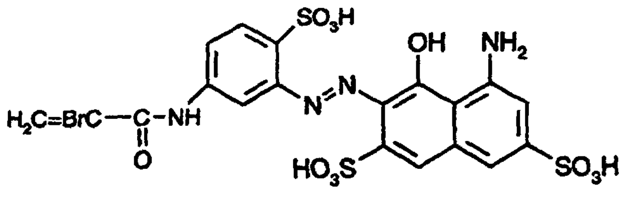 rot

16j 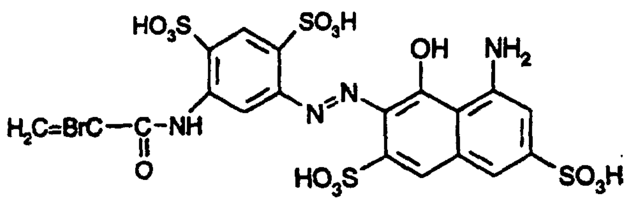 rot

16k 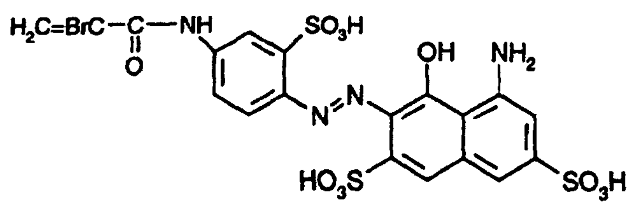 rot

16l 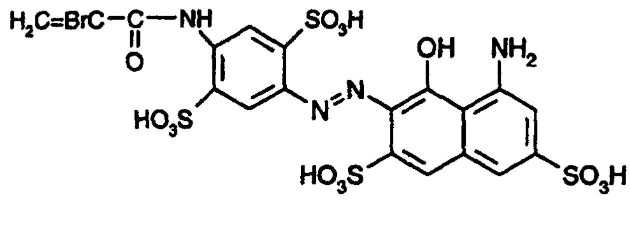 rot

In den Beispielen 15 und 16-16g zeigt der Pfeil jeweils die mit dem Halotriazin kondensierende Aminogruppe D-$NH_2$ an.

Beispiele 17-23: Verfährt man wie in den Beispielen 5-8 beschrieben und verwendet anstelle von Ethan-1,2-diamin und der Verbindung der Formel (101) eine äquivalente Menge der in der folgenden Tabelle aufgelisteten Diamine und aminogruppenhaltigen Chromophore und die entsprechende Halotriazinverbindung, werden analoge Farbstoffmischungen enthaltend die Verbindungen der Formeln

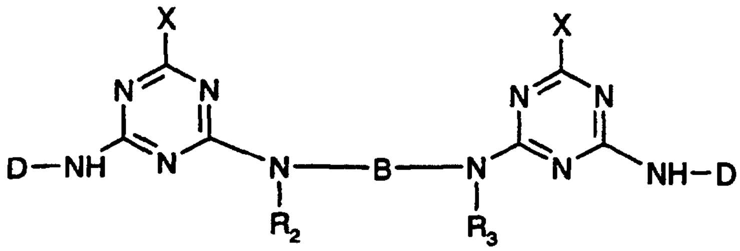

und

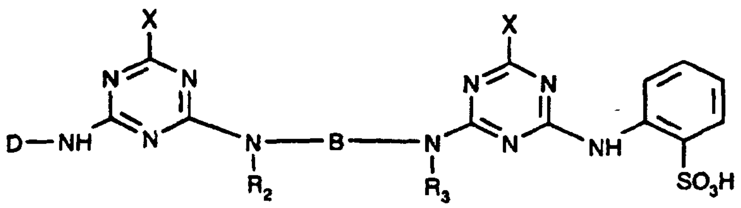

,

worin B, D, $R_2$, $R_3$ und X die in der Tabelle angegebene Bedeutung haben, erhalten.

| Beispiel Nr. | X | D-NH2 | H(R2)N-B-N(R3)H |
|---|---|---|---|
| 17 | F | 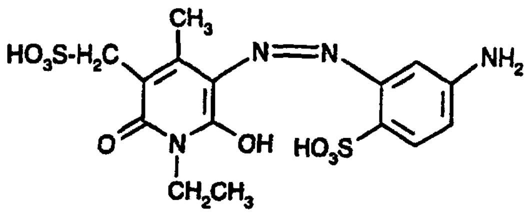 | $H_2N-CH(CH_3)-CH_2-NH_2$ |
| 18 | Cl | 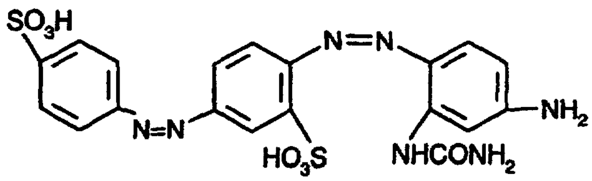 | $H_2N-(CH_2)_3-NH_2$ |
| 19 | F | 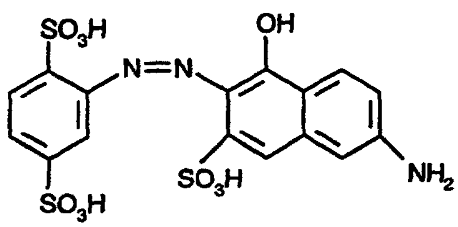 | 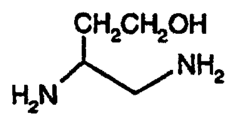 |
| 20 | Cl | 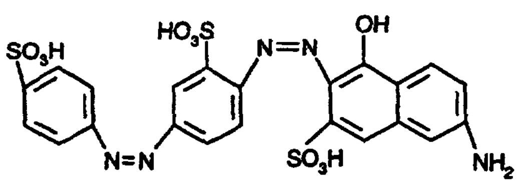 | 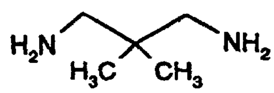 |
| 21 | Cl | 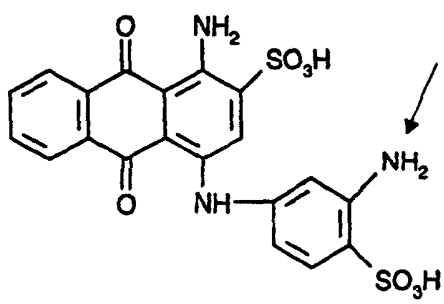 | 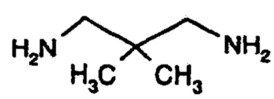 |

| | | | |
|---|---|---|---|
| 22 | Cl | 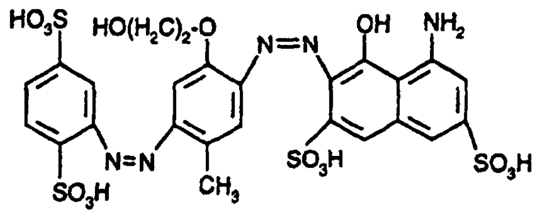 | 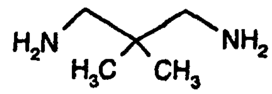 |
| 23 | Cl | 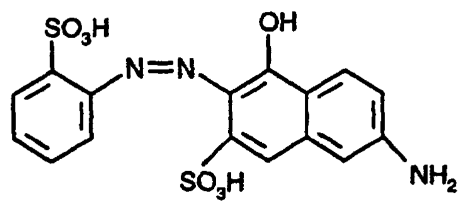 | 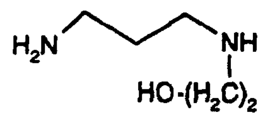 |

Beispiele 24-28: Verfährt man wie in den Beispielen 5-8 beschrieben und verwendet anstelle von Ethan-1,2-diamin, der Verbindung der Formel (101) und 2-Aminobenzolsulfonsäure eine äquivalente Menge der in der folgenden Tabelle aufgelisteten Amine, Diamine und aminogruppenhaltigen Chromophore, werden analoge Farbstoffmischungen enthaltend die Verbindungen der Formeln

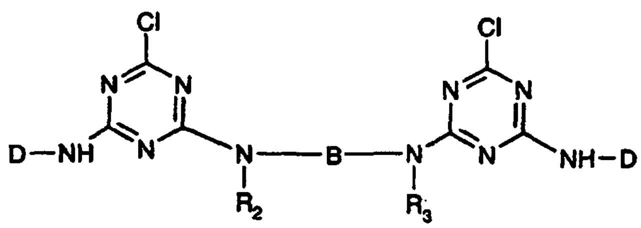

und

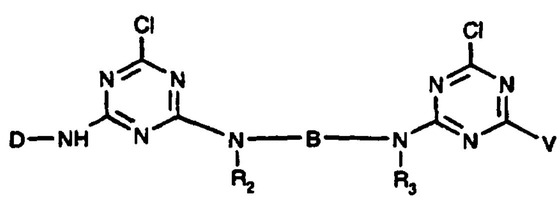

,

worin B, D, $R_2$, $R_3$ und V die in der Tabelle angegebene Bedeutung haben, erhalten.

| Bsp. Nr. | $D\text{-}NH_2$ | $H(R_2)N\text{-}B\text{-}N(R_3)H$ | V-H |
|---|---|---|---|
| 24 | 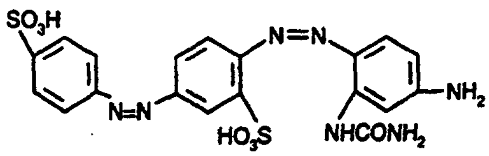 | 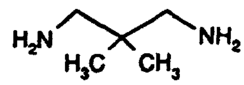 | 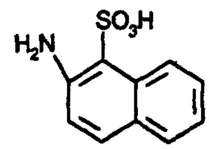 |
| 25 | 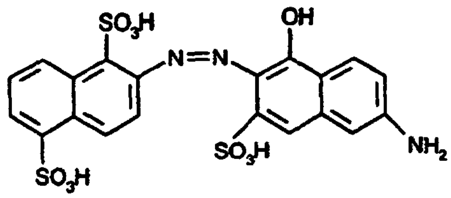 | 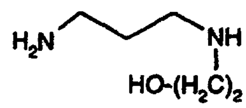 | 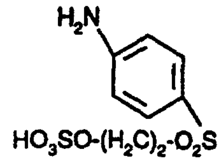 |
| 26 | 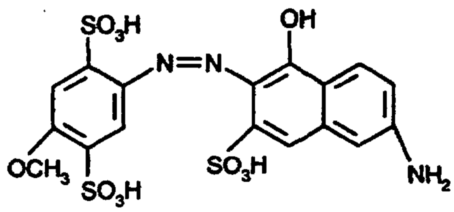 | 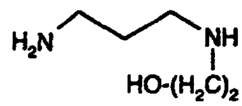 | 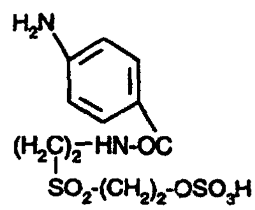 |
| 27 | 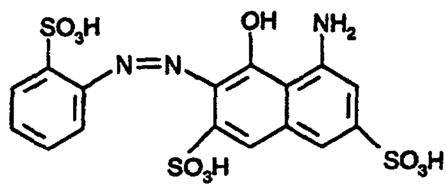 | 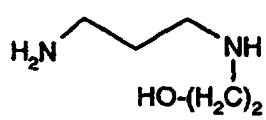 | $NH_2\text{-}CH_2CH_2\text{-}SO_3H$ |
| 28 | 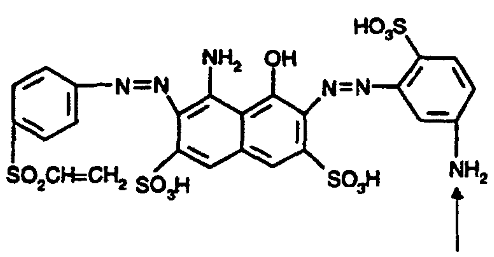 | 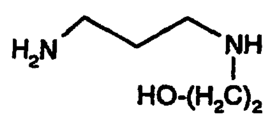 | $NH_2\text{-}CH_2CH_2\text{-}SO_3H$ |

Färbevorschrift I 8 Teile der gemäss Beispiel 8 erhaltenen Reaktivfarbstoffmischung werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10Minuten werden 200Teile einer Lösung, die pro Liter 150 g Trinatriumphosphat enthält, zugegeben. Danach wird die Temperatur des Färbebades innerhalb von 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift II 6 Teile der gemäss Beispiel 5 erhaltenen Reaktivfarbstoffmischung werden in 50 Teilen Wasser gelöst. Dazu gibt man 50 Teile einer Lösung, die pro Liter 16 g Natriumhydroxyd und 0,04 Liter Wasserglas (38°bé) enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift III 2 Teile der gemäss Beispiel 5 erhaltenen Reaktivfarbstoffmischung werden unter Zusatz von 0,5 Teilen m-nitrobenzolsulfonsaurern Natrium in 100 Teilen Wasser gelöst. Mit der erhaltenen Lösung wird ein

Baumwollgewebe imprägniert, so dass es um 75% seines Gewichts zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknen.

Färbevorschrift IV 0,1 Teile Farbstoffmischung gemäss Beispiel 8 werden in 200 Teilen entmineralisiertem Wasser gelöst und 0,5 Teile Glaubersalz, 0,1 Teile eines Egalisiermittels sowie 0,5 Teile Natriumacetat zugegeben. Dann wird mit 80%iger Essigsäure auf pH 5,5 eingestellt. Das Färbebad wird 10 Minuten auf 50°C erwärmt und dann 10 Teile eines Wollgewebes zugegeben. Man erwärmt innerhalb von ca. 50 Minuten auf 100°C und färbt 60 Minuten bei dieser Temperatur. Danach lässt man auf 90°C abkühlen und entnimmt das Färbegut. Das Wollgewebe wird mit warmem und kaltem Wasser gespült, anschliessend geschleudert und getrocknet. Es wird eine brillante gelbe Färbung erhalten, die sehr gute Licht- und Nassechtheiten aufweist.

Druckvorschrift I 5 Teile der gemäss Beispiel 5 erhaltenen Reaktivfarbstoffmischung werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfon - saures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8Minuten bei 102°C in gesättigtem Dampf. Das bedruckte Gewebe wird dann gespült, gegebenenfalls kochend geseift und nochmals gespült, und anschliessend getrocknet.

## Patentansprüche

**1.** Farbstoffmischungen enthaltend mindestens eine Verbindung der Formel

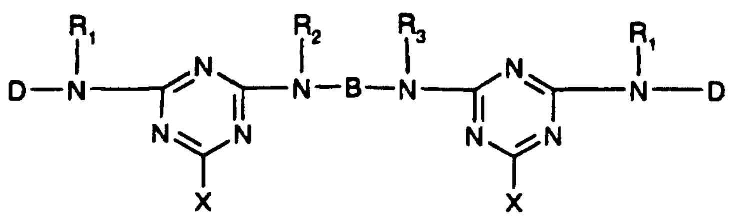

(1)

worin D der Rest eines Monoazo-, Polyazo-, Metallkomplexazo-, Anthrachinon-, Phthalocyanin-, Formazan- oder Dioxazin-Chromophors ist,
$R_1$, $R_2$ und $R_3$ unabhängig voneinander je Wasserstoff oder unsubstituiertes oder durch Hydroxy, Sulfo, Sulfato, Carboxy, Cyano, Halogen, $C_1$-$C_4$-Alkoxycarbonyl oder Carbamoyl substituiertes $C_1$-$C_6$-Alkyl bedeuten,
X für Fluor, Chlor, Brom, 3-Carboxypyridin-1-yl oder 3-Carbamoylpyridin-1-yl steht,
und B ein aliphatisches, cycloaliphatisches, aromatisches oder araliphatisches Brückenglied bedeutet,
und mindestens eine Verbindung der Formel

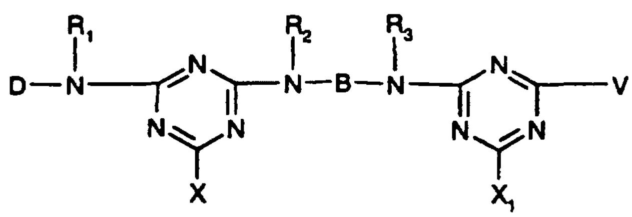

(2)

worin B, D, $R_1$, $R_2$, $R_3$ und X die oben angegebene Bedeutung haben, und
die Reste D in den Verbindungen der Formeln (1) und (2) identisch sind,
X, unabhängig die Bedeutung von X hat,
V für einen nicht-reaktiven Rest aus der Gruppe Hydroxy, $C_1$-$C_4$-Alkoxy, Phenoxy, $C_1$-$C_4$-Alkylthio, Morpholino, Amino, N-$C_1$-$C_4$-Alkylamino oder N,N-Di-$C_1$-$C_4$-Alkylamino, wobei das Alkyl jeweils durch Sulfo, Sulfato, Hydroxy, Carboxy oder Phenyl substituiert sein kann, Cyclohexylamino, Phenylamino oder Naphthylamino, wobei das Phenyl oder Naphthyl jeweils durch $C_1$-$C_4$-Alkyl, $C_1$-$C_4$-Alkoxy, Amino, $C_2$-$C_4$-Alkanoylamino, Carboxy, Sulfo oder Halogen substituiert sein kann, oder N-$C_1$-$C_4$-Alkyl-N-phenylamino, wobei das Alkyl und Phenyl gegebenenfalls wie zuvor geschildert substituiert sein kann, oder
für einen Reaktivrest der Formel

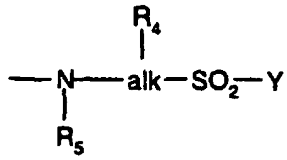
(3a)

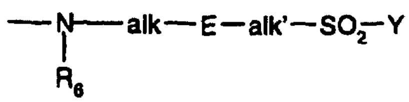
(3b)

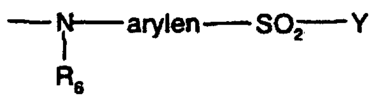
(3c)

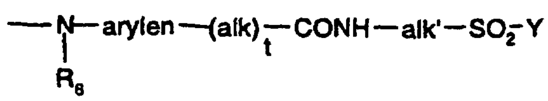
(3d)

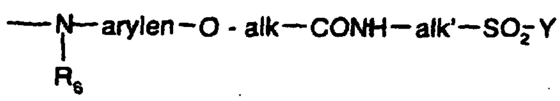
(3e)

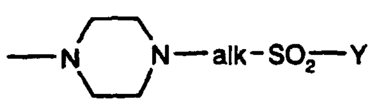
(3f)

oder

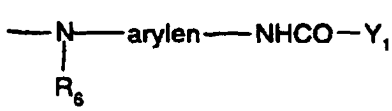
(3g)

steht,

$R_4$ Wasserstoff, Hydroxy, Sulfo, Sulfato, Carboxy, Cyano, Halogen, $C_1$-$C_4$-Alkoxycarbonyl, Carbamoyl oder eine Gruppe -$SO_2$-Y ist,
$R_5$ Wasserstoff, gegebenenfalls durch Hydroxy, Sulfo, Sulfato, Carboxy oder Cyano substituiertes $C_1$-$C_4$-Alkyl oder ein Rest

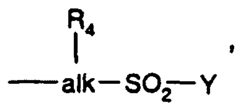

worin $R_4$ die zuvor angegebene Bedeutung hat, ist,
$R_6$ für Wasserstoff oder $C_1$-$C_4$-Alkyl steht,
alk und alk' unabhängig $C_1$-$C_6$-Alkylen sind,
arylen einen unsubstituierten oder durch Sulfo, Carboxy, Hydroxy, $C_1$-$C_4$-Alkyl, $C_1$-$C_4$-Alkoxy oder Halogen substituierten Phenylen- oder Naphthylenrest bedeutet,
Y Vinyl oder einen Rest -$CH_2$-$CH_2$-U bedeutet und U eine Abgangsgruppe ist,
$Y_1$ für eine Gruppe -CHZ-$CH_2$Z oder -CZ=$CH_2$ steht, worin Z Chlor oder Brom bedeutet,
E ein Rest -O- oder -$NR_6$-, worin $R_6$ die oben angegebene Bedeutung hat, ist, und
t für die Zahl 0 oder 1 steht, und worin die Verbindungen der Formeln (1) und (2) jeweils mindestens eine Sulfogruppe aufweisen.

2. Farbstoffmischungen gemäss Anspruch 1, **dadurch gekennzeichnet, dass** $R_1$, $R_2$ und $R_3$ unabhängig voneinander je Wasserstoff oder unsubstituiertes oder durch Hydroxy substituiertes $C_1$-$C_4$-Alkyl und vorzugsweise Wasserstoff, Methyl, Ethyl oder Hydroxyethyl bedeuten.

3. Farbstoffmischungen gemäss Anspruch 1 oder 2, **dadurch gekennzeichnet, dass** B geradkettiges oder verzweigtes und gegebenenfalls durch Hydroxy, Sulfo oder Sulfato substituiertes oder durch -O-, -NH- oder -N($CH_3$)- unterbrochenes $C_2$-$C_{12}$-Alkylen bedeutet.

4. Farbstoffmischungen gemäss einem der Ansprüche 1 bis 3, **dadurch gekennzeichnet, dass** B geradkettiges oder verzweigtes $C_2$-$C_6$-Alkylen, welches unsubstituiert und ununterbrochen oder durch Hydroxy substituiert oder durch -O- unterbrochen ist, bedeutet.

5. Farbstoffmischungen gemäss einem der Ansprüche 1 bis 4, **dadurch gekennzeichnet, dass** B geradkettiges oder verzweigtes $C_2$-$C_6$-Alkylen bedeutet.

6. Farbstoffmischungen gemäss einem der Ansprüche 1 bis 5, **dadurch gekennzeichnet, dass** X und $X_1$ unabhängig voneinander je Chlor oder Fluor bedeuten.

7. Farbstoffmischungen gemäss einem der Ansprüche 1 bis 6, **dadurch gekennzeichnet, dass** V Hydroxy, $C_1$-$C_4$-Alkoxy, Morpholino, Amino; unsubstituiertes oder im Alkylteil durch Sulfo, Sulfato, Hydroxy, Carboxy oder Phenyl substituiertes N-$C_1$-$C_4$-Alkylamino oder N,N-Di-$C_1$-$C_4$-Alkylamino, Cyclohexylamino; unsubstituiertes oder im Phenyl- oder Naphthylteil durch $C_1$-$C_4$-Alkyl, $C_1$-$C_4$-Alkoxy, Amino, $C_2$-$C_4$-Alkanoylamino, Carboxy, Sulfo oder Halogen substituiertes Phenylamino oder Naphthylamino, unsubstituiertes oder im Alkylteil durch Sulfo, Sulfato, Hydroxy, Carboxy oder Phenyl substituiertes und/oder im Phenylteil durch $C_1$-$C_4$-Alkyl, $C_1$-$C_4$-Alkoxy, Amino, $C_2$-$C_4$-Alkanoylamino, Carboxy, Sulfo oder Halogen substituiertes N-$C_1$-$C_4$-Alkyl-N-phenylamino oder ein Reaktivrest der Formel

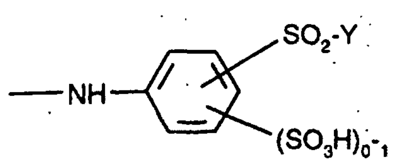

(3c')

oder

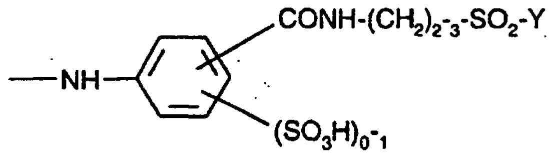

(3d')

worin Y die im Anspruch 1 genannte Bedeutung hat, ist.

**8.** Farbstoffmischungen gemäss einem der Ansprüche 1 bis 7, **dadurch gekennzeichnet, dass** V Amino, unsubstituiertes oder durch Hydroxy, Sulfo oder Sulfato substituiertes N-$C_1$-$C_2$-Alkylamino, durch 1 oder 2 gleiche oder verschiedene Substituenten aus der Gruppe Sulfo, Methyl und Methoxy substituiertes Phenylamino, durch 1 bis 3 Sulfogruppen substituiertes 2-Naphthylamino oder einen faserreaktiven Rest der im Anspruch 7 angegebenen Formel (3c') oder (3d'), worin Y Vinyl oder β-Sulfatoethyl ist, bedeutet.

**9.** Farbstoffmischungen gemäss einem der Ansprüche 1 bis 8, **dadurch gekennzeichnet, dass** D einen Chromophorrest der Formel

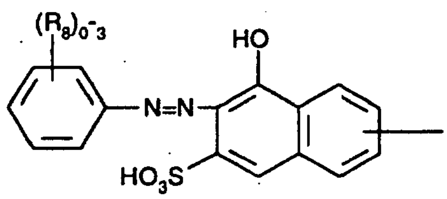

(8a),

worin $(R_8)_{0-3}$ für 0 bis 3 gleiche oder verschiedene Substituenten aus der Gruppe $C_1$-$C_4$-Alkyl, $C_1$-$C_4$-Alkoxy, Halogen, Carboxy und Sulfo steht,

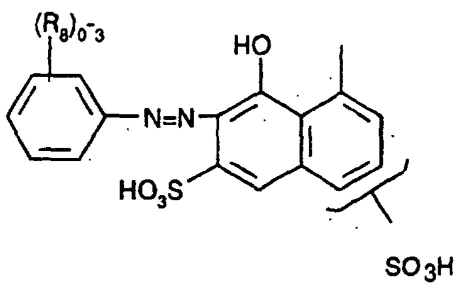

(8b),

worin $(R_8)_{0-3}$ die zuvor angegebene Bedeutung hat,

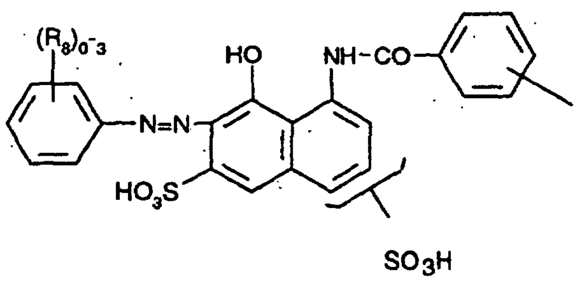

(8c),

worin $(R_8)_{0-3}$ die zuvor ahgegebene Bedeutung hat,

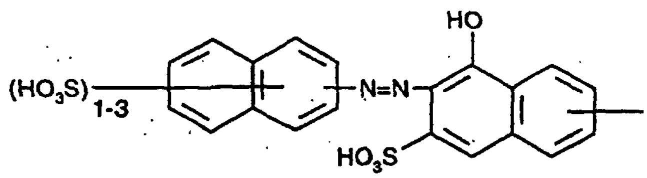

(8d),

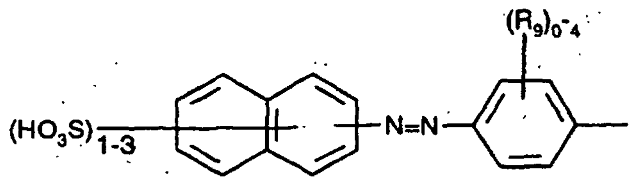

(8e),

worin $(R_9)_{0-4}$ für 0 bis 4 gleiche oder verschiedene Substituenten aus der Gruppe Halogen, Nitro, Cyan, Trifluormethyl, Sulfamoyl, Carbamoyl, $C_1$-$C_4$-Alkyl, $C_1$-$C_4$-Alkoxy, Amino, Acetylamino, Ureido, Hydroxy, Carboxy, Sulfomethyl und Sulfo steht,

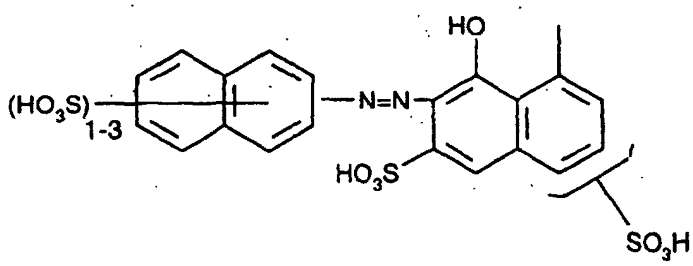

(8f),

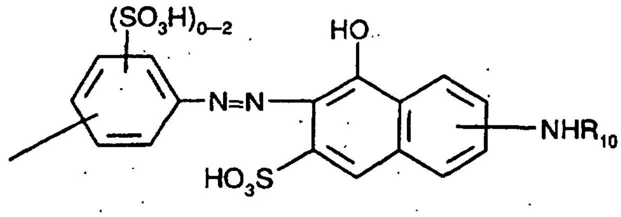

(8g),

worin $R_{10}$ $C_1$-$C_4$-Alkanoyl, Benzoyl oder ein Halogentriazinylrest der Formel

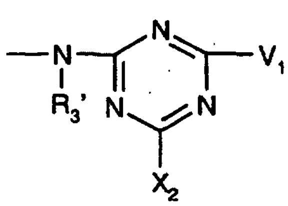

(5g)

ist, $V_1$ unabhängig die im Anspruch 1 für V angegebenen Bedeutung hat, $X_2$ unabhängig die im Anspruch 1 für X angegebene Bedeutung hat und $R_3$' unabhängig die im Anspruch 1 für $R_3$ angegebene Bedeutung hat,

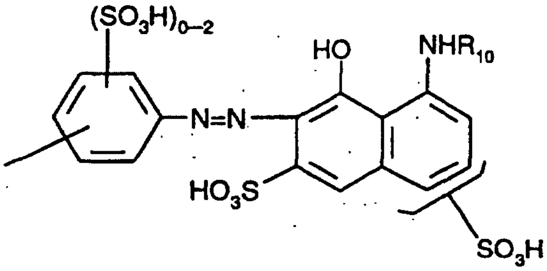

(8h),

worin $R_{10}$ $C_1$-$C_4$-Alkanoyl, Benzoyl oder ein Halogentriazinylrest der oben angegebenen Formel (5g) ist,

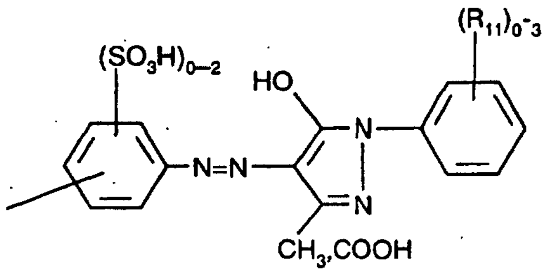

(8i),

worin $(R_{11})_{0-3}$ für 0 bis 3 gleiche oder verschiedene Substituenten aus der Gruppe $C_1$-$C_4$-Alkyl, $C_1$-$C_4$-Alkoxy, Halogen, Carboxy und Sulfo steht,

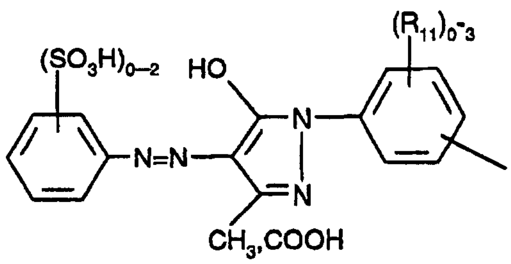

(8j),

worin $(R_{11})_{0-3}$ die oben angegebene Bedeutung hat,

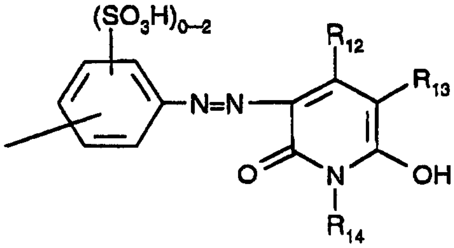

(8k),

worin $R_{12}$ und $R_{14}$ unabhängig voneinander Wasserstoff, $C_1$-$C_4$-Alkyl oder Phenyl, und $R_{13}$ Wasserstoff, Cyano, Carbamoyl oder Sulfomethyl ist,

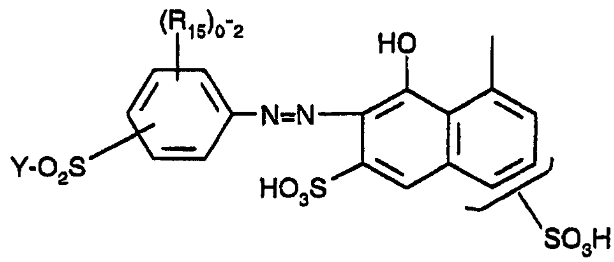

(8l),

worin $(R_{15})_{0-2}$ für 0 bis 2 gleiche oder verschiedene Substituenten aus der Gruppe $C_1$-$C_4$-Alkyl, $C_1$-$C_4$-Alkoxy, Halogen, Carboxy und Sulfo steht; und Y die im Anspruch 1 angegebene Bedeutung hat,

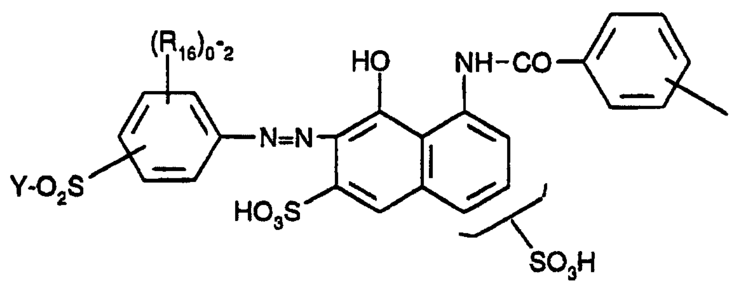

(8m),

worin $(R_{16})_{0-2}$ für 0 bis 2 gleiche oder verschiedene Substituenten aus der Gruppe $C_1$-$C_4$-Alkyl, $C_1$-$C_4$-Alkoxy, Halogen, Carboxy und Sulfo steht; und Y die im Anspruch 1 angegebene Bedeutung hat,

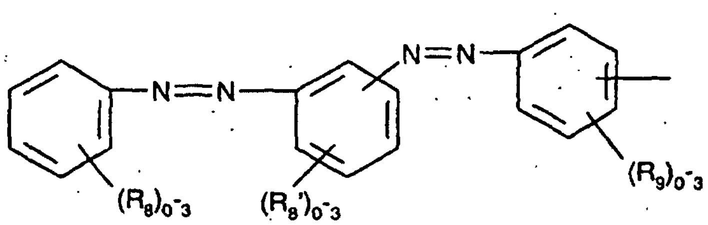

(8n)

oder

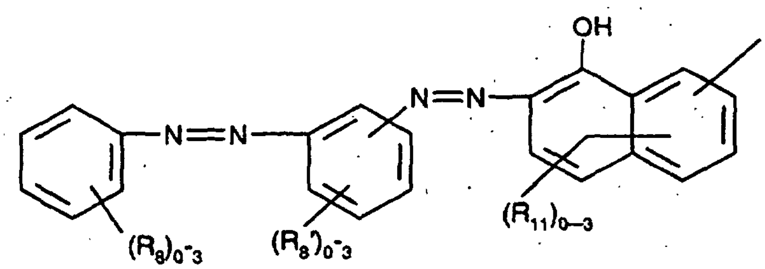

(8o)

oder

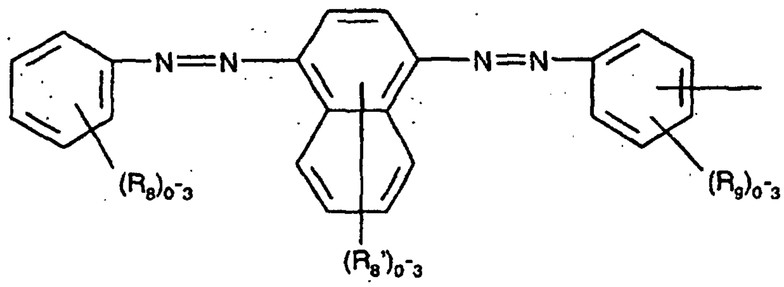

(8p)

oder

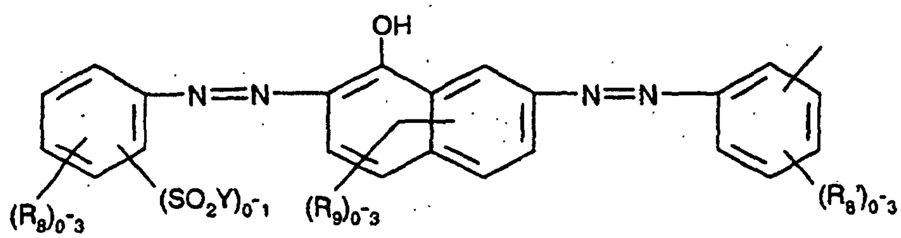

(8q),

worin $(R_8)_{0-3}$, $(R_9)_{0-3}$ und Y jeweils die oben angegebene Bedeutung haben und $(R_8')_{0-3}$ für 0 bis 3 gleiche oder verschiedene Substituenten aus der Gruppe $C_1$-$C_4$-Alkyl, $C_1$-$C_4$-Alkoxy, Halogen, Carboxy, Sulfo, $C_1$-$C_4$-Hydroxyalkoxy und $C_1$-$C_4$-Sulfatoalkoxy steht,

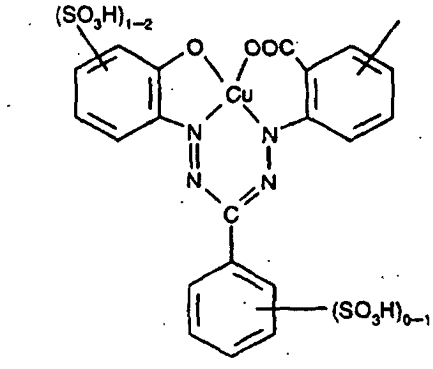

(8r)

oder

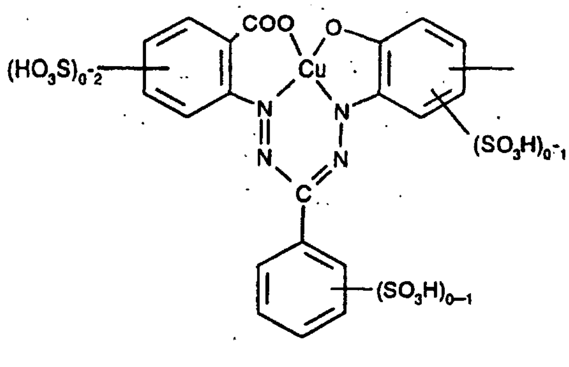

(8s),

worin die Benzolkerne keine weiteren Substituenten enthalten oder durch $C_1$-$C_4$-Alkyl, $C_1$-$C_4$-Alkoxy, $C_1$-$C_4$-Alkylsulfonyl, Halogen oder Carboxy weitersubstituiert sind,

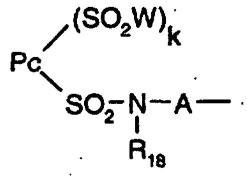

(9),

worin Pc der Rest eines Metallphthalocyanins, insbesondere der Rest eines Kupfer- oder Nickelphthalocyanins; W -OH und/oder -$NR_{17}R_{17}'$; $R_{17}$ und $R_{17}'$ unabhängig voneinander Wasserstoff oder gegebenenfalls durch Hydroxy oder Sulfo substituiertes $C_1$-$C_4$-Alkyl; $R_{18}$ Wasserstoff oder $C_1$-$C_4$-Alkyl; A ein gegebenenfalls durch $C_1$-$C_4$-Alkyl, Halogen, Carboxy oder Sulfo substituierter Phenylenrest oder ein $C_2$-$C_8$-Alkylenrest; und k 1 bis 3 sind,

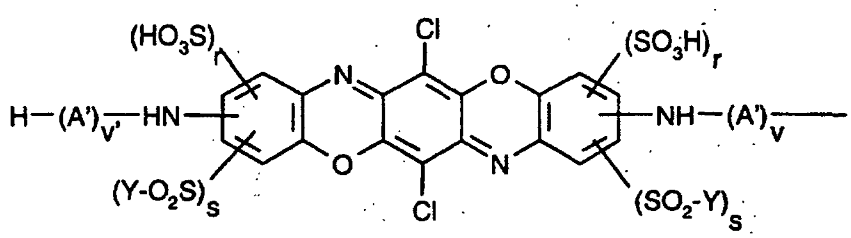

(10),

worin A' ein gegebenenfalls durch $C_1$-$C_4$-Alkyl, Halogen, Carboxy oder Sulfo substituierter Phenylenrest oder ein $C_2$-$C_6$-Alkylenrest ist, r, s, v und v' unabhängig voneinander je die Zahl 0 oder 1 bedeuten und Y die zuvor angegebene Bedeutung hat, oder

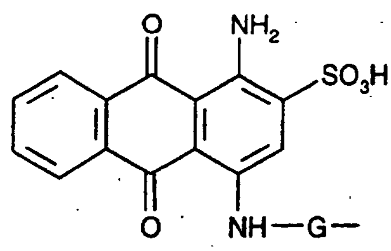

(11),

worin G ein unsubstituierter oder durch $C_1$-$C_4$-Alkyl, $C_1$-$C_4$-Alkoxy, Halogen, Carboxy oder Sulfo substituierter Phenylenrest oder ein Cyclohexylen-, Phenylenmethylen- oder $C_2$-$C_6$-Alkylenrest ist, bedeutet.

**10.** Farbstoffmischungen gemäss einem der Ansprüche 1 bis 9, **dadurch gekennzeichnet, dass** D einen Chromophorrest der im Anspruch 9 angegebenen Formel (8a), (8b), (8f), (8g), (8h), (8k), (8l), (8n), (8o), (8p) oder (8q), (8r) oder (8s) oder (11) bedeutet.

**11.** Farbstoffmischungen gemäss Anspruch 1 enthaltend je mindestens eine Verbindung der Formeln (1) und (2), worin D ein Chromophorrest der im Anspruch 9 angegebenen Formel (8a) bis (8s), (9), (10) oder (11) ist, B für geradkettiges oder verzweigtes $C_2$-$C_{12}$-Alkylen, welches gegebenenfalls durch Hydroxy, Sulfo oder Sulfato substituiert oder durch -O-, -NH- oder -$N(CH_3)$- unterbrochen ist, steht, $R_1$, $R_2$ und $R_3$ unabhängig voneinander je Wasserstoff oder unsubstituiertes oder durch Hydroxy substituiertes $C_1$-$C_4$-Alkyl bedeuten, X und $X_1$ unabhängig voneinander je Fluor oder Chlor sind, und V Hydroxy, $C_1$-$C_4$-Alkoxy, Morpholino, Amino; unsubstituiertes oder im Alkylteil durch Sulfo, Sulfato, Hydroxy, Carboxy oder Phenyl substituiertes N-$C_1$-$C_4$-Alkylamino oder N,N-Di-$C_1$-$C_4$-Alkylamino, Cyclohexylamino; unsubstituiertes oder im Phenyl- oder Naphthylteil durch $C_1$-$C_4$-Alkyl, $C_1$-$C_4$-Alkoxy, Amino, $C_2$-$C_4$-Alkanoylamino, Carboxy, Sulfo oder Halogen substituiertes Phenylamino oder Naphthylamino, unsubstituiertes oder im Alkylteil durch Sulfo, Sulfato, Hydroxy, Carboxy oder Phenyl substituiertes und/oder im Phe-

nylteil durch $C_1$-$C_4$-Alkyl, $C_1$-$C_4$-Alkoxy, Amino, $C_2$-$C_4$-Alkanoylamino, Carboxy, Sulfo oder Halogen substituiertes N-$C_1$-$C_4$-Alkyl-N-phenylamino oder einen Reaktivrest der im Anspruch 7 angegebenen Formel (3c') oder (3d') bedeutet.

**12.** Farbstoffmischungen gemäss Anspruch 1 enthaltend je mindestens eine Verbindung der Formeln (1) und (2) im Gewichtsverhältnis von 10:90 bis 90:10, worin D ein Chromophorrest der im Anspruch 9 angegebenen Formel (8a), (8b), (8f), (8g), (8h), (8k), (8l), (8n), (8o), (8p), (8q), (8r), (8s) oder (11) ist, B für geradkettiges oder verzweigtes $C_2$-$C_6$-Alkylen steht, $R_1$, $R_2$ und $R_3$ unabhängig voneinander je Wasserstoff, Methyl, Ethyl oder Hydroxyethyl bedeuten, X und $X_1$ unabhängig voneinander je Fluor oder Chlor sind, und V Amino, unsubstituiertes oder durch Hydroxy, Sulfo oder Sulfato substituiertes N-$C_1$-$C_2$-Alkylamino, durch 1 oder 2 gleiche oder verschiedene Substituenten aus der Gruppe Sulfo, Methyl und Methoxy substituiertes Phenylamino, durch 1 bis 3 Sulfogruppen substituiertes 2-Naphthylamino oder einen faserreaktiven Rest der im Anspruch 7 angegebenen Formel (3c') oder (3d') bedeutet.

**13.** Verfahren zur Herstellung der Farbstoffmischungen gemäss Anspruch 1, **dadurch gekennzeichnet, dass** man 1 Moläquivalent einer Verbindung der Formel

$$D - NH - R_1 \quad (12)$$

zunächst mit in etwa 1 Moläquivalent Halotriazin der Formel

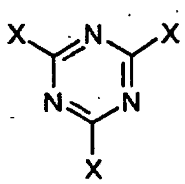

(15a)

und 0,5 bis 1 Moläquivalenten eines Diamins der Formel

$$R_2\text{-HN-B-NH-}R_3 \quad (13)$$

zu einem Gemisch enthaltend eine Verbindung der im Anspruch 1 angegebenen Formel (1) und eine Verbindung der Formel

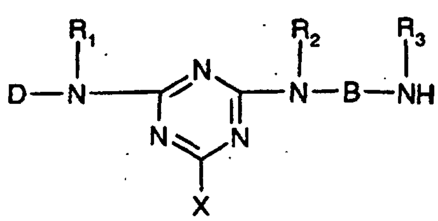

(16)

umsetzt und die im Gemisch enthaltene Verbindung der Formel (16) mit dem Umsetzungsprodukt der Verbindungen der Formeln

$$V\text{-H} \quad (14)$$

und

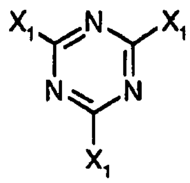

(15b)

reagieren lässt, wobei B, D, $R_1$, $R_2$, $R_3$, V, X und $X_1$ jeweils die in Anspruch 1 angegebene Bedeutung haben.

**14.** Verwendung der Farbstoffmischungen gemäss einem der Ansprüche 1 bis 12 zum Färben oder Bedrucken von hydroxylgruppenhaltigen oder stickstoffhaltigen Fasermaterialien.

## Claims

**1.** A dye mixture comprising at least one compound of the formula

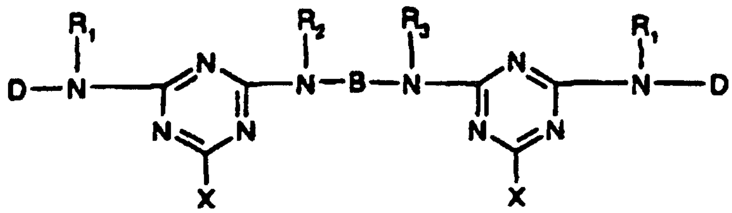

(1)

in which D is the radical of a monoazo, polyazo, metal complex azo, anthraquinone, phthalocyanine, formazan or dioxazine chromophore,
$R_1$, $R_2$ and $R_3$ independently of one another are each hydrogen or unsubstituted or hydroxy-, sulfo-, sulfato-, carboxy-, cyano-, halo-, $C_1$-$C_4$alkoxycarbonyl- or carbomoyl-substituted $C_1$-$C_6$alkyl,
X is fluorine, chlorine, bromine, 3-carboxypyridin-1-yl or 3-carbamoylpyridin-1-yl, and B is an aliphatic, cycloaliphatic, aromatic or araliphatic and at least one compound of the formula

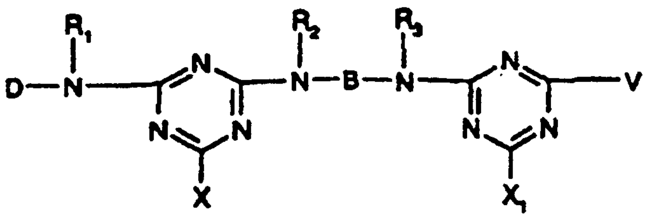

(2)

in which B, D, $R_1$, $R_2$, $R_3$ and X are as defined above, and the radicals D in the compounds of the formulae (1) and (2) are identical,
$X_1$ independently is as defined for X,
V is a non-reactive radical selected from the group consisting of hydroxyl, $C_1$-$C_4$alkoxy, phenoxy, $C_1$-$C_4$alkylthio, morpholino, amino, N-$C_1$-$C_4$alkylamino and N,N-di-$C_1$-$C_4$alkylamino, it being possible for each alkyl to be substituted by sulfo, sulfato, hydroxyl, carboxyl or phenyl, and of cyclohexylamino, phenylamino and naphthylamino, it being possible for the phenyl or naphthyl to be substituted in each case by $C_1$-$C_4$alkyl, $C_1$-$C_4$alkoxy, amino, $C_2$-$C_4$alkanoylamino, carboxyl, sulfo or halogen, and of N-$C_1$-$C_4$alkyl-N-phenylamino, the alkyl and phenyl being unsubstituted or substituted as set out above, or is a reactive radical of the formula

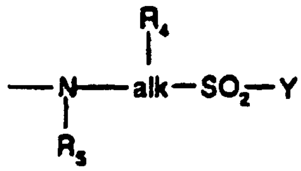 (3a)

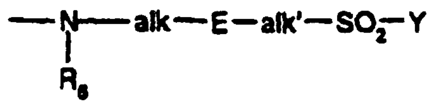 (3b)

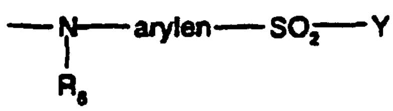 (3c)

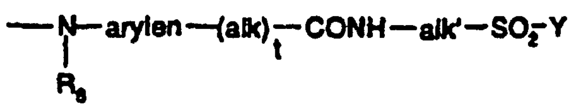 (3d)

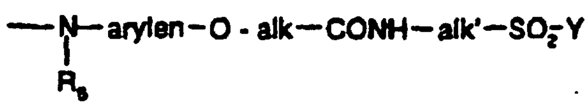 (3e)

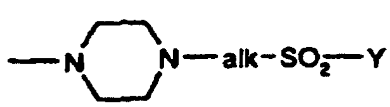 (3f)

or

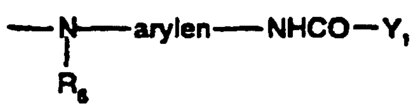 (3g)

$R_4$ is hydrogen, hydroxyl, sulfo, sulfato, carboxyl, cyano, halogen, $C_1$-$C_4$alkoxycarbonyl, carbamoyl or a group $-SO_2-Y$,

$R_5$ is hydrogen, $C_1$-$C_4$alkyl which is unsubstituted or substituted by hydroxyl, sulfo, sulfato, carboxyl or cyano, or a radical

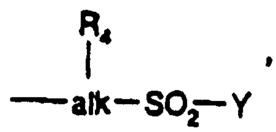

in which $R_4$ is as defined above,
$R_6$ is hydrogen or $C_1$-$C_4$alkyl,
alk and alk' independently of one another are each $C_1$-$C_6$alkylene,
arylene is a phenylene or naphthylene radical which is unsubstituted or substituted by sulfo, carboxyl, hydroxyl, $C_1$-$C_4$alkyl, $C_1$-$C_4$alkoxy or halogen,
Y is vinyl or a radical $-CH_2-CH_2-U$ and U is a leaving group,
$Y_1$ is a group $-CHZ-CH_2Z$ or $-CZ=CH_2$ in which Z is chlorine or bromine,
E is a radical -O- or $-NR_6-$, in which, $R_6$ is as defined above, and
t is the number 0 or 1,
and in which the compounds of the formulae (1) and (2) each contain at least one sulfo group.

**2.** A dye mixture according to claim 1, wherein
$R_1$, $R_2$ and $R_3$ independently of one another are each hydrogen or $C_1$-$C_4$alkyl which is unsubstituted or substituted by hydroxyl, and are preferably hydrogen, methyl, ethyl or hydroxyethyl.

**3.** A dye mixture according to claim 1 or 2, wherein
B is straight-chain or branched $C_2$-$C_{12}$alkylene which is unsubstituted or substituted by hydroxyl, sulfo or sulfato or interrupted by -O-, -NH- or $-N(CH_3)-$.

**4.** A dye mixture according to any one of claims 1 to 3, wherein
B is straight-chain or branched $C_2$-$C_6$alkylene which is unsubstituted and uninterrupted or substituted by hydroxyl or interrupted by -O-.

**5.** A dye mixture according to any one of claims 1 to 4, wherein
B is straight-chain or branched $C_2$-$C_6$alkylene.

**6.** A dye mixture according to any one of claims 1 to 5, wherein
X and $X_1$ independently of one another are each chlorine or fluorine.

**7.** A dye mixture according to any one of claims 1 to 6, wherein
V is hydroxyl, $C_1$-$C_4$alkoxy, morpholino or amino; N-$C_1$-$C_4$alkylamino or N,N-di-$C_1$-$C_4$alkylamino which is unsubstituted or substituted in the alkyl moiety by sulfo, sulfato, hydroxyl, carboxyl or phenyl, or is cyclohexylamino; phenylamino or naphthylamino which is unsubstituted or substituted in the phenyl or naphthyl moiety by $C_1$-$C_4$alkyl, $C_1$-$C_4$alkoxy, amino, $C_2$-$C_4$alkanoylamino, carboxyl, sulfo or halogen, or is N-$C_1$-$C_4$alkyl-N-phenylamino which is unsubstituted or substituted in the alkyl moiety by sulfo, sulfato, hydroxyl, carboxyl or phenyl and/or in the phenyl moiety by $C_1$-$C_4$alkyl, $C_1$-$C_4$alkoxy, amino, $C_2$-$C_4$alkanoylamino, carboxyl, sulfo or halogen, or is a reactive radical of the formula

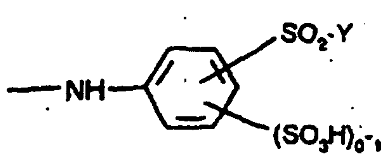

(3c")

or

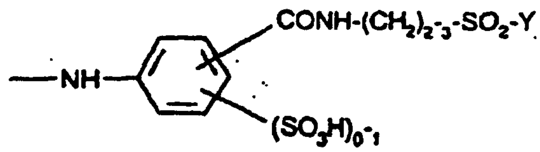

(3d')

in which Y is as defined in claim 1.

**8.** A dye mixture according to any one of claims 1 to 7, wherein
V is amino, N-$C_1$-$C_2$alkylamino which is unsubstituted or substituted by hydroxyl, sulfo or sulfato, phenylamino which is substituted by 1 or 2 identical or different substituents selected from the group consisting of sulfo, methyl and methoxy, 2-naphthylamino which is substituted by 1 to 3 sulfo groups, or a fibre-reactive radical of the formula (3c') or (3d') indicated in claim 7, in which Y is vinyl or β-sulfatoethyl.

**9.** A dye mixture according to any one of claims to 8, wherein
D is a chromophore radical of the formula

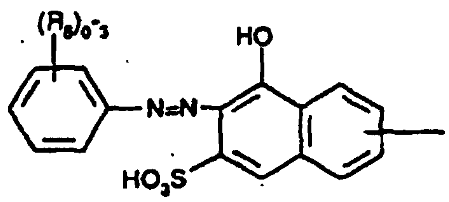

(8a),

in which $(R_8)_{0-3}$ is 0 to 3 identical or different substituents selected from the group consisting of $C_1$-$C_4$alkyl, $C_1$-$C_4$alkoxy, halogen, carboxyl and sulfo,

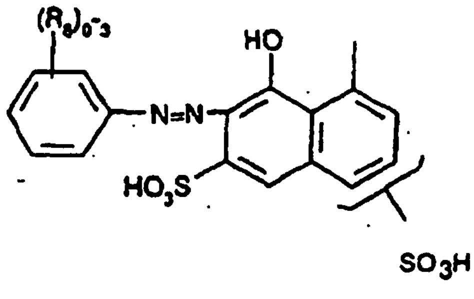

(8b),

in which $(R_8)_{0-3}$ is as defined above,

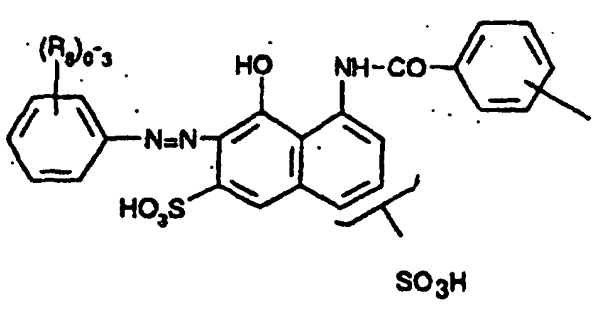

(8c),

in which $(R_8)_{0-3}$ is as defined above,

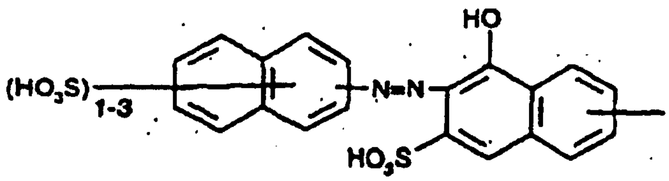

(8d),

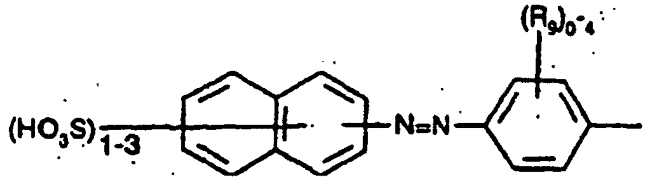

(8e),

in which

$(R_9)_{0-4}$ is 0 to 4 identical or different substituents selected from the group consisting of halogen, nitro, cyano, trifluoromethyl, sulfamoyl, carbamoyl, $C_1$-$C_4$-alkyl, $C_1$-$C_4$alkoxy, amino, acetylamino, ureido, hydroxyl, carboxyl, sulfomethyl and sulfo,

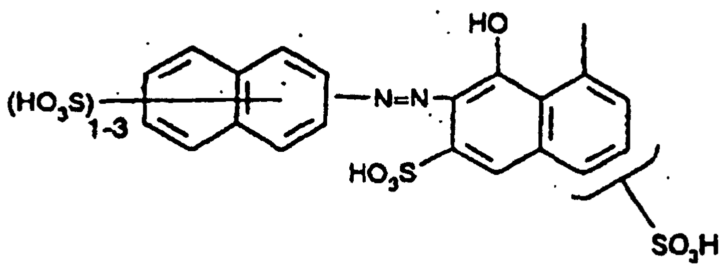

(8f),

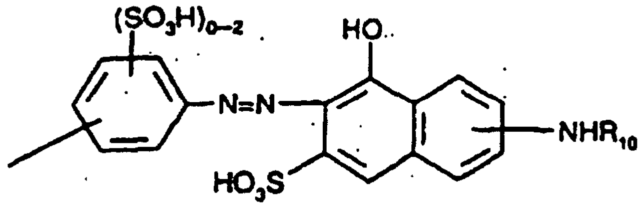

(8g),

in which

$R_{10}$ is $C_1$-$C_4$alkanoyl, benzoyl or a halotriazinyl radical of the formula

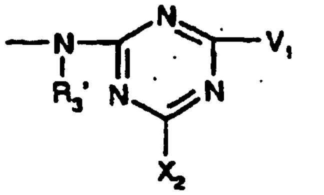

(5g)

$V_1$ independently is as defined for V in claim 1,
$X_2$ independently is as defined for X in claim 1 and
$R_3$' independently is as defined for $R_3$ in claim 1,

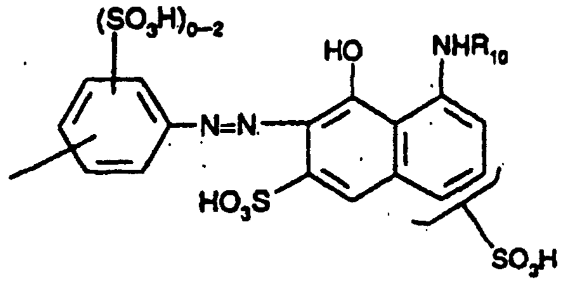

(8h),

in which
$R_{10}$ is $C_1$-$C_4$alkanoyl, benzoyl or a halotriazinyl radical of the formula (5g) indicated above,

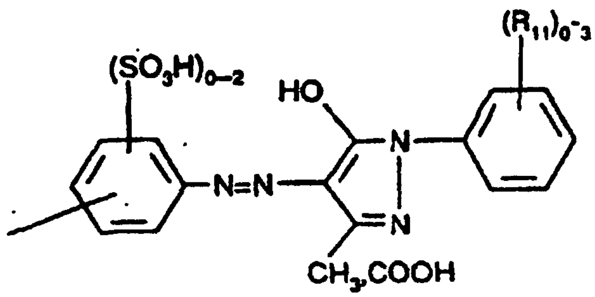

(8i),

in which $(R_{11})_{0-3}$ is 0 to 3 identical or different substituents selected from the group consisting of $C_1$-$C_4$alkyl, $C_1$-$C_4$alkoxy, halogen, carboxyl and sulfo,

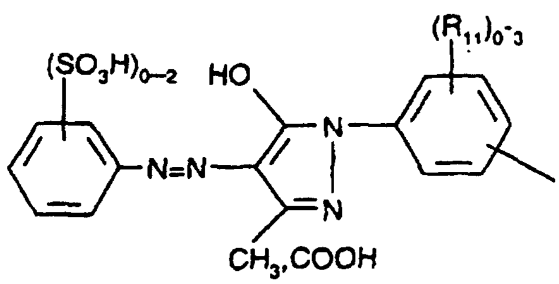

(8j),

in which $(R_{11})_{0-3}$ is as defined above,

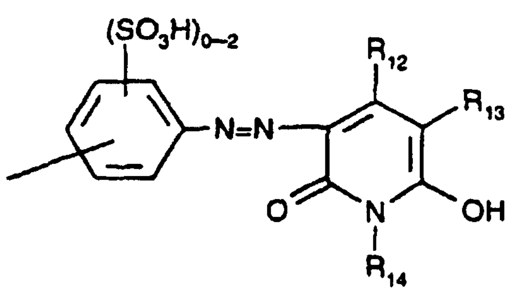

(8k),

in which $R_{12}$ and $R_{14}$ independently of one another are hydrogen, $C_1$-$C_4$alkyl or phenyl, and $R_{13}$ is hydrogen, cyano, carbamoyl or sulfomethyl,

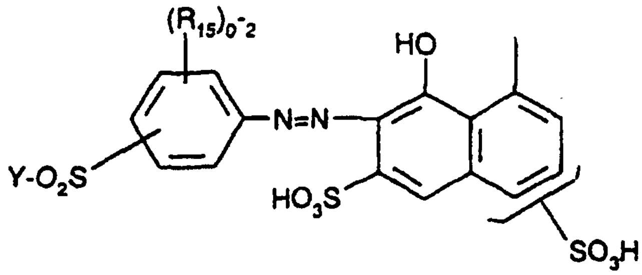

(8l),

in which $(R_{15})_{0-2}$ is 0 to 2 identical or different substituents selected from the group consisting of $C_1$-$C_4$alkyl, $C_1$-$C_4$alkoxy, halogen, carboxyl and sulfo; and Y is as defined in claim 1,

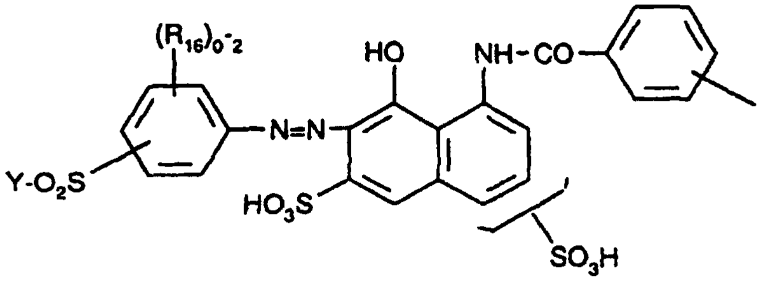

(8m),

in which $(R_{16})_{0-2}$ is 0 to 2 identical or different substituents selected from the group consisting of $C_1$-$C_4$alkyl, $C_1$-$C_4$alkoxy, halogen, carboxyl and sulfo; and Y is as defined in claim 1,

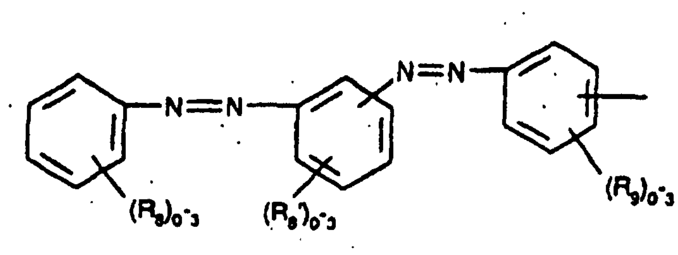

(8n)

or

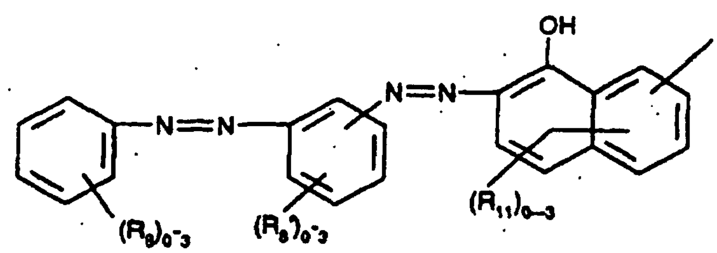

(8o)

or

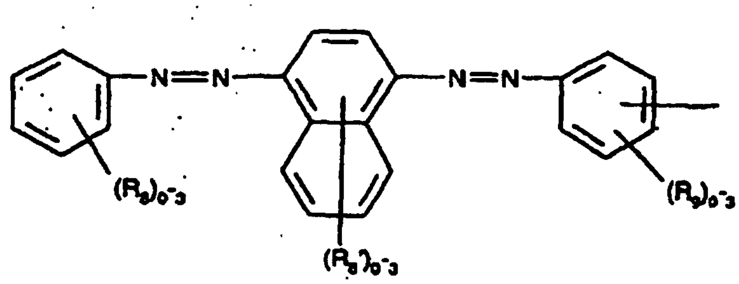

(8p)

or

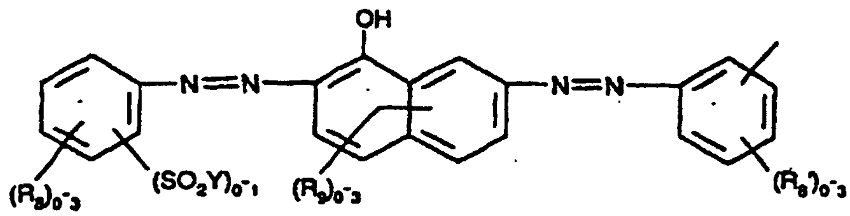

(8q),

in which $(R_8)_{0-3}$, $(R_9)_{0-3}$ and Y are each as defined above and $(R_8')_{0-3}$, is 0 to 3 identical or different substituents selected from the group consisting of $C_1$-$C_4$alkyl, $C_1$-$C_4$alkoxy, halogen, carboxyl, sulfo, $C_1$-$C_4$hydroxyalkoxy and $C_1$-$C_4$sulfatoalkoxy,

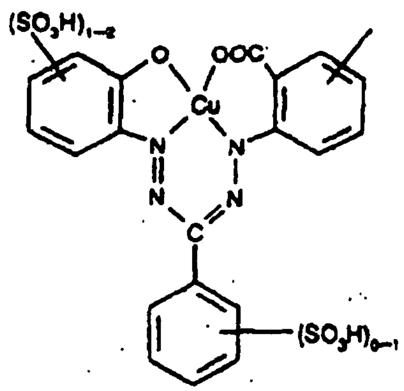

(8r)

or

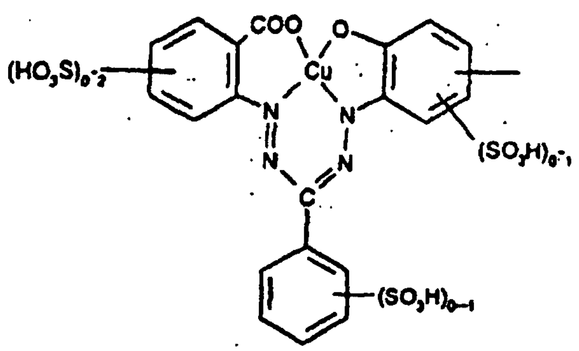

(8s),

in which the benzene nuclei contain no further substituents or are further substituted by $C_1$-$C_4$alkyl, $C_1$-$C_4$alkoxy, $C_1$-$C_4$alkylsulfonyl, halogen or carboxyl,

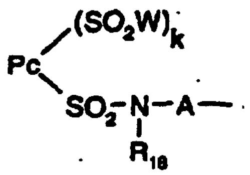

(9),

in which Pc is the radical of a metal phthalocyanine, in particular the radical of a copper phthalocyanine or nickel phthalocyanine; W is -OH and/or $-NR_{17}R_{17}'$; $R_{17}$ and $R_{17}'$ independently of one another are hydrogen or $C_1$-$C_4$alkyl which is unsubstituted or substituted by hydroxyl or sulfo; $R_{18}$ is hydrogen or $C_1$-$C_4$alkyl; A is a phenylene radical which is unsubstituted or substituted by $C_1$-$C_4$alkyl, halogen, carboxyl or sulfo, or is a $C_2$-$C_6$aklylene radical; and k is 1 to 3,

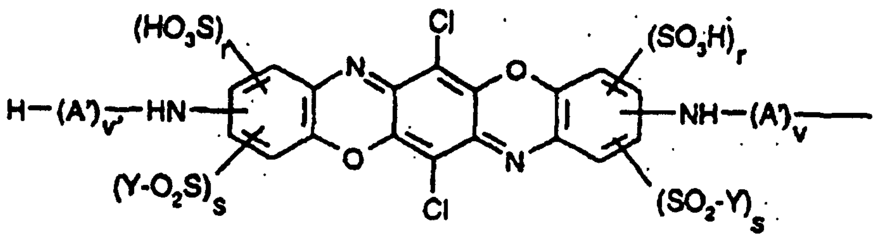

(10),

in which A' is a phenylene radical which is unsubstituted or substituted by $C_1$-$C_4$alkyl, halogen, carboxyl or sulfo, or is a $C_2$-$C_6$alkylene radical, r, s, v and v' independently of one another are each the number 0 or 1 and Y is as defined above, or

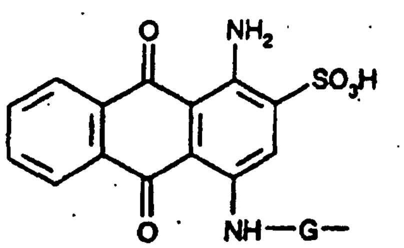

(11),

in which G is a phenylene radical which is unsubstituted or substituted by $C_1$-$C_4$alkyl, $C_1$-$C_4$alkoxy, halogen, carboxyl or sulfo or is a cyclohexylene, phenylenemethylene or $C_2$-$C_6$alkylene radical.

**10.** A dye mixture according to any one of claims 1 to 9, wherein
D is a chromophore radical of the formula (8a), (8b), (8f), (8g), (8h), (8k), (8l), (8n), (8o), (8p), (8q), (8r), (8s) or (11) indicated in claim 9.

**11.** A dye mixture according to claim 1, comprising in each case at least one compound of the formulae (1) and (2) in which D is a chromophore radical of the formula (8a) to (8s), (9), (10) or (11) indicated in claim 9, B is straight-chain or branched $C_2$-$C_{12}$alkylene which is unsubstituted or substituted by hydroxyl, sulfo or sulfato or uninterrupted or interrupted by -O-, -NH- or $-N(CH_3)-$,
$R_1$, $R_2$ and $R_3$ independently of one another are each hydrogen or $C_1$-$C_4$alkyl which is unsubstituted or substituted by hydroxyl,
X and $X_1$, independently of one another are each fluorine or chlorine and
V is hydroxyl, $C_1$-$C_4$alkoxy, morpholino, amino; N-$C_1$-$C_4$alkylamino or N,N-di-$C_1$-$C_4$alkylamino, which is unsubstituted or substituted in the alkyl moiety by sulfo, sulfato, hydroxyl, carboxyl or phenyl, or is cyclohexylamino; phenylamino or naphthylamino which is unsubstituted or substituted in the phenyl or napthyl moiety by $C_1$-$C_4$alkyl,

$C_1$-$C_4$alkoxy, amino, $C_2$-$C_4$alkanoylamino, carboxyl, sulfo or halogen, or is N-$C_1$-$C_4$alkyl-N-phenylamino which is unsubstituted or substituted in the alkyl moiety by sulfo, sulfato, hydroxyl, carboxyl or phenyl and/or substituted in the phenyl moiety by $C_1$-$C_4$alkyl, $C_1$-$C_4$alkoxy, amino, $C_2$-$C_4$alkanoylamino, carboxyl, sulfo or halogen, or is a reactive radical of the formula (3c') or (3d') indicated in claim 7.

**12.** A dye mixture according to claim 1, comprising in each case at least one compound of the formulae (1) and (2) in a weight ratio of 10:90 to 90:10, in which
D is a chromophore radical of the formula (8a), (8b), (8f), (8g), (8h), (8k), (8l), (8n), (8o), (8p), (8q), (8r), (8s) or (11) indicated in claim 9,
B is straight-chain or branched $C_2$-$C_6$alkylene,
$R_1$, $R_2$ and $R_3$ independently of one another are each hydrogen, methyl, ethyl or hydroxyethyl,
X and $X_1$ independently of one another are each fluorine or chlorine and
V is amino, N-$C_1$-$C_2$alkylamino which is unsubstituted or substituted by hydroxyl, sulfo or sulfato, phenylamino which is substituted by 1 or 2 identical or different substituents selected from the group consisting of sulfo, methyl and methoxy, 2-naphthylamino which is substituted by 1 to 3 sulfo groups, or is a fibre-reactive radical of the formula (3c') or (3d') indicated in claim 7.

**13.** A process for the preparation of a dye mixture according to claim 1, which comprises first reacting 1 molar equivalent of a compound of the formula

$$D\text{-}NH\text{-}R_1 \quad (12)$$

with about 1 molar equivalent of a halotriazine of the formula

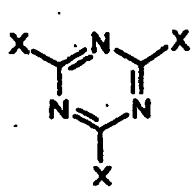

(15a)

and 0.5 to 1 molar equivalent of a diamine of the formula

$$R_2\text{-}HN\text{-}B\text{-}NH\text{-}R_3 \quad (13)$$

to give a mixture comprising a compound of the formula (1) indicated in claim 1 and a compound of the formula

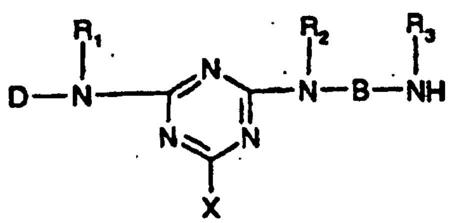

(16)

and reacting the compound of the formula (16) contained in the mixture with the reaction product of the compounds of the formulae

$$V\text{ - }H \quad (14)$$

and

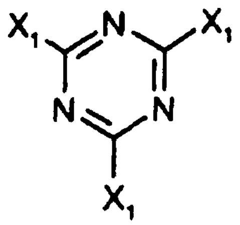

(15b),

B, D, $R_1$, $R_2$, $R_3$, V, X and $X_1$ each being as defined in claim 1.

**14.** The use of a dye mixture according to any one of claims 1 to 12 for dyeing or printing fibre materials containing hydroxyl groups or nitrogen.

**Revendications**

**1.** Mélanges de colorants contenant au moins un composé de formule

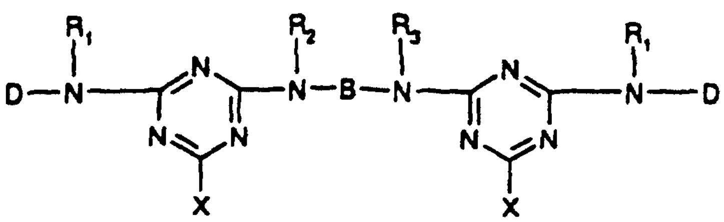

(1)

où

D représente le reste d'un chromophore monoazoïque, polyazoïque, azoïque à complexe métallifère, anthraquinone, phtalocyanine, formazane ou dioxazine,

$R_1$, $R_2$ et $R_3$ représentent chacun, indépendamment l'un de l'autre, des atomes d'hydrogène ou des groupes alkyle en $C_1$-$C_6$ non substitué ou substitué par des substituants hydroxy, sulfo, sulfato, carboxy, cyano, halogène, (alkoxy en $C_1$-$C_4$)carbonyle ou carbamoyle,

X représente des atomes de fluor, de chlore, de brome, des groupes 3-carboxypyridin-1-yle ou 3-carbamoylpyridin-1-yle,

et B représente un élément de pontage aliphatique, cycloaliphatique, aromatique ou araliphatique,

et au moins un composé de formule

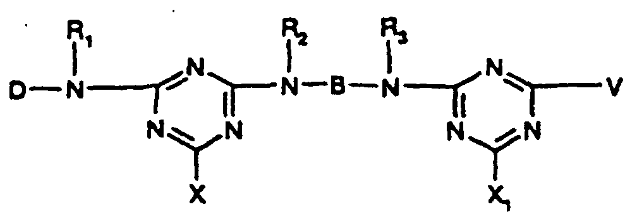

(2)

où B, D, $R_1$, $R_2$, $R_3$ et X possèdent les significations données ci-dessus, et

les restes D dans les composés de formules (1) et (2) sont identiques,

$X_1$ possède, indépendamment, la signification de X,

V représente un reste non réactif pris dans le groupe comprenant des restes hydroxy, alkoxy en $C_1$-$C_4$, phénoxy, (alkyl en $C_1$-$C_4$)thio, morpholino, amino, N-(alkyl en $C_1$-$C_4$)amino ou N,N-di-(alkyl en $C_1$-$C_4$)amino le fragment alkyle pouvant chaque fois être substitué par des substituants sulfo, sulfato, hydroxy, carboxy

ou phényle, cyclohexylamino, phénylamino ou naphtylamino, le fragments phényle ou naphtyle pouvant chacun

être substitué par des substituants alkyle en $C_1$-$C_4$, alkoxy en $C_1$-$C_4$, amino, (alcanoyl en $C_2$-$C_4$)amino, carboxy, sulfo ou halogène, ou N-(alkyl en $C_1$-$C_4$)-N-phénylamino, les fragments alkyle et phényle pouvant éventuellement être substitués comme indiqué ci-dessus, ou
représente un reste réactif de formule

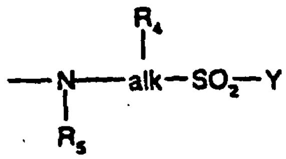 (3a)

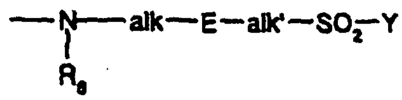 (3b)

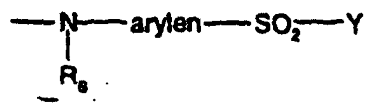 (3c)

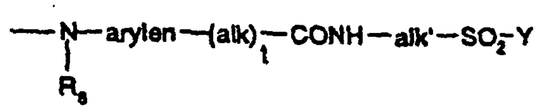 (3d)

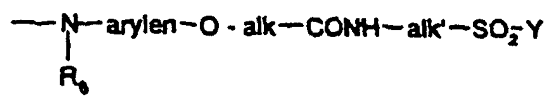 (3e)

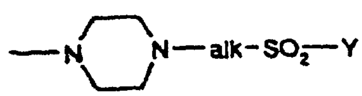 (3f)

ou

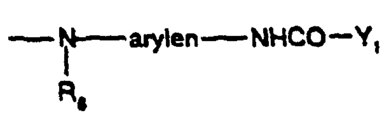 (3g)

$R_4$ représente un atome d'hydrogène, des groupes hydroxy, sulfo, sulfato, carboxy, cyano, halogène, (alkoxy en $C_1$-$C_4$)carbonyle, carbamoyle ou un groupe -$SO_2$-Y,

$R_5$ représente un atome d'hydrogène, un groupe alkyle en $C_1$-$C_4$ éventuellement substitué par des substituants hydroxy, sulfo, sulfato, carboxy ou cyano ou un reste

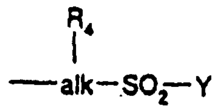

,

où $R_4$ possède la signification donnée auparavant,
$R_6$ représente un atome d'hydrogène ou un groupe alkyle en $C_1$-$C_4$,
alk et alk' représentent chacun, indépendamment l'un de l'autre, un groupe alkylène en $C_1$-$C_6$,
arylen représente un reste phénylène ou naphtylène non substitué ou substitué par des substituants sulfo; carboxy, hydroxy, alkyle en $C_1$-$C_4$, alkoxy en $C_1$-$C_4$ ou halogène,
Y représente un groupe vinyle ou un reste $-CH_2-CH_2-U$ et
U représente un groupe partant,
$Y_1$ représente un groupe $-CHZ-CH_2Z$ ou $-CZ=CH_2$, où Z représente des groupes chloro ou bromo,
E représente un reste -O- ou $-NR_6-$, où $R_6$ possède la signification donnée ci-dessus, et
t vaut O ou 1, et où les composés de formules (1) et (2) présentent chacun au moins un groupe sulfo.

2. Mélanges de colorants selon la revendication 1, **caractérisé en ce que** $R_1$, $R_2$ et $R_3$ représente chacun, indépendamment l'un de l'autre, des atomes d'hydrogène ou un groupe alkyle en $C_1$-$C_4$ non substitué ou substitué par un substituant hydroxy et de préférence un atome d'hydrogène, des groupes méthyle, éthyle ou hydroxyéthyle.

3. Mélanges de colorants selon la revendication 1 ou 2 **caractérisés en ce que** B représente un groupe alkylène en $C_2$-$C_{12}$ linéaire ou ramifié et qui est éventuellement substitué par un substituant hydroxy, sulfo ou sulfato ou interrompu par un groupe -O-, -NH- ou $-N(CH_3)-$.

4. Mélanges de colorants selon l'une des revendications 1 à 3 **caractérisés en ce que** B représente un groupe alkylène en $C_2$-$C_6$ linéaire ou ramifié, qui est non substitué et non interrompu ou substitué par un substituant hydroxy ou interrompu par un groupe -O-.

5. Mélanges de colorants selon l'une des revendications 1 à 4 **caractérisés en ce que** B représente un groupe alkylène en $C_2$-$C_6$ linéaire ou ramifié.

6. Mélanges de colorants selon l'une des revendications 1 à 5 **caractérisés en ce que** X et $X_1$ représentent chacun, indépendamment l'un de l'autre, un atome de fluor ou de chlore.

7. Mélanges de colorants selon l'une des revendications 1 à 6 **caractérisés en ce que** V représente des restes hydroxy, alkoxy en $C_1$-$C_4$, morpholino, amino ; N-(alkyl en $C_1$-$C_4$)amino ou N,N-di(alkyl en $C_1$-$C_4$)amino non substitué ou substitué dans le fragment alkyle par des substituants sulfo, sulfato, -hydroxy, carboxy ou phényle, cyclohexylamino ; phénylamino ou naphtylamino non substitué ou substitué dans le fragment phényle ou naphtyle par des substituants alkyle en $C_1$-$C_4$, alkoxy en $C_1$-$C_4$, amino, (alcanoyl en $C_2$-$C_4$)amino, carboxy, sulfo ou halogène, ou N-(alkyl en $C_1$-$C_4$)-N-phénylamino non substitué ou substitué dans le fragment alkyle par des substituants sulfo, sulfato, hydroxy, carboxy ou phényle et/ou dans le fragment phényle par des substituants alkyle en $C_1$-$C_4$, alkoxy en $C_1$-$C_4$, amino, (alcanoyl en $C_2$-$C_4$)amino, carboxy, sulfo ou halogène, ou un reste réactif de formule

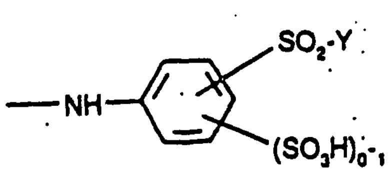

(3c')

ou

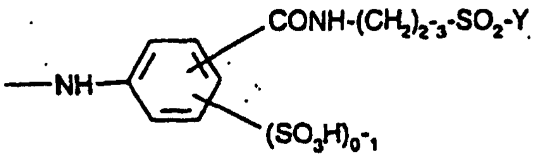

(3d')

où Y possède la signification donnée à la revendication 1.

**8.** Mélanges de colorants selon l'une des revendications 1 à 7 **caractérisés en ce que** V représente des groupes amino, N-(alkyl en $C_1$-$C_2$)amino non substitué ou substitué par des substituants hydroxy, sulfo ou sulfato, phénylamino substitué par 1 ou 2 substituants identiques ou différents pris dans le groupe des substituants sulfo, méthyle et méthoxy, 2-naphtylamino substitué par 1 à 3 groupes sulfo, ou un reste réactif sur la fibre de formules (3c') ou (3d') donnée à la revendicatgion 7, où Y représenté des groupes vinyle ou β-sulfatoéthyle.

**9.** Mélanges de colorants selon l'une des revendications 1 à 8 **caractérisés en ce que** D représente un reste chromophore de formule

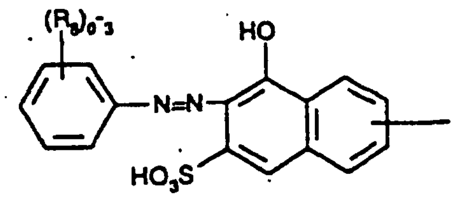

(8a)

où $(R_8)_{0-3}$ représente 0 à 3 substituants identiques ou différents pris dans le groupe comprenant alkyle en $C_1$-$C_4$, alkoxy en $C_1$-$C_4$, halogène, carboxy et sulfo,

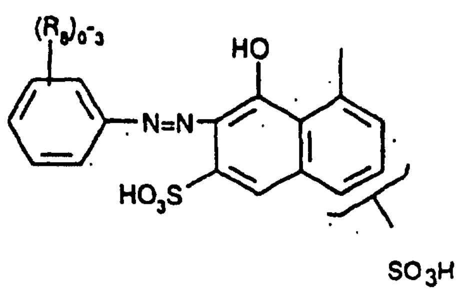

(8b),

où $(R_8)_{0-3}$ possède la signification donnée auparavant,

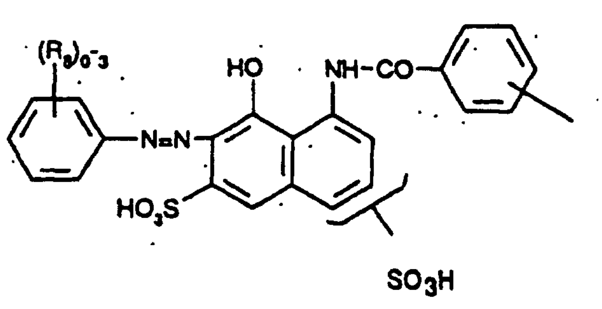

(8c),

où $(R_8)_{0-3}$ possède la signification donnée auparavant,

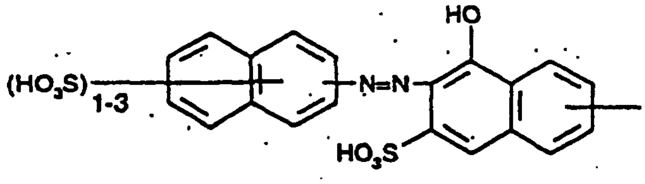

(8d),

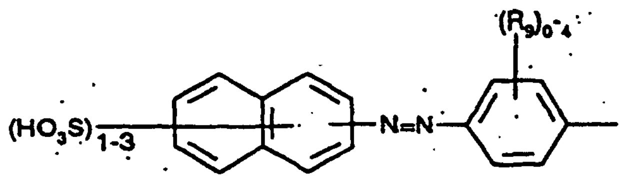

(8e),

où $(R_9)_{0-4}$ représente 0 à 4 substituants identiques ou différents pris dans le groupe comprenant halogène, nitro, cyano, trifluorométhyle, sulfamoyle, carbamoyle, alkyle en $C_1$-$C_4$, alkoxy en $C_1$-$C_4$, amino, acétylamino, uréido, hydroxy, carboxy, sulfométhyle et sulfo,

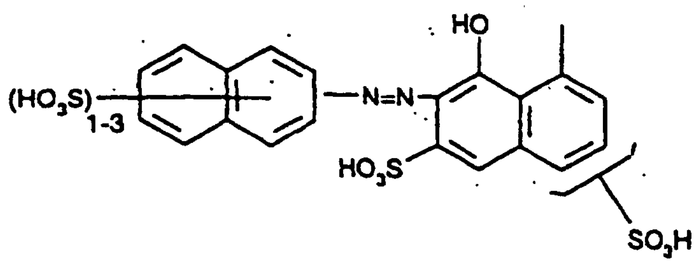

(8f),

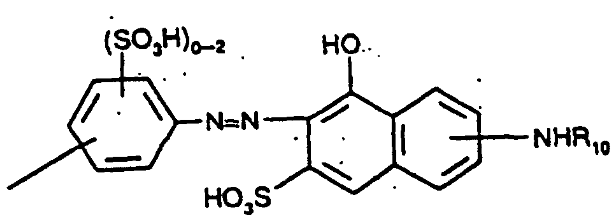

(8g),

où $R_{10}$ représente des groupes alcanoyle en $C_1$-$C_4$, benzoyle ou un reste halogénotriazinyle de formule (5g)

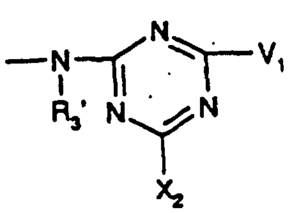

(5g)

$V_1$ possède, indépendamment, la signification donnée pour V à la revendication 1, $X_2$ possède, indépendamment, la signification donnée pour X à la revendication 1, et $R'_3$ possède, indépendamment, la signification donnée pour $R_3$ à la revendication 1,

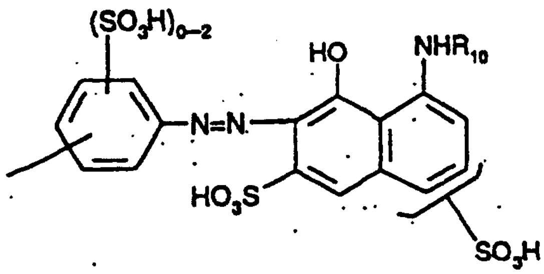

(8h),

où $R_{10}$ représente des groupes alcanoyle en $C_1$-$C_4$, benzoyle ou halogénotriazinyle de formule (5g) donnée ci-dessus,

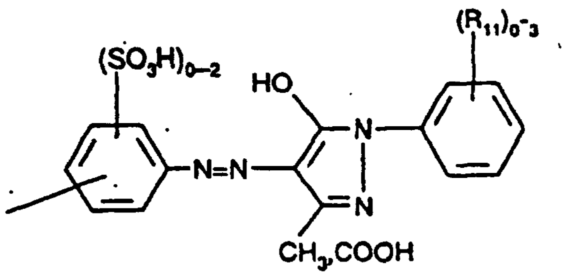

(8i),

où $(R_{11})_{0-3}$ représente 0 à 3 substituants identiques ou différents pris dans le groupe comprenant alkyle en $C_1$-$C_4$, alkoxy en $C_1$-$C_4$, halogène, carboxy et sulfo,

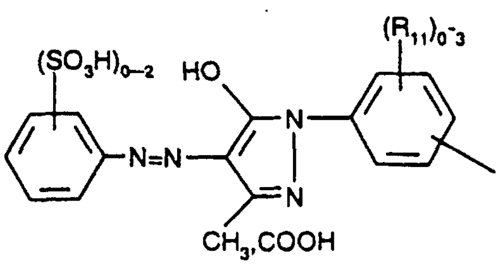

(8j),

où $(R_8)_{0-3}$ possède la signification donnée ci-dessus,

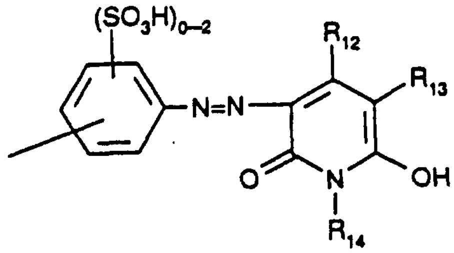

(8k),

où $R_{12}$ et $R_{14}$ représentent, indépendamment l'un de l'autre, des atomes d'hydrogène, des groupes alkyle en $C_1$-$C_4$ ou phényle, et $R_{13}$ représente un atome d'hydrogène, des groupes cyano, carbamoyle ou sulfométhyle,

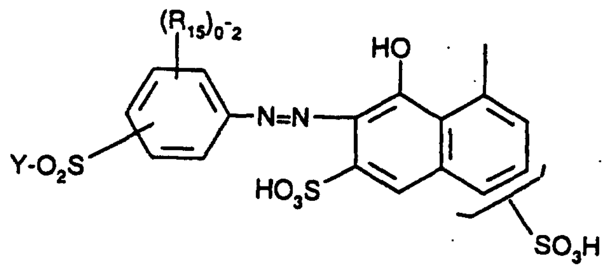

(8l)

où $(R_{15})_{0-2}$ représente 0 à 2 substituants identiques ou différents pris dans le groupe comprenant alkyle en $C_1$-$C_4$, alkoxy en $C_1$-$C_4$, halogène, carboxy et sulfo ; et Y possède la signification donnée à la revendication 1,

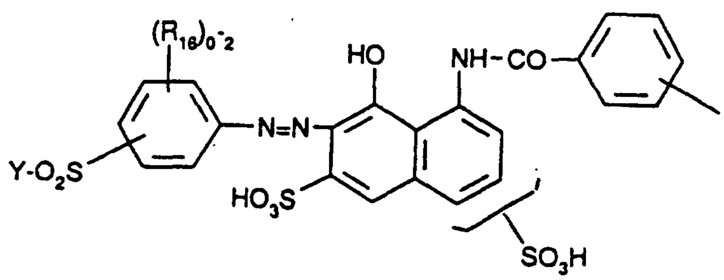

(8m),

où $(R_{16})_{0-2}$ représente 0 à 2 substituants identiques ou différents pris dans le groupe comprenant alkyle en $C_1$-$C_4$, alkoxy en $C_1$-$C_4$, halogène, carboxy et sulfo ; Y possède la signification donnée à la revendication 1,

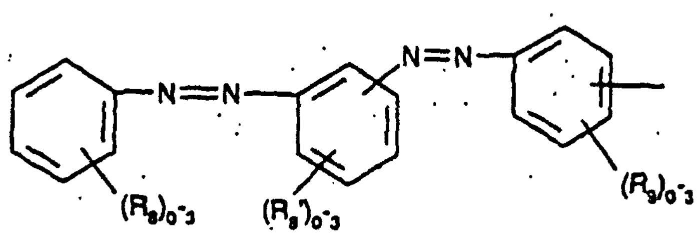

(8n)

ou

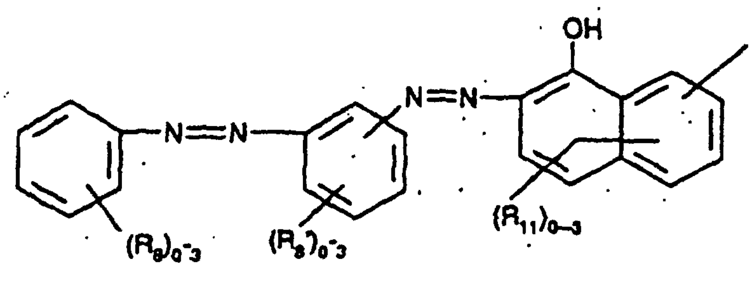

(8d)

ou

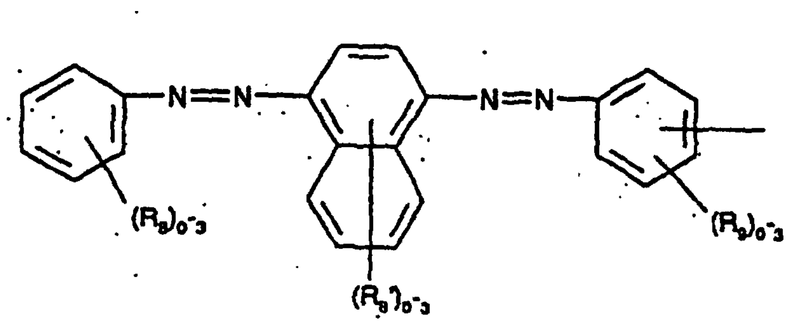

(8p)

ou

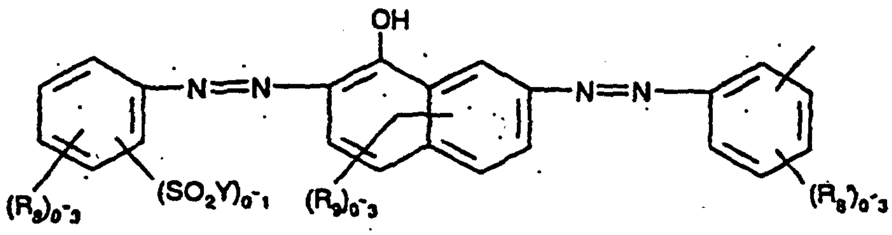

(8q),

où $(R_8)_{0-3}$, $(R_9)_{0-3}$ et Y possèdent la signification donnée cièdessus et $(R_8')_{0-3}$ représente 0 à 3 substituants identiques ou différents pris dans le groupe comprenant alkyle en $C_1$-$C_4$, alkoxy en $C_1$-$C_4$, halogène, carboxy, sulfo, hydroxyalkoxy en $C_1$-$C_4$ et sulfoalkoxy,

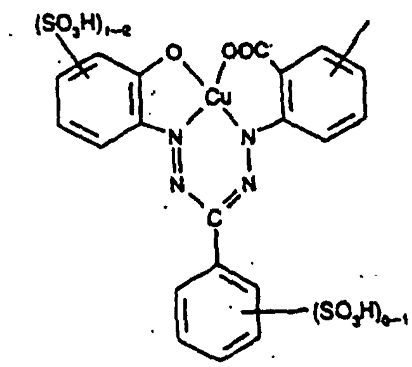

(8r)

ou

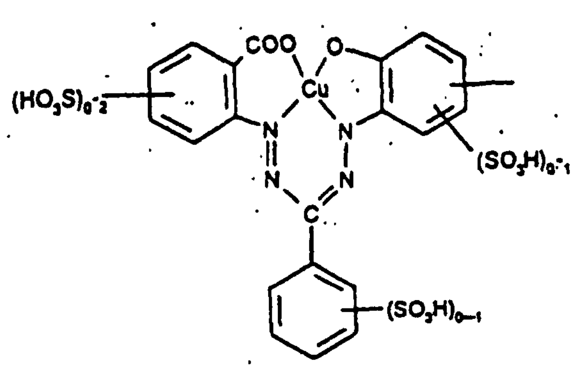

(8s),

où les noyaux benzéniques ne portent pas d'autres substituants ou sont substitués davantage par des substituants alkyle en $C_1$-$C_4$, alkoxy en $C_1$-$C_4$, (alkyl en $C_1$-$C_4$)sulfonyle, halogène ou carboxy,

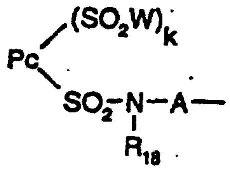

(9),

où Pc représente le reste d'une phtalocyanine métallique, en particulier le reste d'une phtalocyanine de cuivre ou de nickel ; W représente un groupe -OH et/ou -$NR_{17}R_{17}$' ; $R_{17}$ et $R_{17}$' représentent, indépendamment l'un de l'autre, des atomes d'hydrogène ou des groupes alkyle en $C_1$-$C_4$ éventuellement substitué par un substituant hydroxy ou sulfo ; $R_{18}$ représente un atome d'hdrogène ou un groupe alkyle en $C_1$-$C_4$ ; A représente un reste alkylène en $C_2$-$C_6$ ou un reste phénylène éventuellement substitué par des substituants alkyle en $C_1$-$C_4$, halogène, carboxy ou sulfo ; et k va de 1 à 3,

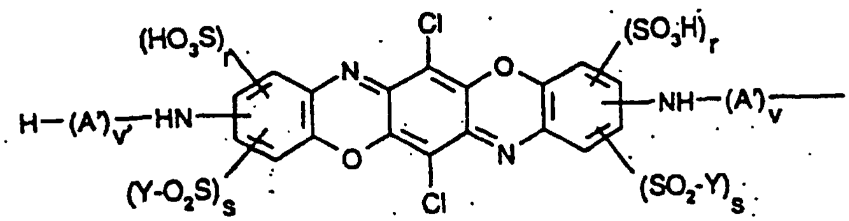

(10),

où A' représente un reste alkylène en $C_2$-$C_6$ ou un reste phénylène éventuellement substitué par des substituants alkyle en $C_1$-$C_4$, halogène, carboxy ou sulfo, r, s, v et v' valent chacun, indépendamment les uns des autres, 0 ou 1 et Y possède la signification donnée auparavant ou

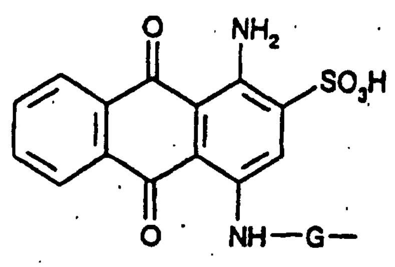

(11),

où G représente un reste phénylène non substitué ou substitué par des substituants alkyle en $C_1$-$C_4$, alkoxy en $C_1$-$C_4$, halogène, carboxy ou sulfo ou un reste cyclohexylène, phénylèneméthylène ou alkylène en $C_2$-$C_6$.

**10.** Mélanges de colorants selon l'une des revendications 1 à 9 **caractérisés en ce que** D représente un reste chromophore de formules (8a), (8b), (8f), (8g), (8h), (8k), (8l), (8n), (8o), (8p) ou (8q), (8r) ou (8s) ou 11, données à la revendication 9.

**11.** Mélanges de colorants selon la revendication 1 contenant chacun au moins un composé de formules (1) et (2), où D représente un reste chromophore de formules (8a) à (8s), (9), (10) ou 11 données à la revendication 9, B représente un groupe alkylène en $C_2$-$C_{12}$ linéaire ou ramifié, qui est éventuellement substitué par des substituants hydroxy, sulfo ou sulfato ou interrompu par des groupes -O-, -NH- ou -$N(CH_3)$-, $R_1$, $R_2$ et $R_3$ représentent chacun, indépendamment les uns des autres, des atomes d'hydrogène ou des groupes alkyle en $C_1$-$C_4$ non substitué ou substitué par un substituant hydroxy, X et $X_1$ représentent chacun, indépendamment l'un de l'autre, un atome de fluor ou de chlore, et V représente des groupes hydroxy, alkoxy en $C_1$-$C_4$, morpholino, amino ; cyclohexylamino, N-(alkyl en $C_1$-$C_4$)-amino ou N,N-di(alkyl en $C_1$-$C_4$)amino non substitué ou substitué dans le fragment alkyle par des substituants sulfo, sulfato, hydroxy, carboxy ou phényle ; phénylamino ou naphtylamino non substitué ou substitué dans le fragment phényle ou naphtyle par des substituants alkyle en $C_1$-$C_4$, alkoxy en $C_1$-$C_4$, amino, (alcanoyl en $C_2$-$C_4$)amino, carboxy, sulfo ou halogène, N-(alkyl en $C_1$-$C_4$)-N-phénylamino non substitué ou substitué dans le fragment alkyle par des substituants sulfo, sulfato, hydroxy, carboxy ou phényle et/ou dans le fragment phényle par substituants alkyle en $C_1$-$C_4$, alkoxy en $C_1$-$C_4$, amino, (alcanoyl en $C_2$-$C_4$)amino, carboxy, sulfo ou halogène, ou un reste réactif sur la fibre de formule (3c') ou (3d') donnée à la revendication 7.

**12.** Mélanges de colorants selon la revendication 1 contenant chacun au moins un composé de formules (1) et (2) dans un rapport pondéral de 10:90 à 90:10, où D représente un reste chromophore de formules (8a), (8b), (8f), (8g), (8h), (8k), (8l), (8n), (8o), (8p), (8q), (8r), (8s) ou 11 données à la revendication 9, B représente un groupe alkylène en $C_2$-$C_6$ linéaire ou ramifié, $R_1$, $R_2$ et $R_3$ représentent chacun, indépendamment les uns des autres, des atomes d'hydrogène, des groupes méthyle, éthyle ou hydroxyéthyle, X et $X_1$ représentent chacun, indépendamment l'un de l'autre, un atome de fluor ou de chlore, et V représente des groupes amino, N-(alkyl en $C_1$-$C_2$)amino non substitué ou substitué par des substituants hydroxy, sulfo ou sulfato ; phénylamino substitué par 1 ou 2 substituants identiques ou différents pris dans le groupe comprenant des substituants sulfo, méthyle ou méthoxy, 2-naphtylamino substitué par 1 à 3 groupes sulfo, ou un reste réactif sur la fibre de formules (3c') ou (3d') données à la revendication 7.

**13.** Procédé pour la préparation des mélanges de colorants selon la revendication 1, **caractérisé en ce qu'**on fait réagir 1 équivalent molaire d'un composé de formule

$$D\text{-}NH\text{-}R_1 \qquad (12)$$

d'abord sur 1 équivalent molaire d'une halotriazine de formule

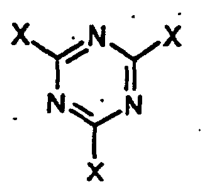

(15a)

et sur 0,5 à 1 équivalent molaire d'une diamine de formule

$$R_2\text{-}HN\text{-}B\text{-}NH\text{-}R_3 \qquad (13)$$

pour obtenir un mélange contenant un composé de formule (1) donnée à la revendication 1 et un composé de formule

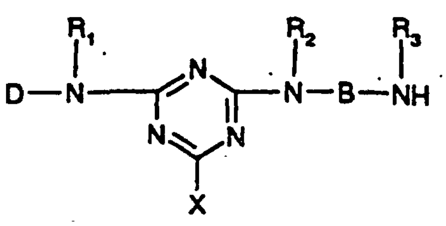

(16)

et on fait réagir le composé de formule (16) contenu dans le mélange sur le produit de réaction des composés de formules

$$V\text{-}H \qquad (14)$$

et

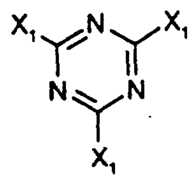

(15b)

B, D, $R_1$, $R_2$, $R_3$, V, X et $X_1$ possèdent chacun la signification donnée à la revendication 1.

**14.** Utilisation des mélanges de colorants selon l'une des revendication 1 à 12 pour la teinture ou l'impression de matières fibreuses présentant des groupes hydroxyle ou des atomes d'azote.